(19) Europäisches Patentamt
European Patent Office
Office européen des brevets

(11) EP 3 663 379 A1

(12) **EUROPEAN PATENT APPLICATION**
published in accordance with Art. 153(4) EPC

(43) Date of publication:
**10.06.2020 Bulletin 2020/24**

(21) Application number: **18842162.2**

(22) Date of filing: **18.07.2018**

(51) Int Cl.:
***C09K 19/54*** *(2006.01)* ***C09K 19/12*** *(2006.01)*
***C09K 19/14*** *(2006.01)* ***C09K 19/18*** *(2006.01)*
***C09K 19/20*** *(2006.01)* ***C09K 19/30*** *(2006.01)*
***C09K 19/34*** *(2006.01)* ***C09K 19/38*** *(2006.01)*
***G02F 1/13*** *(2006.01)*

(86) International application number:
**PCT/JP2018/026864**

(87) International publication number:
**WO 2019/026621 (07.02.2019 Gazette 2019/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2017 JP 2017149908**

(71) Applicants:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **MATSUDA Naoko**
  **Ichihara-shi**
  **Chiba 290-8551 (JP)**
- **MATSUMURA Yoshinari**
  **Ichihara-shi**
  **Chiba 290-8551 (JP)**
- **TANABE Mayumi**
  **Ichihara-shi**
  **Chiba 290-8551 (JP)**

(74) Representative: **Becker & Kurig Partnerschaft Patentanwälte PartmbB**
**Bavariastrasse 7**
**80336 München (DE)**

(54) **LIQUID CRYSTAL COMPOSITE AND LIQUID CRYSTAL LIGHT CONTROL ELEMENT**

(57) Provided are: a liquid crystal composite that is suitable for light control and contains a liquid crystal composition that satisfies at least one of characteristics such as a high upper limit temperature, low lower limit temperature, low viscosity, large optical anisotropy, and large positive dielectric anisotropy or exhibits an adequate balance among at least two of these characteristics; and a liquid crystal light control element containing the liquid crystal composite. This liquid crystal composite contains a liquid crystal composition containing a polymer and a specific compound having large positive dielectric anisotropy. The liquid crystal composite may further contain a specific compound having a high upper limit temperature or low lower limit temperature, and a specific compound having large negative dielectric anisotropy.

EP 3 663 379 A1

## Description

### Technical Field

The invention mainly relates to a liquid crystal dimming device. More specifically, the invention relates to a liquid crystal dimming device having a liquid crystal composite in which a polymer is combined with a liquid crystal composition.

### Background Art

A liquid crystal dimming device is configured according to a method using light scattering, or the like. Such a device is used for a building material such as a window glass and a partition of a room, an on-vehicle component and so forth. A soft substrate such as a plastic film is used in the devices in addition to a hard substrate such as a glass substrate. In a liquid crystal composition interposed between the substrates, arrangement of liquid crystal molecules changes by adjusting applied voltage. Light that transmits through the liquid crystal composition can be controlled by the method, and therefore the liquid crystal dimming device is widely used in a display, an optical shutter, a dimming window (see Patent literature No. 1), a smart window (see Patent literature No. 2) and so forth.

One example of the liquid crystal dimming device includes a light-scattering mode polymer-dispersed type device. The liquid crystal composition is dispersed in a polymer. The device has the following features: preparation of device is easy; control of a film thickness is easy over a wide area, and therefore a device having a large screen can be produced; no polarizing plate is required, and therefore a bright display can be provided; and light scattering is utilized, and therefore a viewing angle is wide. The device has such excellent properties, and therefore an application of the device to the dimming glass, a projection-type display, a large-area display and so forth is expected.

Another example includes a polymer-network type liquid crystal dimming device. In this type of device, the liquid crystal composition is present in a three-dimensional network of the polymer. The device is different from the polymer-dispersed type in that the composition is continuous. The device of this type also has the same features as in the polymer-dispersed type. A liquid crystal dimming device in which the polymer-network type and the polymer-dispersed type are mixed is also present.

The liquid crystal composition having suitable characteristics is used in the liquid crystal dimming device. The device having good characteristics can be obtained by improving characteristics of the composition. Table 1 below summarizes a relationship in two characteristics. The characteristics of the composition will be further described on the basis of the device. A temperature range of a nematic phase relates to the temperature range in which the device can be used. A preferred maximum temperature of the nematic phase is about 90°C or higher and a preferred minimum temperature of the nematic phase is about -20°C or lower. Viscosity of the composition relates to a response time of the device. A short response time is preferred for controlling transmittance of light. A shorter response time even by one millisecond is desirable. Accordingly, small viscosity in the composition is preferred. Small viscosity at low temperature is further preferred. An elastic constant of the composition relates to the response time of the device. In order to achieve a short response time in the device, a large elastic constant in the composition is further preferred.

**Table 1. Characteristics of liquid crystal composition and liquid crystal dimming device**

| No. | Characteristics of liquid crystal composition | Characteristics of liquid crystal dimming device |
|---|---|---|
| 1 | Wide temperature range of a nematic phase | Wide usable temperature range |
| 2 | Small viscosity | Short response time |
| 3 | Large optical anisotropy | Large haze rate |
| 4 | Large positive or negative dielectric anisotropy | Low threshold voltage and small electric power consumption |
| 5 | Large specific resistance | Large voltage holding ratio |
| 6 | High stability to light and heat | Long service life |
| 7 | Large elastic constant | Short response time |

Optical anisotropy of the composition relates to a haze rate of the liquid crystal dimming device. The haze rate is a proportion of diffused light to total transmitted light. A large haze rate is preferred when light is blocked. Large optical anisotropy is preferred for the large haze rate. Large dielectric anisotropy in the composition contributes to low threshold voltage or small electric power consumption in the device. Accordingly, the large dielectric anisotropy is preferred. Large

specific resistance in the composition contributes to a large voltage holding ratio in the device. Accordingly, a composition having large specific resistance in an initial stage is preferred. A composition having large specific resistance even after the device has been used for a long period of time is preferred. Stability or weather resistance of the composition to light or heat relates to a service life of the device. When the stability or the weather resistance is good, the service life is long. The characteristics are desired for the device.

The liquid crystal dimming device has a normal mode and a reverse mode. In the normal mode, the device is opaque when no voltage is applied, and becomes transparent when voltage is applied. In the reverse mode, the device is transparent when no voltage is applied, and becomes opaque when voltage is applied. The normal mode device is widely used, and the device is inexpensive and has an advantage of ease of preparation.

## Citation List

### Patent Literature

Patent literature No. 1: JP H06-273725 A (1994).
Patent literature No. 2: WO 2011-96386 A.
Patent literature No. 3: JP S63-278035 A (1988).
Patent literature No. 4: JP H01-198725 A (1989).
Patent literature No. 5: JP H07-104262 A (1995).
Patent literature No. 6: JP H07-175045 A (1995).

## Summary of Invention

### Subject to be solved by the Invention

An object of the invention is to provide a liquid crystal composite that contains a liquid crystal composition satisfying at least one of characteristics such as high maximum temperature of a nematic phase, low minimum temperature of the nematic phase, small viscosity, large optical anisotropy, large positive dielectric anisotropy, large specific resistance, high stability to light, high stability to heat and a large elastic constant, and that is suitable for dimming. Another object is to provide a liquid crystal composite that contains a liquid crystal composition having a suitable balance regarding at least two of the characteristics, and that is suitable for dimming. Another object is to provide a liquid crystal dimming device having such a liquid crystal composite. Another object is to provide a liquid crystal dimming device having characteristics such as a short response time, a large voltage holding ratio, low threshold voltage, a large haze rate and a long service life.

### Means for solving the Subject

The invention relates to a liquid crystal composite that contains, as a first component, a polymer and a liquid crystal composition containing at least one compound selected from compounds represented by formula (1), a liquid crystal dimming device having the composite, and so forth:

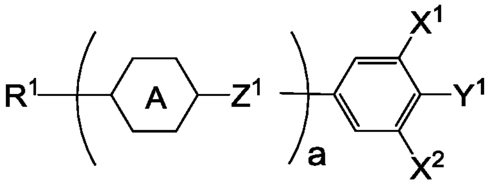

(1)

wherein, in formula (1), $R^1$ is alkyl having 1 to 12 carbons, alkoxy having 1 to 12 carbons or alkenyl having 2 to 12 carbons; ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ is a single bond, ethylene, carbonyloxy or difluoromethyleneoxy; $X^1$ and $X^2$ are independently hydrogen or fluorine; $Y^1$ is fluorine, chlorine, cyano, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; and a is 1, 2, 3 or 4.

## Effect of the Invention

An advantage of the invention is to provide a liquid crystal composite that contains a liquid crystal composition satisfying at least one of characteristics such as high maximum temperature of a nematic phase, low minimum temperature of the nematic phase, small viscosity, large optical anisotropy, large positive dielectric anisotropy, large specific resistance, high stability to light, high stability to heat and a large elastic constant, and that is suitable for dimming. Another advantage is to provide a liquid crystal composite that contains a liquid crystal composition having a suitable balance regarding at least two of the characteristics, and that is suitable for dimming. Another advantage is to provide a liquid crystal dimming device having such a liquid crystal composite. Another advantage is to provide a liquid crystal dimming device having characteristics such as a short response time, a large voltage holding ratio, low threshold voltage, a large haze rate and a long service life.

## Description of Embodiments

Terms such as "liquid crystal compound, " "polymerizable compound, " "liquid crystal composition," "polymerizable composition," "liquid crystal composite" and "liquid crystal dimming device" are used herein. "Liquid crystal compound" is a generic term for a compound having a liquid crystal phase such as a nematic phase and a smectic phase, and a compound having no liquid crystal phase but to be added to the composition for the purpose of adjusting the characteristics such as the temperature range of the nematic phase, the viscosity and the dielectric anisotropy. The compound has a six-membered ring such as 1,4-cyclohexylene and 1,4-phenylene, and has rod-like molecular structure. "Polymerizable compound" is a compound to be added for the purpose of forming a polymer in the liquid crystal composition. A liquid crystal compound having alkenyl is not polymerizable in the sense.

"Liquid crystal composition" is prepared by mixing a plurality of liquid crystal compounds. An additive such as an optically active compound, an antioxidant, an ultraviolet light absorber, a dye, an antifoaming agent and a polar compound is added to the liquid crystal composition when necessary. A proportion of the liquid crystal compound is expressed in terms of weight percent (% by weight) based on the liquid crystal composition containing no additive, even when the additive is added thereto. A proportion of the additive is expressed in terms of weight percent (% by weight) based on the liquid crystal composition containing no additive. More specifically, the proportion of the liquid crystal compound or the additive is calculated based on the total weight of the liquid crystal compound.

"Polymerizable composition" is prepared by mixing the polymerizable compound with the liquid crystal composition. More specifically, the polymerizable composition is a mixture of at least one polymerizable compound and the liquid crystal composition. An additive such as a polymerization initiator, a polymerization inhibitor and a polar compound is added to the polymerizable compound when necessary. A proportion of the polymerizable compound or the liquid crystal composition is expressed in terms of weight percent (% by weight) based on the polymerizable composition containing no additive, even when the additive is added thereto. A proportion of the additive such as the polymerization initiator, the polymerization inhibitor and the polar compound is expressed in terms of weight percent (% by weight) based on the liquid crystal composition. "Liquid crystal composite" is formed by polymerization treatment of the polymerizable composition. "Liquid crystal dimming device" is a generic term for a liquid crystal display panel and a liquid crystal display module that have the liquid crystal composite and are used for dimming.

"Maximum temperature of the nematic phase" may be occasionally abbreviated as "maximum temperature." "Minimum temperature of the nematic phase" may be occasionally abbreviated as "minimum temperature." An expression "having large specific resistance" means that a composition has large specific resistance in an initial stage, and the composition has the large specific resistance even after the device has been used for a long period of time. An expression "having a large voltage holding ratio" means that the device has a large voltage holding ratio at room temperature and also at a temperature close to the maximum temperature in an initial stage, and the device has the large voltage holding ratio at room temperature and also at a temperature close to the maximum temperature even after the device has been used for a long period of time. The characteristics of the composition or the device may be occasionally examined using an aging test. An expression "increase the dielectric anisotropy" means that a value of dielectric anisotropy positively increases in a composition having positive dielectric anisotropy, and the value of dielectric anisotropy negatively increases in a composition having negative dielectric anisotropy.

A compound represented by formula (1) may be occasionally abbreviated as "compound (1)." At least one compound selected from the compounds represented by formula (1) may be occasionally abbreviated as "compound (1)." "Compound (1)" means one compound, a mixture of two compounds or a mixture of three or more compounds represented by formula (1). A same rule applies also to any other compound represented by any other formula. An expression "at least one piece of 'A'" means that the number of 'A' is arbitrary. An expression "at least one piece of 'A' may be replaced by 'B'" means that, when the number of 'A' is 1, a position of 'A' is arbitrary, and also when the number of 'A' is 2 or more, positions thereof can be selected without restriction. A same rule applies also to an expression "at least one piece of 'A' is replaced by 'B'."

Such an expression as "at least one $-CH_2-$ may be replaced by -O-" is used herein in several cases. In the above case, $-CH_2-CH_2-CH_2-$ may be converted into $-O-CH_2-O-$ by replacement of non-adjacent $-CH_2-$ by -O-. However, a case where $-CH_2-$ adjacent to each other is replaced by -O- is excluded. The reason is that $-O-O-CH_2-$ (peroxide) is formed in the above replacement. More specifically, the expression means both "one $-CH_2-$ may be replaced by -O-" and "at least two pieces of non-adjacent $-CH_2-$ may be replaced by -O-." A same rule applies not only to replacement to -O- but also to replacement to a divalent group such as -CH=CH- and -COO-.

A symbol of terminal group $R^1$ is used in a plurality of compounds in chemical formulas of component compounds. In the compounds, two groups represented by two pieces of arbitrary $R^1$ may be identical or different. For example, in one case, $R^1$ of compound (1-1) is ethyl and $R^1$ of compound (1-2) is ethyl. In another case, $R^1$ of compound (1-1) is ethyl and $R^1$ of compound (1-2) is propyl. A same rule applies also to other symbols. In formula (1), two of ring A exists when subscript 'a' is 2. In the compound, two groups represented by two of ring A may be identical or different. A same rule applies also to two of arbitrary ring A when subscript 'a' is larger than 2. A same rule applies also to other symbols. A same rule applies also to a case where a compound has a substituent represented by an identical symbol.

Symbols such as A, B, C and D surrounded by a hexagonal shape correspond to rings such as ring A, ring B, ring C and ring D, respectively, and represent a six-membered ring, a fused ring or the like. In an expression "ring A and ring B are independently X, Y or Z," a subject is plural, and therefore "independently" is used. When the subject is "ring A," the subject is singular, and therefore "independently" is not used. When "ring A" is used in a plurality of formulas, a rule "may be identical or different" is applied to "ring A." A same rule applies also to other groups.

Then, 2-fluoro-1,4-phenylene means two divalent groups described below. In a chemical formula, fluorine may be leftward (L) or rightward (R). A same rule applies also to an asymmetrical divalent group formed by eliminating two hydrogens from a ring, such as tetrahydropyran-2,5-diyl. A same rule applies also to a divalent bonding group such as carbonyloxy (-COO- or -OCO-).

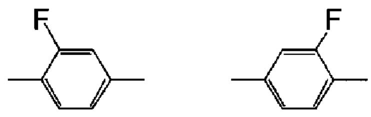

(L) (R)

Alkyl of the liquid crystal compound is straight-chain alkyl or branched-chain alkyl, and includes no cyclic alkyl. In the liquid crystal compound, the straight-chain alkyl is preferred to the branched-chain alkyl. A same rule applies also to a terminal group such as alkoxy and alkenyl. With regard to a configuration of 1,4-cyclohexylene, trans is preferred to cis for increasing the maximum temperature.

The invention includes the following items.

Item 1. A liquid crystal composite, containing, as a first component, a polymer and a liquid crystal composition containing at least one compound selected from compounds represented by formula (1) :

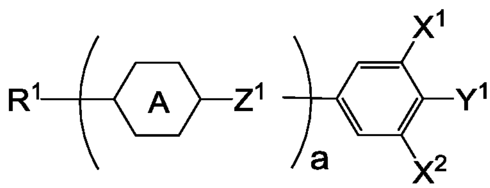

(1)

wherein, in formula (1), $R^1$ is alkyl having 1 to 12 carbons, alkoxy having 1 to 12 carbons or alkenyl having 2 to 12 carbons; ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ is a single bond, ethylene, carbonyloxy or difluoromethyleneoxy; $X^1$ and $X^2$ are independently hydrogen or fluorine; $Y^1$ is fluorine, chlorine, cyano, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; and a is 1, 2, 3 or 4.

Item 2. The liquid crystal composite according to item 1, wherein the liquid crystal composition contains, as the first component, at least one compound selected from the group of compounds represented by formula (1-1) to formula (1-47):

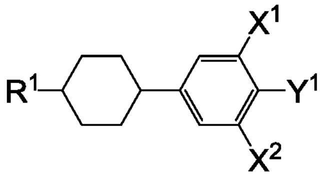

(1-1)

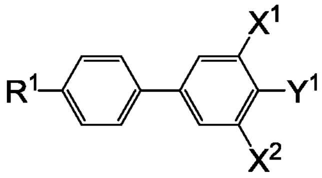

(1-2)

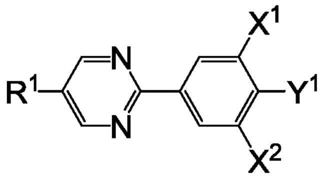

(1-3)

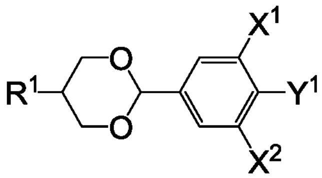

(1-4)

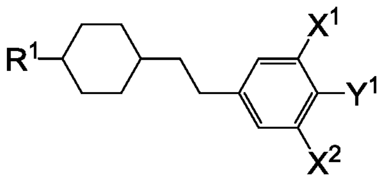

(1-5)

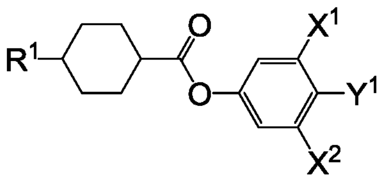

(1-6)

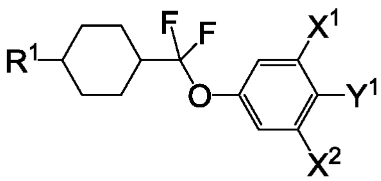

(1-7)

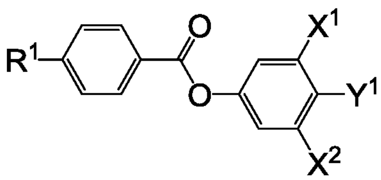

(1-8)

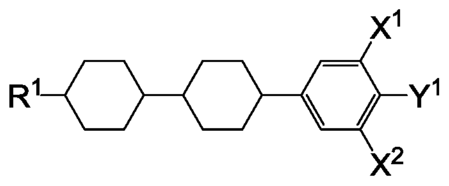

(1-9)

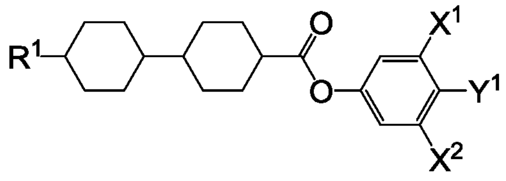

(1-10)

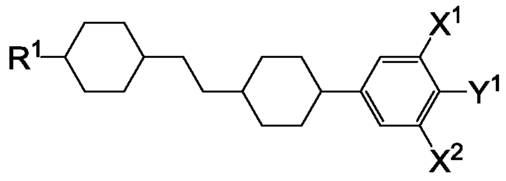

(1-11)

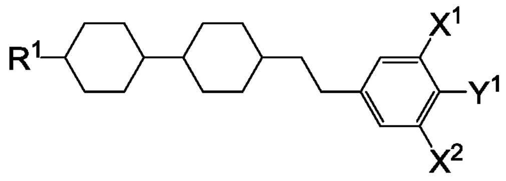

(1-12)

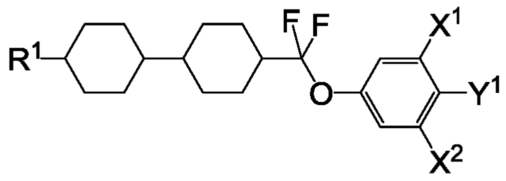

(1-13)

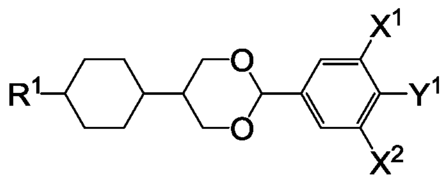

(1-14)

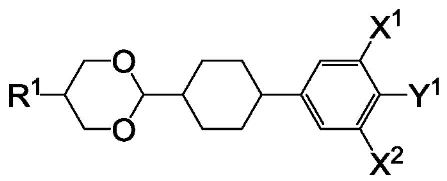

(1-15)

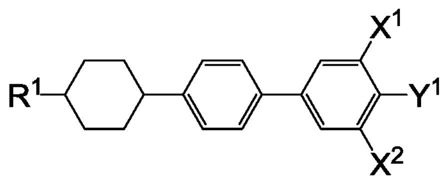

(1-16)

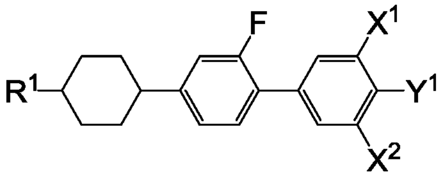

(1-17)

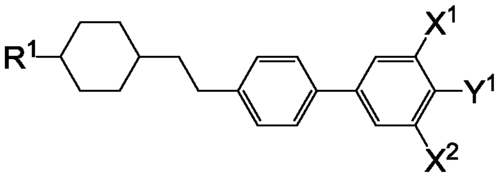

(1-18)

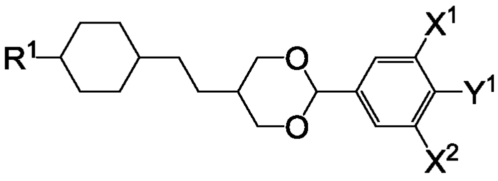

(1-19)

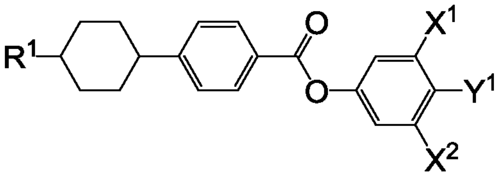

(1-20)

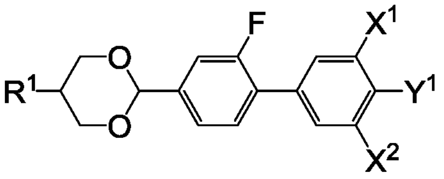

(1-21)

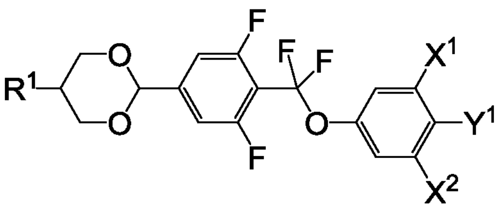

(1-22)

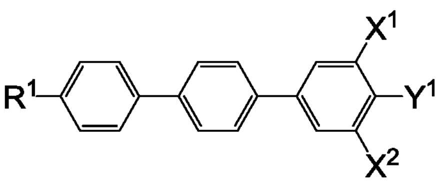

(1-23)

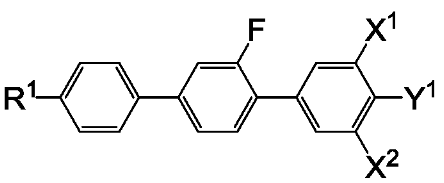

(1-24)

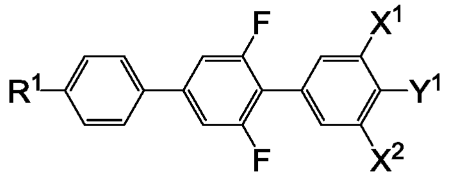

(1-25)

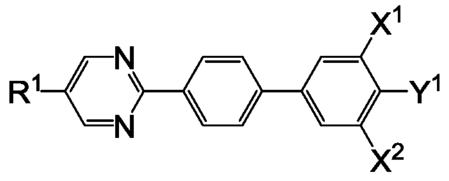

(1-26)

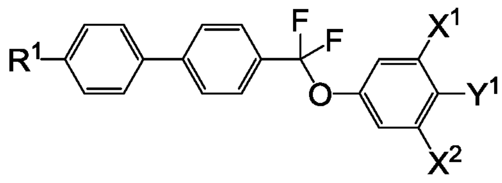

(1-27)

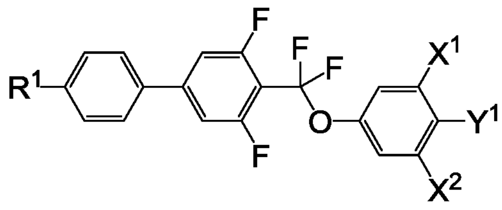

(1-28)

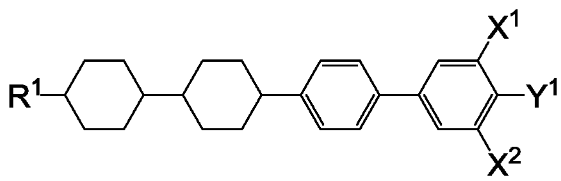

(1-29)

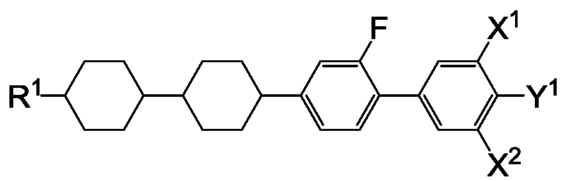

(1-30)

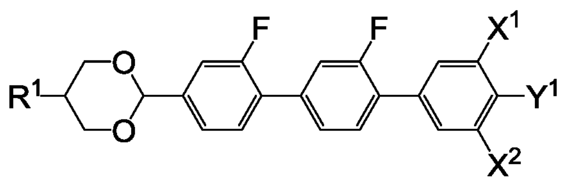

(1-31)

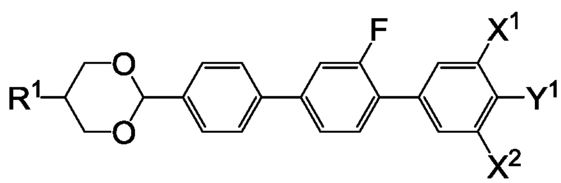

(1-32)

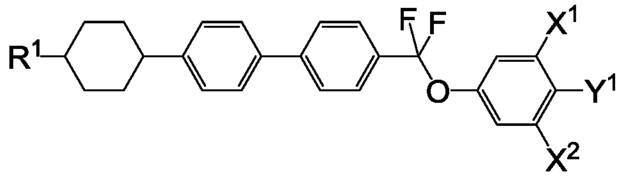

(1-33)

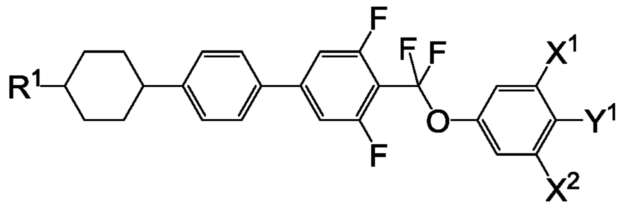

(1-34)

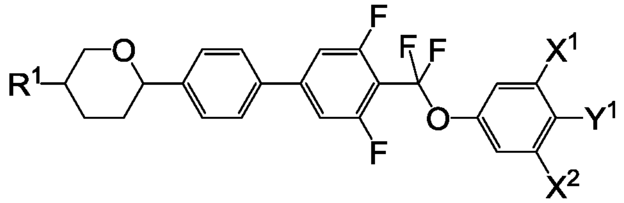

(1-35)

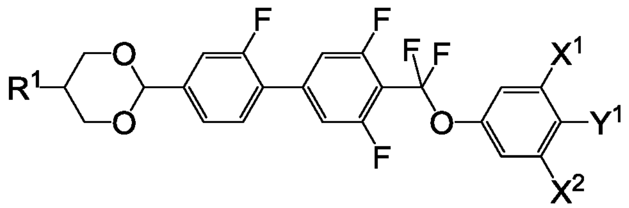

(1-36)

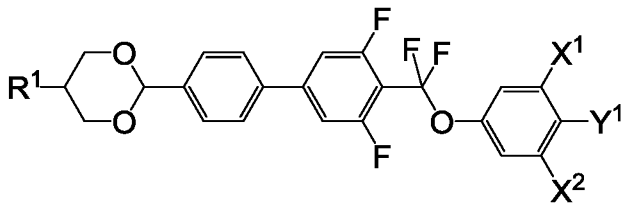

(1-37)

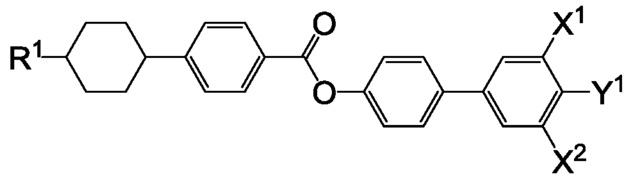

(1-38)

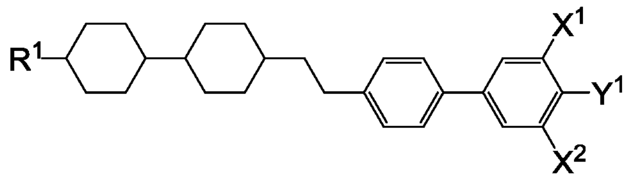

(1-39)

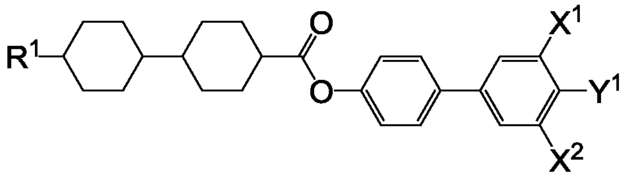

(1-40)

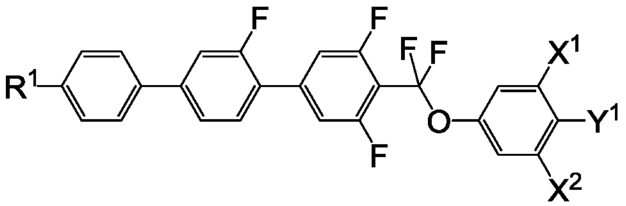

(1-41)

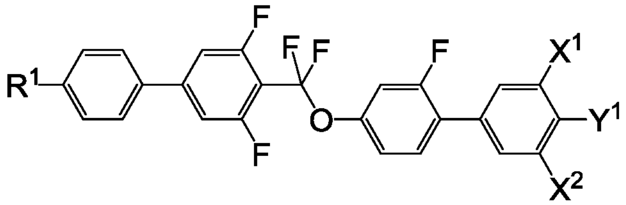

(1-42)

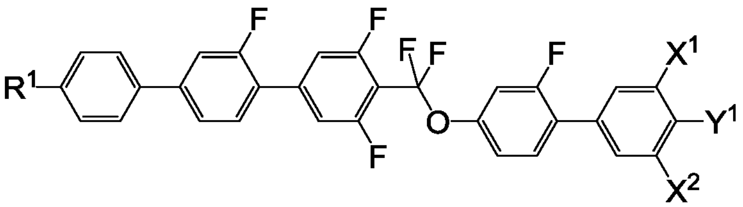

(1-43)

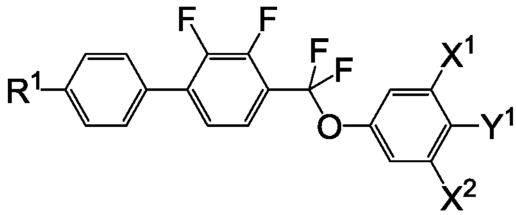

(1-44)

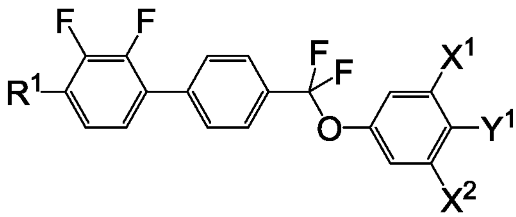

(1-45)

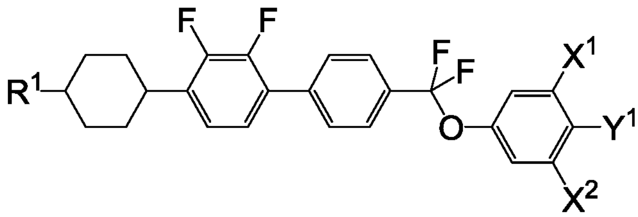

(1-46)

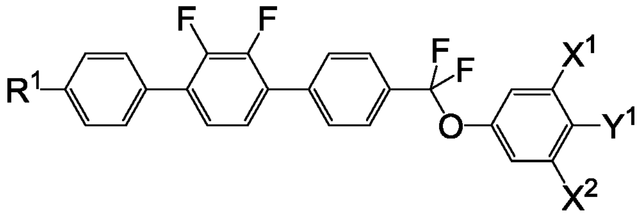

(1-47)

wherein, in formula (1-1) to formula (1-47), $R^1$ is alkyl having 1 to 12 carbons, alkoxy having 1 to 12 carbons or alkenyl having 2 to 12 carbons, and $X^1$ and $X^2$ are independently hydrogen or fluorine; and $Y^1$ is fluorine, chlorine, cyano, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine.

Item 3. The liquid crystal composite according to item 1 or 2, wherein a proportion of the first component is in the range of 5% by weight to 90% by weight based on the weight of the liquid crystal composition.

Item 4. The liquid crystal composite according to any one of items 1 to 3, wherein the liquid crystal composition contains, as a second component, at least one compound selected from compounds represented by formula (2):

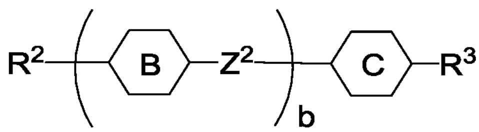

(2)

wherein, in formula (2), $R^2$ and $R^3$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; ring B and ring C are independently 1,4-cyclohexylene, 1,4-phenylene, 2-fluoro-1,4-phenylene, 2,5-difluoro-1,4-phenylene or pyrimidine-2, 5-diyl; $Z^2$ is a single bond, ethylene, ethynylene or carbonyloxy; and b is 1, 2 or 3.

Item 5. The liquid crystal composite according to any one of items 1 to 4, wherein the liquid crystal composition contains, as the second component, at least one compound selected from the group of compounds represented by formula (2-1) to formula (2-23):

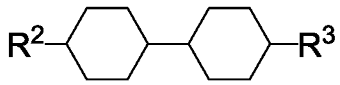

(2-1)

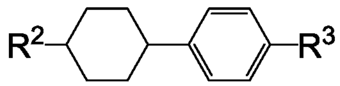

(2-2)

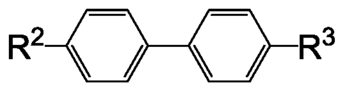

(2-3)

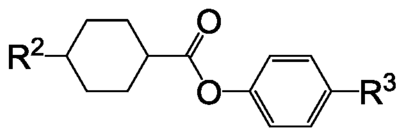

(2-4)

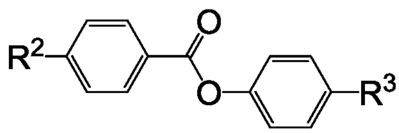

(2-5)

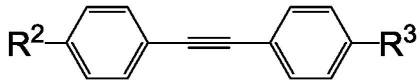 (2-6)

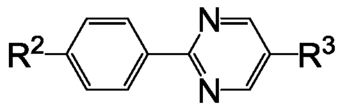 (2-7)

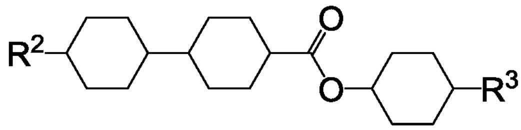 (2-8)

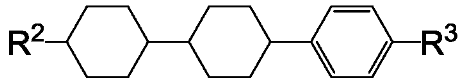 (2-9)

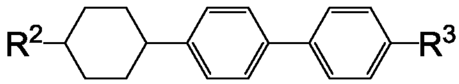 (2-10)

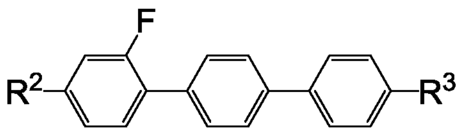 (2-11)

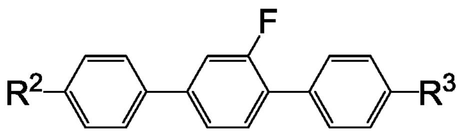 (2-12)

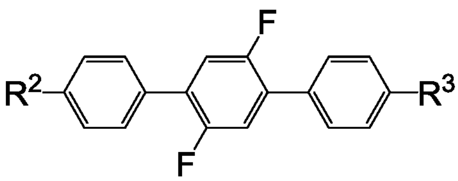 (2-13)

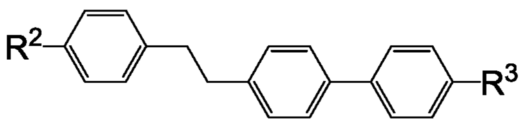 (2-14)

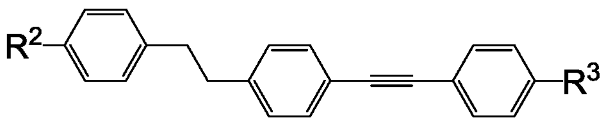 (2-15)

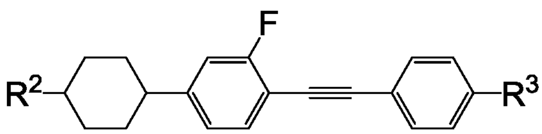 (2-16)

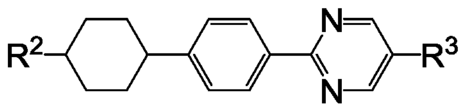

(2-17)

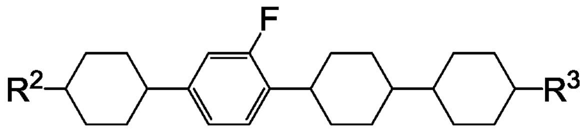

(2-18)

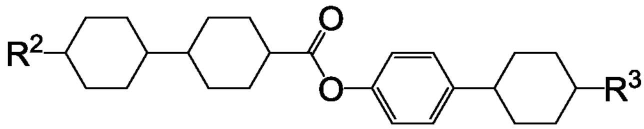

(2-19)

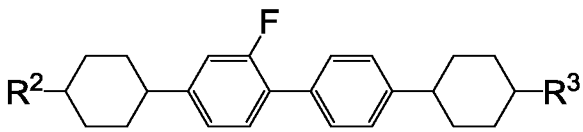

(2-20)

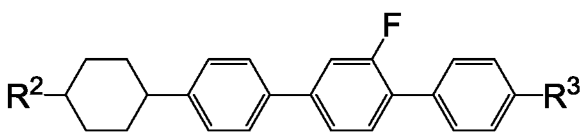

(2-21)

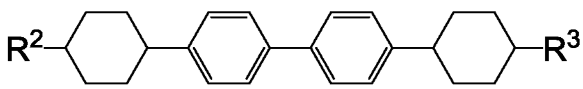

(2-22)

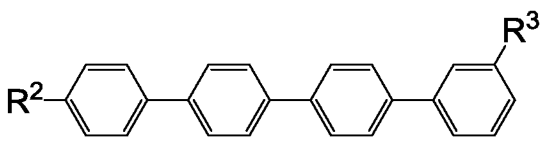

(2-23)

wherein, in formula (2-1) to formula (2-23), $R^2$ and $R^3$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine.

Item 6. The liquid crystal composite according to item 4 or 5, wherein a proportion of the second component is in the range of 5% by weight to 90% by weight based on the weight of the liquid crystal composition.

Item 7. The liquid crystal composite according to any one of items 1 to 6, wherein the liquid crystal composition contains, as a third component, at least one compound selected from compounds represented by formula (3):

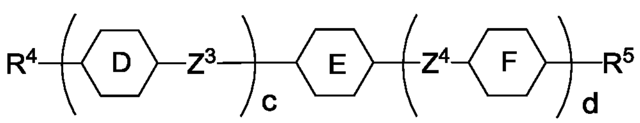

(3)

wherein, in formula (3), $R^4$ and $R^5$ are independently alkyl having 1 to 12 carbons, alkoxy having 1 to 12 carbons, alkenyl having 2 to 12 carbons or alkenyloxy having 2 to 12 carbons; ring D and ring F are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chromane-2,6-diyl or chromane-2, 6-diyl in which at least one hydrogen is replaced by fluorine or chlorine; ring E is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl; $Z^3$ and $Z^4$ are independently a single bond, ethylene, carbonyloxy or methyleneoxy; c is 1, 2 or 3, and d is 0 or 1; and a sum of c and d is 3 or less.

Item 8. The liquid crystal composite according to any one of items 1 to 7, wherein the liquid crystal composition contains, as the third component, at least one compound selected from the group of compounds represented by formula (3-1) to formula (3-22):

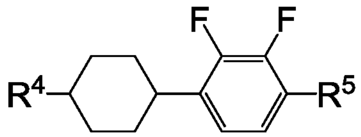

(3-1)

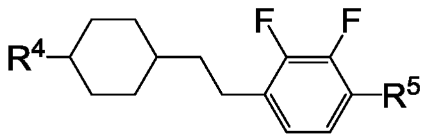

(3-2)

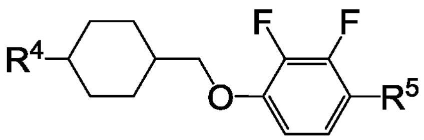

(3-3)

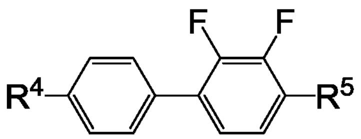

(3-4)

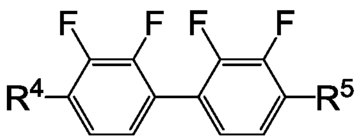

(3-5)

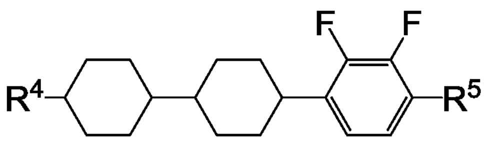

(3-6)

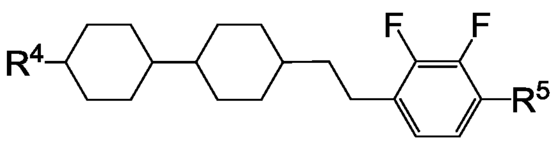

(3-7)

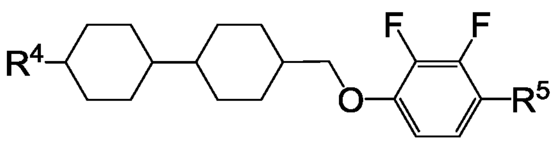

(3-8)

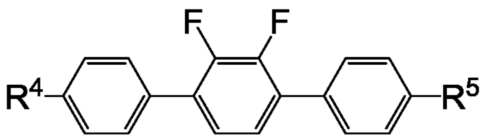

(3-9)

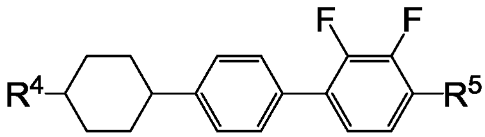

(3-10)

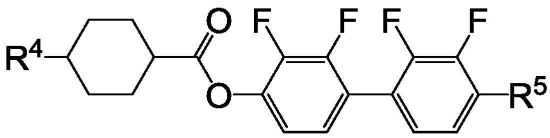

(3-11)

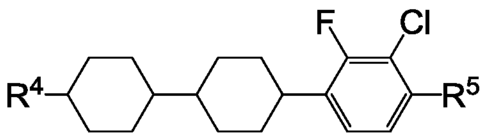

(3-12)

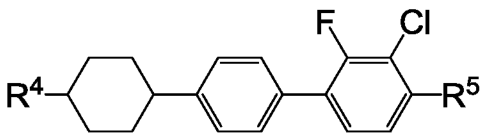

(3-13)

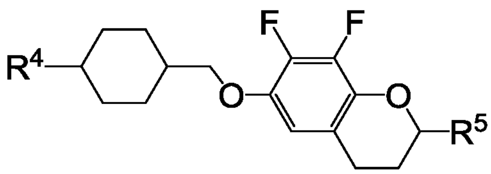

(3-14)

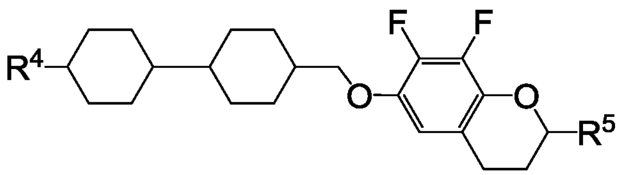

(3-15)

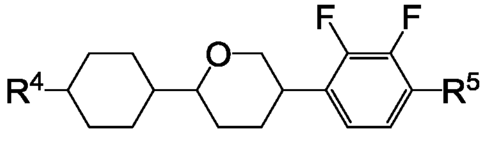

(3-16)

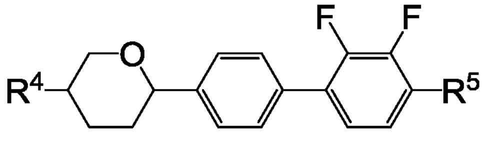

(3-17)

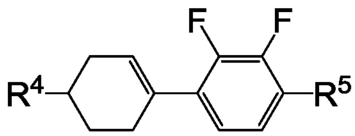

(3-18)

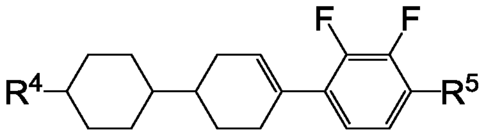

(3-19)

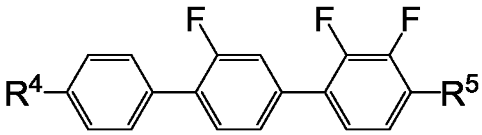

(3-20)

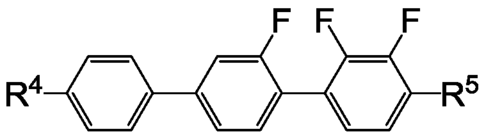

(3-21)

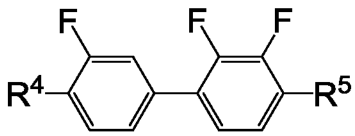

(3-22)

wherein, in formula (3-1) to formula (3-22), $R^4$ and $R^5$ are independently alkyl having 1 to 12 carbons, alkoxy having 1 to 12 carbons, alkenyl having 2 to 12 carbons or alkenyloxy having 2 to 12 carbons.

Item 9. The liquid crystal composite according to item 7 or 8, wherein a proportion of the third component is in the range of 3% by weight to 25% by weight based on the weight of the liquid crystal composition.

Item 10. The liquid crystal composite according to any one of items 1 to 9, wherein the polymer is a polymer derived from a polymerizable compound containing at least one compound selected from compounds represented by formula (4):

$$P^1\text{-}Z^5\text{-}P^2 \qquad (4)$$

wherein, in formula (4), $Z^5$ is alkylene having 1 to 20 carbons, and in the alkylene, at least one hydrogen may be replaced by alkyl having 1 to 5 carbons, fluorine, chlorine or $P^3$, at least one $-CH_2-$ may be replaced by -O-, -CO-, -COO-, -OCO-, -NH-, $-N(R^6)-$, -CH=CH- or -C≡C-, and at least one $-CH_2-$ may be replaced by a divalent group formed by eliminating two hydrogens from a carbocyclic or heterocyclic saturated aliphatic compound, a carbocyclic or heterocyclic unsaturated aliphatic compound or a carbocyclic or heterocyclic aromatic compound, and in the divalent groups, the number of carbons is 5 to 35, and at least one hydrogen may be replaced by $R^6$ or $P^3$, in which $R^6$ is alkyl having 1 to 12 carbons, and in the alkyl, at least one $-CH_2-$ may be replaced by -O-, -CO-, -COO- or -OCO-; and $P^1$, $P^2$ and $P^3$ are independently a polymerizable group.

Item 11. The liquid crystal composite according to item 10, wherein, in formula (4), $Z^5$ is alkylene having 1 to 20 carbons, and in the alkylene, at least one hydrogen may be replaced by alkyl having 1 to 5 carbons, fluorine, chlorine or $P^3$, and at least one $-CH_2-$ may be replaced by -O-, -CO-, -COO-, -OCO-, -NH-, $-N(R^6)-$, -CH=CH- or -C≡C-, and in the divalent groups, the number of carbons is 5 to 35, and at least one hydrogen may be replaced by $R^6$ or $P^3$, in which $R^6$ is alkyl having 1 to 12 carbons, and in the alkyl, at least one $-CH_2-$ may be replaced by -O-, -CO-, -COO- or -OCO-; and $P^1$, $P^2$ and $P^3$ are independently a polymerizable group.

Item 12. The liquid crystal composite according to item 10 or 11, wherein, in formula (4), $P^1$, $P^2$ and $P^3$ are independently a group selected from the group of polymerizable groups represented by formula (P-1) to formula (P-6):

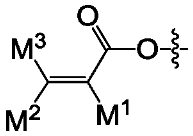 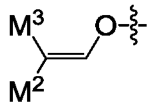 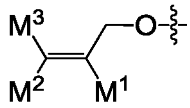 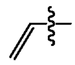 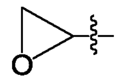 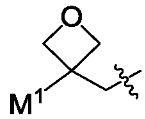

(P-1) (P-2) (P-3) (P-4) (P-5) (P-6)

wherein, in formula (P-1) to formula (P-6), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine.

Item 13. The liquid crystal composite according to any one of items 10 to 12, wherein, in formula (4), at least one of $P^1$, $P^2$ and $P^3$ is acryloyloxy or methacryloyloxy.

Item 14. The liquid crystal composite according to any one of items 1 to 9, wherein the polymer is a polymer derived from a polymerizable compound containing at least one compound selected from compounds represented by formula (5):

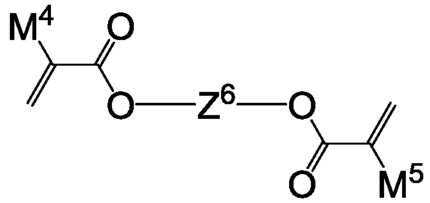

(5)

wherein, in formula (5), $M^4$ and $M^5$ are independently hydrogen or methyl; and $Z^6$ is alkylene having 21 to 80 carbons, and in the alkylene, at least one hydrogen may be replaced by alkyl having 1 to 20 carbons, fluorine or chlorine, and at least one $-CH_2-$ may be replaced by -O-, -CO-, -COO-, -OCO-, -NH-, $-N(R^6)-$, -CH=CH- or -C≡C-, in which $R^6$ is alkyl having 1 to 12 carbons, and in the alkyl, at least one $-CH_2-$ may be replaced by -O-, -CO-, -COO- or -OCO-.

Item 15. The liquid crystal composite according to any one of items 1 to 9, wherein the polymer is a polymer derived from a polymerizable compound containing at least one compound selected from compounds represented by formula (6):

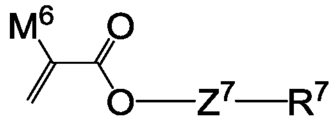

(6)

wherein, in formula (6), $M^6$ is hydrogen or methyl; $Z^7$ is a single bond or alkylene having 1 to 5 carbons, and in the alkylene, at least one hydrogen may be replaced by fluorine or chlorine, and at least one $-CH_2-$may be replaced by -O-, -CO-, -COO- or -OCO-; and $R^7$ is alkyl having 1 to 40 carbons, and in the alkyl, at least one hydrogen may be replaced by fluorine or chlorine, at least one $-CH_2-$ may be replaced by -O-, -CO-, -COO- or -OCO-, and at least one $-CH_2-$ may be replaced by a divalent group formed by eliminating two hydrogens from a carbocyclic or heterocyclic saturated aliphatic compound, a carbocyclic or heterocyclic unsaturated aliphatic compound or a carbocyclic or heterocyclic aromatic compound, and in the divalent groups, the number of carbons is 5 to 35, and at least one hydrogen may be replaced by alkyl having 1 to 12 carbons, and in the alkyl, at least one $-CH_2-$ may be replaced by -O-, -CO-, -COO- or -OCO-.

Item 16. The liquid crystal composite according to item 15, wherein, in formula (6), $M^6$ is hydrogen or methyl; $Z^7$ is a single bond or alkylene having 1 to 5 carbons, and in the alkylene, at least one hydrogen may be replaced by fluorine or chlorine, and at least one $-CH_2-$may be replaced by -O-, -CO-, -COO- or -OCO-; and $R^7$ is alkyl having 1 to 40 carbons, and in the alkyl, at least one hydrogen may be replaced by fluorine or chlorine, and at least one $-CH_2-$ may be replaced by -O-, -CO-, -COO- or -OCO-.

Item 17. The liquid crystal composite according to any one of items 1 to 9, wherein the polymer is a polymer derived from a polymerizable compound containing at least one compound selected from the group of compounds represented by formula (7), formula (8) and formula (9):

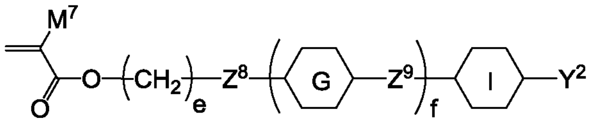

(7)

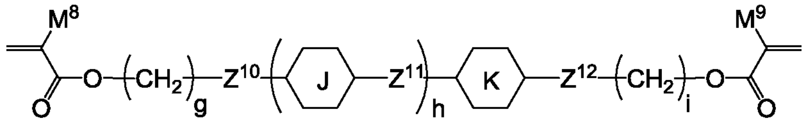

(8)

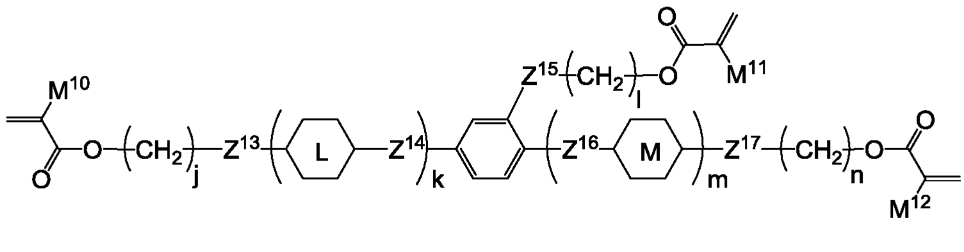

(9)

wherein, in formula (7), formula (8) and formula (9), ring G, ring I, ring J, ring K, ring L and ring M are independently 1,4-cyclohexylene, 1,4-phenylene, 1,4-cyclohexenylene, pyridine-2,5-diyl, 1,3-dioxane-2,5-diyl, naphthalene-2,6-diyl or fluorene-2,7-diyl, and in the divalent groups, at least one hydrogen may be replaced by fluorine, chlorine, cyano, hydroxy, formyl, trifluoroacetyl, difluoromethyl, trifluoromethyl, alkyl having 1 to 5 carbons, alkoxyl having 1 to 5 carbons, alkoxycarbonyl having 2 to 5 carbons or alkanoyl having 1 to 5 carbons; $Z^8$, $Z^{10}$, $Z^{12}$, $Z^{13}$ and $Z^{17}$ are independently a single bond, -O-, -COO-, -OCO- or -OCOO-; $Z^9$, $Z^{11}$, $Z^{14}$ and $Z^{16}$ are independently a single bond, $-OCH_2-$, $-CH_2O-$, -COO-, -OCO-, -COS-, -SCO-, -OCOO-, -CONH-, -NHCO-, $-CF_2O-$, $-OCF_2-$, $-CH_2CH_2-$, $-CF_2CF_2-$, -CH=CHCOO-, -OCOCH=CH-, $-CH_2CH_2COO-$, $-OCOCH_2CH_2-$, -CH=CH-, -N=CH-, -CH=N-, $-N=C(CH_3)-$, $-C(CH_3)=N-$, -N=N- or -C≡C-; $Z^{15}$ is a single bond, -O- or -COO-; $Y^2$ is hydrogen, fluorine, chlorine, trifluoromethyl, trifluoromethoxy, cyano, alkyl having 1 to 20 carbons, alkenyl having 2 to 20 carbons, alkoxy having 1 to 20 carbons or alkoxycarbonyl having 2 to 20 carbons; f and h are an integer from 1 to 4; k and m are independently an integer from 0 to 3; a sum of k and m is 1 to 4; e, g, i, j, l and n are independently an integer from 0 to 20; and $M^7$ to $M^{12}$ are independently hydrogen or methyl.

Item 18. The liquid crystal composite according to any one of items 1 to 17, wherein a proportion of the liquid crystal composition is in the range of 50% by weight to 95% by weight, and a proportion of the polymer is in the range of 5% by weight to 50% by weight, based on the weight of the liquid crystal composite.

Item 19. The liquid crystal composite according to any one of items 1 to 18, wherein a precursor of the liquid crystal composite is a polymerizable composition containing a liquid crystal composition and a polymerizable compound, and the polymerizable composition contains a photopolymerization initiator as an additive.

Item 20. A liquid crystal dimming device, wherein a dimming layer includes the liquid crystal composite according to any one of items 1 to 19, the dimming layer is interposed between a pair of transparent substrates, and the transparent substrate has transparent electrodes.

Item 21. The liquid crystal dimming device according to item 20, wherein the transparent substrate is a glass plate or an acrylic plate.

Item 22. The liquid crystal dimming device according to item 20, wherein the transparent substrate is a plastic film.

Item 23. A dimming window, using the liquid crystal dimming device according to any one of items 20 to 22.

Item 24. A smart window, using the liquid crystal dimming device according to any one of items 20 to 22.

Item 25. Use of the liquid crystal composite according to any one of items 1 to 19 for a liquid crystal dimming device.

Item 26. Use of the liquid crystal composite according to any one of items 1 to 19 for a liquid crystal dimming device in which a transparent substrate is a plastic film.

Item 27. Use of the liquid crystal composite according to any one of items 1 to 19 for a dimming window.

Item 28. Use of the liquid crystal composite according to any one of items 1 to 19 for a smart window.

The invention also includes the following items: (a) the liquid crystal composite according to item 1, containing, as the first component, a polymer and a liquid crystal composition containing at least one compound selected from compounds in which $Y^1$ is fluorine in formula (1); and (b) the liquid crystal composite according to item 1, containing, as the first component, a polymer and a liquid crystal composition containing at least one compound selected from compounds in which $Y^1$ is cyano in formula (1).

The invention also includes the following items: (c) the liquid crystal composite according to item 2, containing,

as the first component, a polymer and a liquid crystal composition containing at least one compound selected from the group of compound (1-1), compound (1-2), compound (1-3), compound (1-9), compound (1-13), compound (1-16), compound (1-21), compound (1-22), compound (1-23), compound (1-24), compound (1-27), compound (1-28), compound (1-33), compound (1-36), compound (1-41) and compound (1-42) according to item 2.

The invention also includes the following items: (d) the liquid crystal composite according to item 5, containing, as the second component, a polymer and a liquid crystal composition containing at least one compound selected from the group of compound (2-1), compound (2-2), compound (2-3), compound (2-4), compound (2-6), compound (2-9), compound (2-10), compound (2-12), compound (2-13), compound (2-14), compound (2-16), compound (2-17), compound (2-19) and compound (2-21) according to item 5.

The invention also includes the following items: (e) The liquid crystal composite according to item 8, containing, as the third component, a polymer and a liquid crystal composition containing at least one compound selected from the group of compound (3-1), compound (3-2), compound (3-3), compound (3-4), compound (3-6), compound (3-7), compound (3-8) and compound (3-10) according to item 8.

The invention also includes the following items: (a) the liquid crystal composite, wherein a proportion of the liquid crystal composition is in the range of 50% by weight to 90% by weight, and a proportion of the polymer is in the range of 10% by weight to 50% by weight, based on the weight of the liquid crystal composite; (b) the liquid crystal composite, wherein a proportion of the liquid crystal composition is in the range of 50% by weight to 85% by weight, and a proportion of the polymer is in the range of 15% by weight to 50% by weight, based on the weight of the liquid crystal composite; and (c) the liquid crystal composite, wherein a proportion of the liquid crystal composition is in the range of 60% by weight to 80% by weight, and a proportion of the polymer is in the range of 20% by weight to 40% by weight, based on the weight of the liquid crystal composite.

The liquid crystal dimming device of the invention will be described in the following order. First, a constitution of the liquid crystal composite will be described. Second, a constitution of the liquid crystal composition will be described. Third, main characteristics of the component compounds and main effects of the compounds on the composition will be described. Fourth, a combination of components in the composition, a preferred proportion of the components and the basis thereof will be described. Fifth, a preferred embodiment of the component compounds will be described. Sixth, a preferred component compound will be described. Seventh, methods for synthesizing the component compounds will be described. Eighth, an additive that may be added to the composition will be described. Ninth, a polymerizable compound and a polymerizable composition will be described. Last, the liquid crystal composite will be described.

First, the constitution of the liquid crystal composite will be described. The liquid crystal composite can be obtained by the polymerization of the polymerizable composition. The polymerizable composition is a mixture of the liquid crystal composition and the polymerizable compound. The dielectric anisotropy of the liquid crystal composition is positive. The additive may be added to the composition. The additive may be the polymerization initiator, the polar compound and so forth. The polymer formed by polymerization causes phase separation, and therefore the polymerizable composition gives the liquid crystal composite. More specifically, the liquid crystal composite in which the polymer is combined with the liquid crystal composition is formed. The liquid crystal composite is suitable for a normal mode device that is opaque when no voltage is applied and that becomes transparent when voltage is applied. Optical anisotropy of the liquid crystal composition and a refractive index of the polymer relate to transparency of the liquid crystal dimming device. Higher optical anisotropy ($\Delta n$) of the liquid crystal composition is generally preferable. The optical anisotropy is preferably 0.16 or more, and further preferably 0.18 or more.

In a polymer-dispersed type device, the liquid crystal composition is dispersed as droplets in the polymer. Each of the droplets is independent, and not continuous. On the other hand, in a polymer-network type device, the polymer has a three dimensional-network structure, and the liquid crystal composition is surrounded by the network thereof, but is continuous. In the devices, a proportion of the liquid crystal composition based on the liquid crystal composite is preferably larger for effectively scattering light. A driving voltage is lower when a size of the droplets or the networks is larger. Accordingly, a proportion of the polymer is preferably smaller from a viewpoint of a lower driving voltage. A response time is shorter when the size of the droplets or the networks is smaller. Accordingly, a proportion of the polymer is preferably larger from a viewpoint of a shorter response time.

A preferred proportion of the liquid crystal composition is in the range of 50% by weight to 95% by weight based on the weight of the liquid crystal composite. A preferred proportion thereof is also in the range of 50% by weight to 90% by weight. A further preferred proportion is in the range of 50% by weight to 85% by weight. A particularly preferred proportion is in the range of 60% by weight to 80% by weight. A particularly preferred proportion is in the range of 70% by weight to 80% by weight. A total of the liquid crystal composite and the polymer is 100% by weight, and therefore a proportion of the polymer can be easily calculated. In addition, a proportion of the polymer based on the liquid crystal composite is identical with a proportion of the polymerizable compound based on the polymerizable composition.

When a proportion of the liquid crystal composition and the polymer is in the range thereof, the polymer-network type device is formed. When a proportion of the polymer is large, a structure of the polymer-dispersed type may be mixed. On the other hand, when a proportion of the polymer is smaller than 5% by weight, a polymer sustained alignment

mode device is formed. The polymer sustained alignment mode device is abbreviated as a PSA device. Example 1 in WO 2012-050178 A describes that "a monomer was added so as to be 0.5 wt% to a liquid crystal material" (paragraph 0105) . As shown in the above description, in the PSA device, a small amount of the polymerizable compound is added to the liquid crystal material (liquid crystal composition).

In the PSA device, the polymer adjusts a pretilt angle of liquid crystal molecules. Optimization of the pretilt angle stabilizes liquid crystal molecules to shorten a response time of the device. On the other hand, in a normal mode polymer-network type device, the refractive index of the polymer is different from a refractive index of liquid crystal molecules, and therefore light scattering is caused, and the device becomes opaque. When voltage is applied to the device, liquid crystal molecules are aligned perpendicularly to a substrate, and the device becomes transparent. Accordingly, in contrast to the PSA device, in the polymer-network type device, no polarizing plate is required.

Second, the constitution of the liquid crystal composition will be described. The composition contains a plurality of liquid crystal compounds. The composition may contain the additive. The additive is the optically active compound, the antioxidant, the ultraviolet light absorber, the dye, the antifoaming agent, the polymerization initiator, the polymerization inhibitor and the polar compound. The compositions are classified into composition A and composition B from a viewpoint of the liquid crystal compound. Composition A may further contain any other liquid crystal compound, the additive and so forth, in addition to the liquid crystal compounds selected from compound (1), compound (2) and compound (3). "Any other liquid crystal compound" means a liquid crystal compound that is different from compound (1), compound (2) and compound (3). Such a compound is mixed with the composition for the purpose of further adjusting the characteristics.

Composition B consists essentially of liquid crystal compounds selected from compound (1), compound (2) and compound (3). A term "essentially" means that composition B may contain the additive, but contains no any other liquid crystal compound. Composition B has a smaller number of components than composition A has. Composition B is preferred to composition A from a viewpoint of cost reduction. Composition A is preferred to composition B from a viewpoint of possibility of further adjusting the characteristics by mixing any other liquid crystal compound.

Third, the main characteristics of the component compounds and the main effects of the compounds on the composition will be described. The main characteristics of the component compounds are summarized in Table 2. In Table 2, a symbol L stands for "large" or "high," a symbol M stands for "medium," and a symbol S stands for "small" or "low." The symbols L, M and S represent a classification based on a qualitative comparison among the component compounds, and a symbol 0 (zero) means that a value is significantly small.

**Table 2. Characteristics of compounds**

| Compounds | Compound (1) | Compound (2) | Compound (3) |
|---|---|---|---|
| Maximum temperature | S to L | S to L | S to L |
| Viscosity | M to L | S to M | M to L |
| Optical anisotropy | M to L | S to L | M to L |
| Dielectric anisotropy | S to L | 0 | M to L[1)] |
| Specific resistance | L | L | L |
| **1) A value of the dielectric anisotropy is negative, and the symbol expresses a magnitude of an absolute value.** | | | |

The main effects of the component compounds on the characteristics of the composition are as described below. Compound (1) increases the dielectric anisotropy. Compound (2) increases the maximum temperature or decreases the minimum temperature. Compound (3) increases a dielectric constant of liquid crystal molecules in a minor axis direction.

Fourth, the combination of components in the composition, the preferred proportion of the components and the basis thereof will be described. A preferred combination of the components in the composition includes a combination of the first component and the second component, a combination of the first component and the third component, or a combination of the first component, the second component and the third component. A further preferred combination includes a combination of the first component and the second component, or a combination of the first component, the second component and the third component.

A preferred proportion of the first component is about 5% by weight or more for increasing the dielectric anisotropy, and about 90% by weight or less for decreasing the minimum temperature. A further preferred proportion is in the range of about 10% by weight to about 85% by weight. A particularly preferred proportion is in the range of about 20% by weight to about 80% by weight.

A preferred proportion of the second component is about 5% by weight or more for increasing the maximum

temperature or for decreasing the minimum temperature, and is about 90% by weight or less for increasing the dielectric anisotropy. A further preferred proportion is in the range of about 10% by weight to about 85% by weight. A particularly preferred proportion is in the range of about 20% by weight to about 80% by weight.

A preferred proportion of the third component is about 3% by weight or more for increasing a dielectric constant of liquid crystal molecules in a minor axis direction, and about 25% by weight or less for decreasing the minimum temperature. A further preferred proportion is in the range of about 5% by weight to about 20% by weight. A particularly preferred proportion is in the range of about 5% by weight to about 15% by weight.

Fifth, the preferred embodiment of the component compounds will be described. In formula (1), formula (2) and formula (3), $R^1$ is alkyl having 1 to 12 carbons, alkoxy having 1 to 12 carbons or alkenyl having 2 to 12 carbons. Preferred $R^1$ is alkyl having 1 to 12 carbons for increasing stability to light or heat.

$R^2$ and $R^3$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine. Preferred $R^2$ or $R^3$ is alkenyl having 2 to 12 carbons for increasing the maximum temperature or for decreasing the minimum temperature, and alkyl having 1 to 12 carbons for increasing stability to light or heat.

$R^4$ and $R^5$ are independently alkyl having 1 to 12 carbons, alkoxy having 1 to 12 carbons, alkenyl having 2 to 12 carbons or alkenyloxy having 2 to 12 carbons. Preferred $R^4$ or $R^5$ is alkyl having 1 to 12 carbons for increasing stability to light or heat, and alkoxy having 1 to 12 carbons for increasing a dielectric constant of liquid crystal molecules in a minor axis direction.

Preferred alkyl is methyl, ethyl, propyl, butyl, pentyl, hexyl, heptyl or octyl. Further preferred alkyl is methyl, ethyl, propyl, butyl or pentyl for decreasing the minimum temperature.

Preferred alkoxy is methoxy, ethoxy, propoxy, butoxy, pentyloxy, hexyloxy or heptyloxy. Further preferred alkoxy is methoxy or ethoxy for decreasing the minimum temperature.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the minimum temperature. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the minimum temperature, for instance. Cis is preferred in alkenyl such as 2-butenyl, 2-pentenyl and 2-hexenyl.

Preferred alkenyloxy is vinyloxy, allyloxy, 3-butenyloxy, 3-pentenyloxy or 4-pentenyloxy. Further preferred alkenyloxy is allyloxy or 3-butenyloxy for decreasing the minimum temperature.

Preferred examples of alkyl in which at least one hydrogen is replaced by fluorine or chlorine include fluoromethyl, 2-fluoroethyl, 3-fluoropropyl, 4-fluorobutyl, 5-fluoropentyl, 6-fluorohexyl, 7-fluoroheptyl or 8-fluorooctyl. Further preferred examples include 2-fluoroethyl, 3-fluoropropyl, 4-fluorobutyl or 5-fluoropentyl for increasing the dielectric anisotropy.

Preferred examples of alkenyl in which at least one hydrogen is replaced by fluorine or chlorine include 2,2-difluorovinyl, 3,3-difluoro-2-propenyl, 4,4-difluoro-3-butenyl, 5,5-difluoro-4-pentenyl or 6,6-difluoro-5-hexenyl. Further preferred examples include 2,2-difluorovinyl or 4,4-difluoro-3-butenyl for decreasing the minimum temperature.

Ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl. Preferred ring A is 1,4-phenylene or 2-fluoro-1,4-phenylene for increasing the optical anisotropy. With regard to the configuration of 1,4-cyclohexylene, trans is preferred to cis for increasing the maximum temperature. Tetrahydropyran-2,5-diyl is

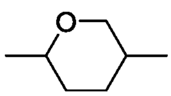

or

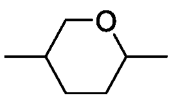,

and preferably

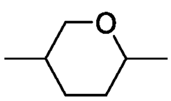.

Ring B and ring C are independently 1,4-cyclohexylene, 1,4-phenylene, 2-fluoro-1,4-phenylene or2,5-difluoro-1,4-phenylene. Preferred ring B or ring C is 1,4-cyclohexylene for increasing the maximum temperature or for decreasing the minimum temperature, and 1,4-phenylene for decreasing the minimum temperature.

Ring D and ring F are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chromane-2,6-diyl or chromane-2,6-diyl in which at least one hydrogen is replaced by fluorine or chlorine. Preferred ring D or ring F is 1,4-cyclohexylene for decreasing the minimum temperature or for increasing the maximum temperature, and 1,4-phenylene for decreasing the minimum temperature.

Ring E is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl. Preferred ring E is 2,3-difluoro-1,4-phenylene for decreasing the minimum temperature, 2-chloro-3-fluoro-1, 4-phenylene for deceasing the optical anisotropy, and 7,8-difluorochromane-2,6-diyl for increasing a dielectric constant of liquid crystal molecules in a minor axis direction.

$Z^1$ is a single bond, ethylene, carbonyloxy or difluoromethyleneoxy. Preferred $Z^1$ is a single bond for increasing the maximum temperature, and difluoromethyleneoxy for increasing the dielectric anisotropy. $Z^2$ is a single bond, ethylene, ethynylene or carbonyloxy. Preferred $Z^2$ is a single bond for increasing stability to light or heat. $Z^3$ and $Z^4$ are independently a single bond, ethylene, carbonyloxy or methyleneoxy. Preferred $Z^3$ or $Z^4$ is a single bond for decreasing the minimum temperature, ethylene for decreasing the minimum temperature, and methyleneoxy for increasing a dielectric constant of liquid crystal molecules in a minor axis direction.

Then, a is 1, 2, 3 or 4. Preferred a is 2 for decreasing the minimum temperature, and 3 for increasing the dielectric anisotropy. Then, b is 1, 2 or 3. Preferred b is 1 for decreasing the minimum temperature, and 2 or 3 for increasing the maximum temperature. Then, c is 1, 2 or 3; d is 0 or 1; and a sum of c and d is 3 or less. Preferred c is 1 for decreasing the minimum temperature, and 2 or 3 for increasing the maximum temperature. Preferred d is 0 for decreasing the minimum temperature, and 1 for decreasing the minimum temperature.

$X^1$ and $X^2$ are independently hydrogen or fluorine. Preferred $X^1$ or $X^2$ is hydrogen for increasing the maximum temperature, and fluorine for increasing the dielectric anisotropy.

$Y^1$ is fluorine, chlorine, cyano, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine. Preferred $Y^1$ is fluorine for decreasing the viscosity, and cyano for increasing the dielectric anisotropy.

The polymer is derived from the polymerizable compound. The polymerizable compound may be alone or a mixture of a plurality of compounds. The polymerizable compound is preferably the mixture of a plurality of compounds from a viewpoint that can further adjust characteristics of a dimming device. Examples of the polymerizable compound include compound (4), compound (5), compound (6), compound (7), compound (8) or compound (9). The polymerizable compound may be a mixture of compounds selected from the group of compound (4) to compound (9). The polymerizable compound may be a mixture of polymerizable compounds that are different from compound (4) to compound (9). A preferred polymerizable compound includes compound (4), compound (5), compound (6), compound (7), compound (8), compound (9) or a mixture thereof, in a proportion of 50% by weight or more.

In formula (4), $Z^5$ is alkylene having 1 to 20 carbons, and in the alkylene, at least one hydrogen may be replaced by alkyl having 1 to 5 carbons, fluorine, chlorine or $P^3$, at least one $-CH_2-$ may be replaced by -O-, -CO-, -COO-, -OCO-, -NH-, $-N(R^6)-$, -CH=CH- or $-C{\equiv}C-$, and at least one $-CH_2-$ may be replaced by a divalent group formed by eliminating two hydrogens from a carbocyclic or heterocyclic saturated aliphatic compound, a carbocyclic or heterocyclic unsaturated aliphatic compound or a carbocyclic or heterocyclic aromatic compound, and in the divalent groups, the number of carbons is 5 to 35, and at least one hydrogen may be replaced by $R^6$ or $P^3$, in which $R^6$ is alkyl having 1 to 12 carbons, and in the alkyl, at least one $-CH_2-$ may be replaced by -O-, -CO-, -COO- or -OCO-.

Examples of the divalent group formed by eliminating two hydrogens from the carbocyclic or heterocyclic saturated aliphatic compound include 1,4-cyclohexylene, decahydronaphthalene-2,6-diyl, tetrahydropyran-2,5-diyl and 1,3-dioxane-2,5-diyl. Examples of the divalent group formed by eliminating two hydrogens from the carbocyclic or heterocyclic unsaturated aliphatic compound include 1,4-cyclohexenylene and dihydropyran-2,5-diyl. Examples of the divalent group formed by eliminating two hydrogens from the carbocyclic or heterocyclic aromatic compound include 1,4-phenylene, 1,4-phenylene in which at least one hydrogen is replaced by fluorine, 1,2,3,4-tetrahydronaphthalene-2,6-diyl, naphthalene-1,2-diyl and pyrimidine-2,5-diyl.

Preferred $Z^5$ is alkylene having 1 to 20 carbons, and in the alkylene, at least one hydrogen may be replaced by alkyl having 1 to 5 carbons, at least one $-CH_2-$ may be replaced by -O-, and at least one $-CH_2-$ may be replaced by a divalent group formed by eliminating two hydrogens from a carbocyclic saturated aliphatic compound or a carbocyclic aromatic compound, and in the divalent groups, the number of carbons is 5 to 35. Further preferred $Z^5$ is alkylene having 1 to 20 carbons, and in the alkylene, at least one hydrogen may be replaced by alkyl having 1 to 5 carbons, and at least one $-CH_2-$ may be replaced by -O-.

Preferred $Z^5$ includes a ring structure such as 1,4-cyclohexylene or 1, 4-phenylene for increasing compatibility with the liquid crystal composition. Preferred $Z^5$ includes a chain structure such as alkylene for easily forming a network structure. One example of compound (4) includes compound (4-1) to compound (4-5):

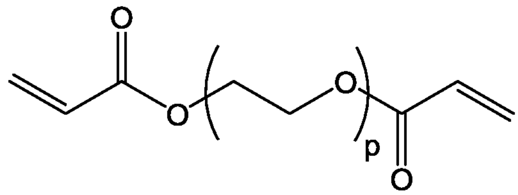

(4-1)

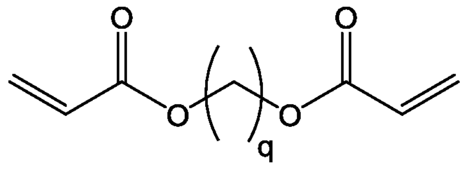

(4-2)

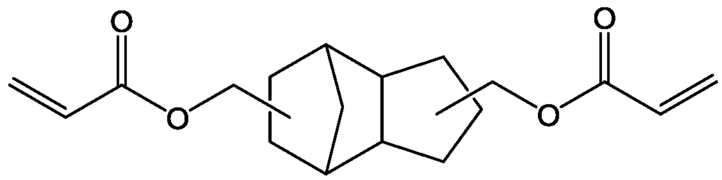

(4-3)

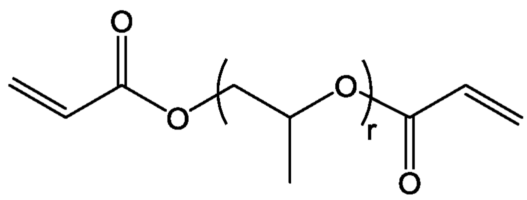

(4-4)

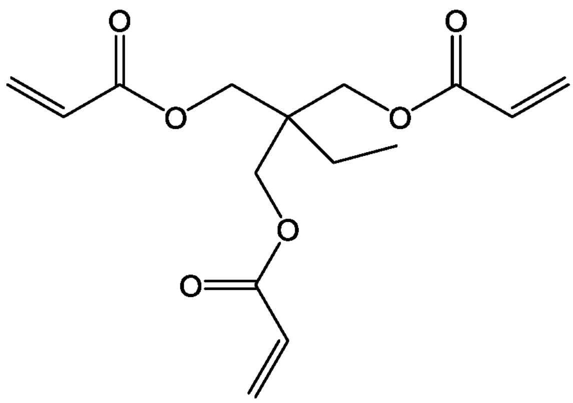

(4-5)

wherein, in formula (4-1), p is an integer from 1 to 6, and in formula (4-2), q is an integer from 5 to 20, and in formula (4-4), r is an integer from 1 to 15.

$P^1$, $P^2$ and $P^3$ are independently a polymerizable group. A preferred polymerizable group is formula (P-1) to formula (P-6). A further preferred polymerizable group is formula (P-1) to formula (P-3).

In formula (P-1) to formula (P-6), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine. Preferred $M^1$, $M^2$ or $M^3$ is hydrogen or methyl for increasing reactivity. Further preferred $M^1$ is hydrogen or methyl, and further preferred $M^2$ or $M^3$ is hydrogen.

In formula (5), $M^4$ and $M^5$ are independently hydrogen or methyl. Preferred $M^4$ or $M^5$ is hydrogen for increasing the reactivity.

$Z^6$ is alkylene having 21 to 80 carbons, and in the alkylene, at least one hydrogen may be replaced by alkyl having 1 to 20 carbons, fluorine or chlorine, and at least one $-CH_2-$ may be replaced by -O-, -CO-, -COO-, -OCO-, -NH-, $-N(R^6)-$, -CH=CH- or -C≡C-, in which $R^6$ is alkyl having 1 to 12 carbons, and in the alkyl, at least one $-CH_2-$ may be replaced by -O-, -CO-, -COO- or -OCO-. Preferred $Z^6$ is alkylene having 21 to 60 carbons for low voltage driving, and in the alkylene, at least one hydrogen may be replaced by alkyl having 1 to 20 carbons, and at least one $-CH_2-$ may be replaced by -O-, -COO- or -OCO-.

Further preferred $Z^6$ is alkylene in which at least one hydrogen is replaced by alkyl for low voltage driving. Steric hindrance is preferably prevented when two hydrogens of alkylene are replaced by alkyl. For example, two alkyls are sufficiently separated, or alkyl having 1 to 5 carbons is used for one of alkyls. A same rule applies also to a case when at least three hydrogens are replaced by alkyls.

One example of compound (5) includes compound (5-1):

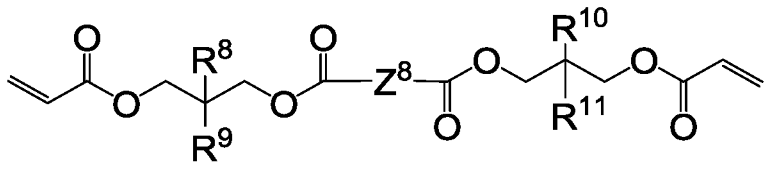

(5-1)

wherein, in formula (5-1), $R^8$ and $R^{10}$ are independently alkyl having 1 to 5 carbons, and $R^9$ and $R^{11}$ are independently alkyl having 5 to 20 carbons, and in the alkyl, at least one $-CH_2-$ may be replaced by -O-, -CO-, -COO- or -OCO-, and $Z^8$ is alkylene having 10 to 30 carbons, and in the alkylene, at least one $-CH_2-$ may be replaced by -O-, -CO-, -COO-or -OCO-.

One example of compound (5-1) includes compound (5-1-1) and compound (5-1-2):

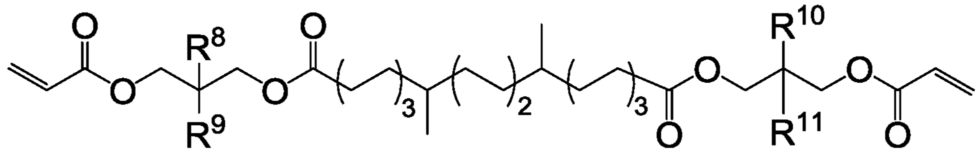

(5-1-1)

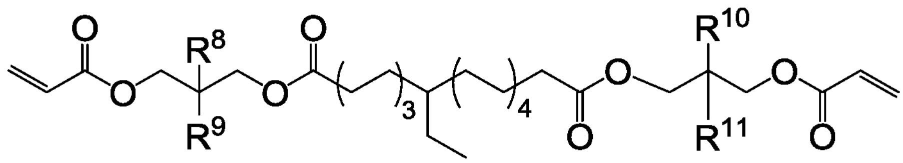

(5-1-2)

wherein, in formula (5-1-1) and formula (5-1-2), for example, $R^8$ and $R^{10}$ is ethyl, and $R^9$ and $R^{11}$ are independently $-CH_2OCOC_9H_{19}$, $-CH_2OCOC_{10}H_{21}$, $-CH_2OC_8H_{17}$ or $-CH_2OC_{11}H_{23}$.

In formula (6), $M^6$ is hydrogen or methyl. Preferred $M^6$ is hydrogen for increasing the reactivity.

$Z^7$ is a single bond or alkylene having 1 to 5 carbons, and in the alkylene, at least one hydrogen may be replaced by fluorine or chlorine, and at least one $-CH_2-$ may be replaced by -O-, -CO-, -COO- or -OCO-. Preferred $Z^7$ is a single bond or alkylene having 1 to 5 carbons, and in the alkylene, at least one $-CH_2-$ may be replaced by -O-, -CO-, -COO-or -OCO-.

$R^7$ is alkyl having 1 to 40 carbons, and in the alkyl, at least one hydrogen may be replaced by fluorine or chlorine, at least one $-CH_2-$may be replaced by -O-, -CO-, -COO- or -OCO-, and at least one $-CH_2-$may be replaced by a divalent group formed by eliminating two hydrogens from a carbocyclic or heterocyclic saturated aliphatic compound, a carbocyclic or heterocyclic unsaturated aliphatic compound or a carbocyclic or heterocyclic aromatic compound, and in the divalent groups, the number of carbons is 5 to 35, and at least one hydrogen may be replaced by alkyl having 1 to 12 carbons, and in the alkyl, at least one $-CH_2-$ may be replaced by -O-, -CO-, -COO- or -OCO-. Preferred $R^7$ is alkyl having 5 to 30 carbons. Further preferred $R^7$ is branched-chain alkyl having 5 to 30 carbons.

One example of compound (6) includes compound (6-1) to compound (6-6) :

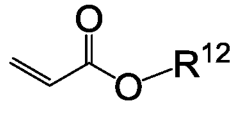

(6-1)

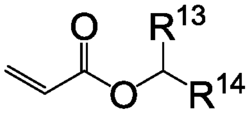

(6-2)

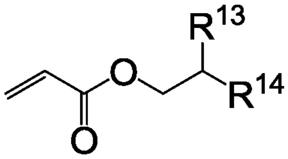

(6-3)

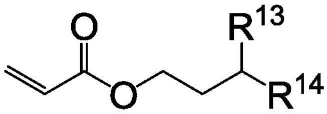

(6-4)

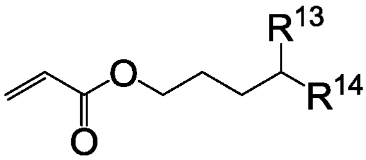

(6-5)

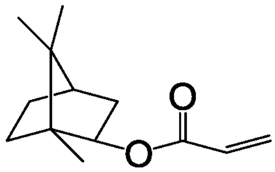

(6-6)

wherein, in formula (6-1) to formula (6-5), $R^{12}$ is alkyl having 5 to 20 carbons, and in the alkyl, at least one $-CH_2-$ may be replaced by -O-, -CO-, -COO- or -OCO-, and $R^{13}$ and $R^{14}$ are independently alkyl having 3 to 10 carbons, and in the alkyl, at least one $-CH_2-$ may be replaced by -O-, -CO-, -COO- or -OCO-.

In formula (7), formula (8) and formula (9), ring G, ring I, ring J, ring K, ring L and ring M are independently 1,4-cyclohexylene, 1,4-phenylene, 1,4-cyclohexenylene, pyridine-2,5-diyl, 1,3-dioxane-2,5-diyl, naphthalene-2,6-diyl or fluorene-2,7-diyl, and in the divalent groups, at least one hydrogen may be replaced by fluorine, chlorine, cyano, hydroxy, formyl, trifluoroacetyl, difluoromethyl, trifluoromethyl, alkyl having 1 to 5 carbons, alkoxyl having 1 to 5 carbons, alkoxycarbonyl having 2 to 5 carbons or alkanoyl having 1 to 5 carbons. In formula (7), formula (8) and formula (9), preferred ring is 1,4-cyclohexylene, 1,4-phenylene, 2-fluoro-1,4-phenylene, 2-methyl-1,4-phenylene, 2-methoxy-1,4-phenylene or 2-trifluoromethyl-1,4-phenylene. A further preferred ring is 1,4-cyclohexylene or 1,4-phenylene.

$Z^8$, $Z^{10}$, $Z^{12}$, $Z^{13}$ and $Z^{17}$ are independently a single bond, -O-, -COO-, -OCO- or -OCOO-. $Z^9$, $Z^{11}$, $Z^{14}$ and $Z^{16}$ are independently a single bond, $-OCH_2-$, $-CH_2O-$, -COO-, -OCO-, -COS-, -SCO-, -OCOO-, -CONH-, -NHCO-, $-CF_2O-$, $-OCF_2-$, $-CH_2CH_2-$, $-CF_2CF_2-$, -CH=CHCOO-, -OCOCH=CH-, $-CH_2CH_2COO-$, $-OCOCH_2CH_2-$, -CH=CH-, -N=CH-, -CH=N-, -N=C $(CH_3)$ -, -C$(CH_3)$ =N-, -N=N- or -C≡C-. $Z^{15}$ is a single bond, -O- or -COO-. Preferred $Z^8$, $Z^{10}$, $Z^{12}$, $Z^{13}$ or $Z^{17}$ is a single bond or -O-. Preferred $Z^9$, $Z^{11}$, $Z^{14}$ or $Z^{16}$ is a single bond, $-OCH_2-$, $-CH_2O-$, -COO-, -OCO-, $-CH_2CH_2-$, $-CH_2CH_2COO-$ or $-OCOCH_2CH_2-$.

$Y^2$ is hydrogen, fluorine, chlorine, trifluoromethyl, trifluoromethoxy, cyano, alkyl having 1 to 20 carbons, alkenyl having 2 to 20 carbons, alkoxy having 1 to 20 carbons or alkoxycarbonyl having 2 to 20 carbons. Preferred $Y^2$ is cyano, alkyl or alkoxy.

Then, f and h are an integer from 1 to 4; k and m are independently an integer from 0 to 3; a sum of k and m is 1 to 4; and e, g, i, j, l and n are independently an integer from 0 to 20.

$M^7$ to $M^{12}$ are independently hydrogen or methyl.

One example of compound (7) includes compound (7-1) to compound (7-24) :

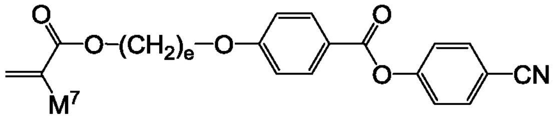

(7-1)

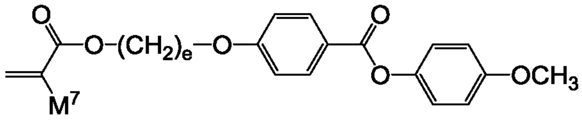

(7-2)

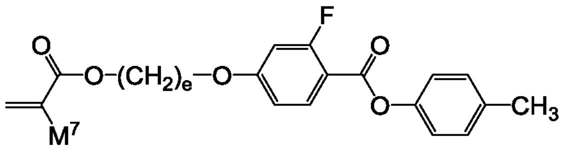

(7-3)

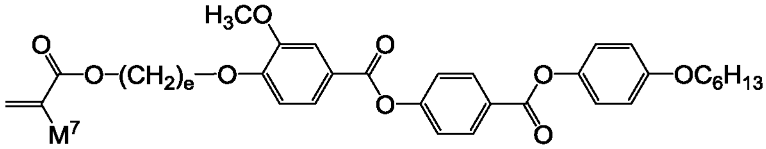

(7-4)

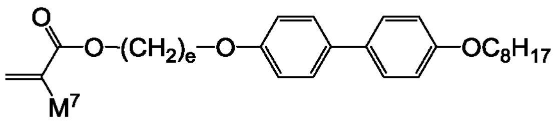

(7-5)

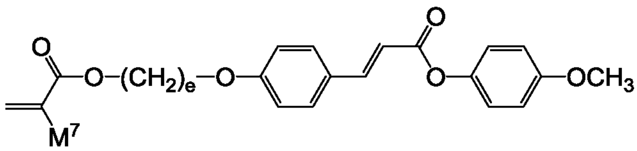

(7-6)

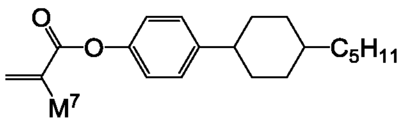

(7-7)

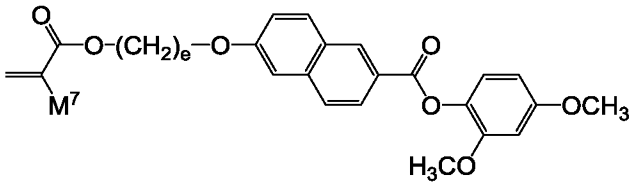

(7-8)

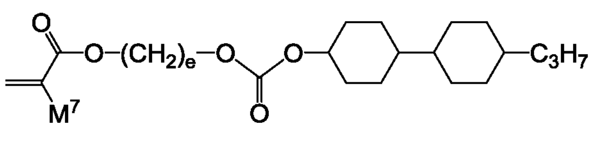

(7-9)

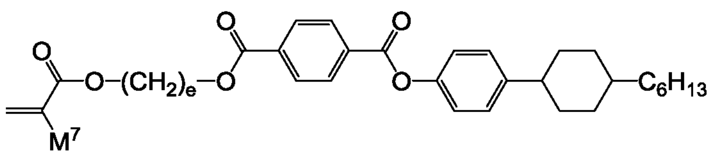

(7-10)

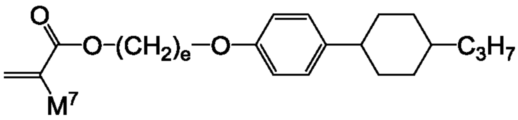
(7-11)

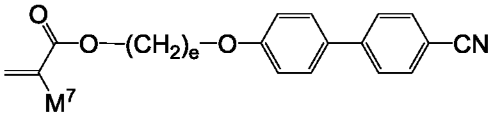
(7-12)

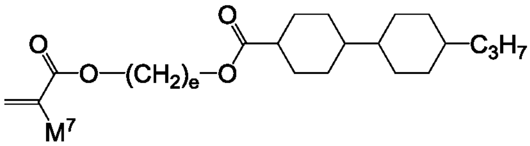
(7-13)

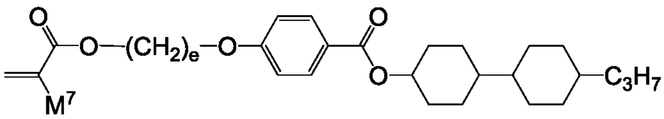
(7-14)

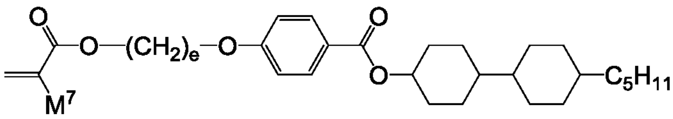
(7-15)

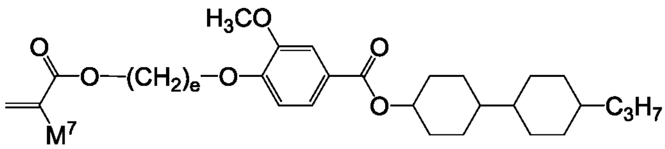
(7-16)

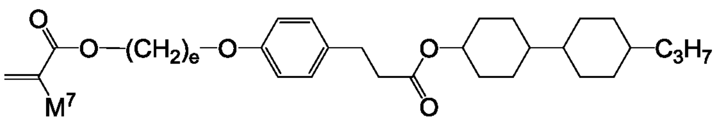
(7-17)

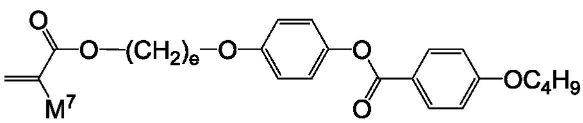
(7-18)

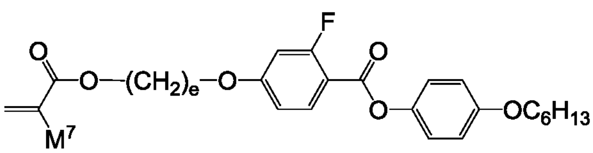
(7-19)

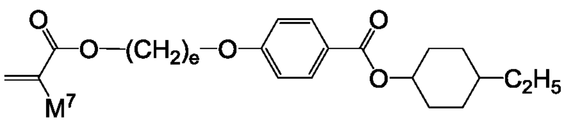
(7-20)

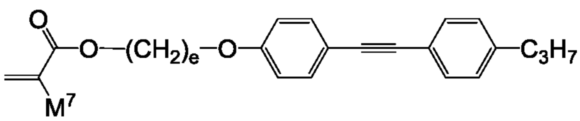
(7-21)

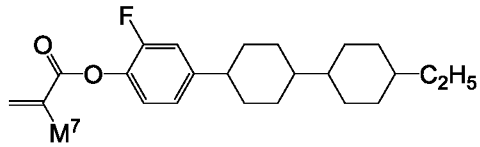

(7-22)

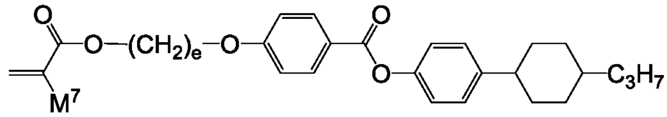

(7-23)

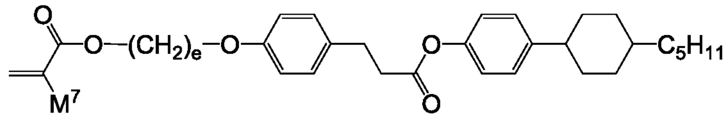

(7-24)

wherein, in formula (7-1) to formula (7-24), $M^7$ is hydrogen or methyl, and e is an integer from 1 to 20.

One example of compound (8) includes compound (8-1) to compound (8-31) :

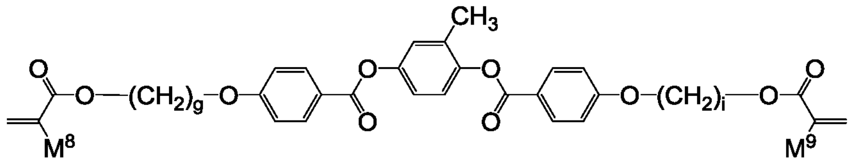

(8-1)

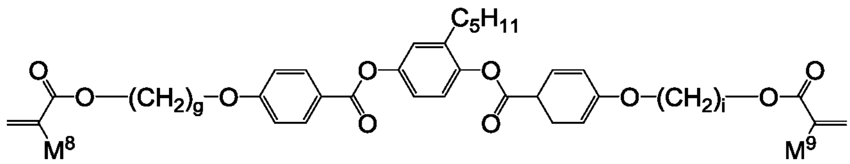

(8-2)

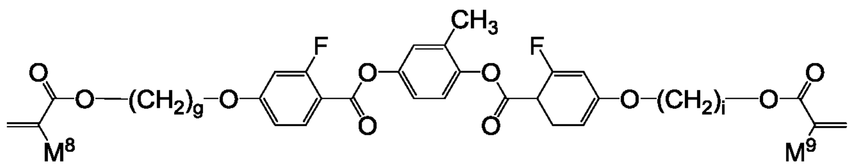

(8-3)

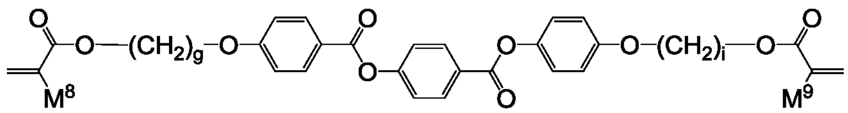

(8-4)

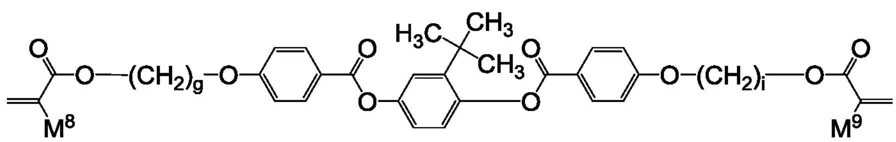

(8-5)

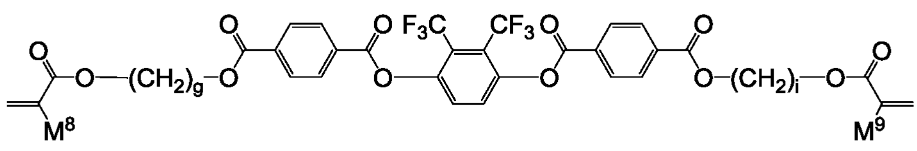

(8-6)

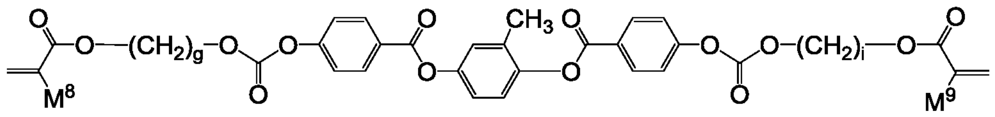 (8-7)

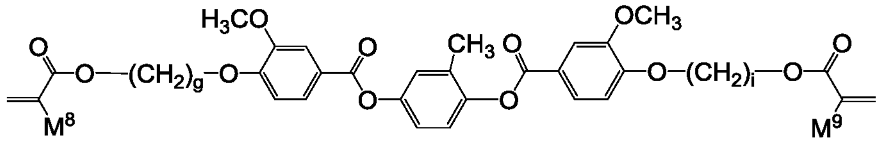 (8-8)

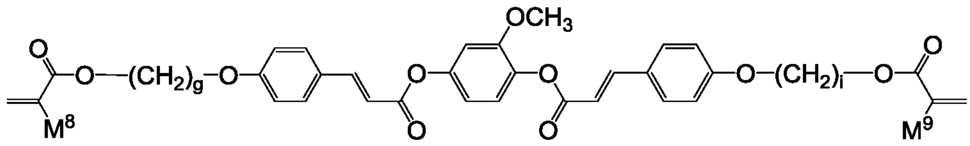 (8-9)

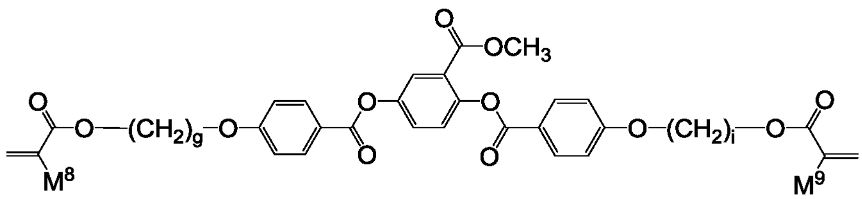 (8-10)

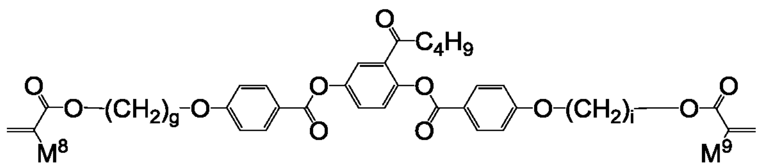 (8-11)

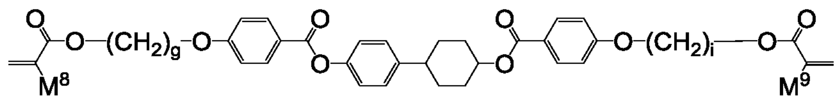 (8-12)

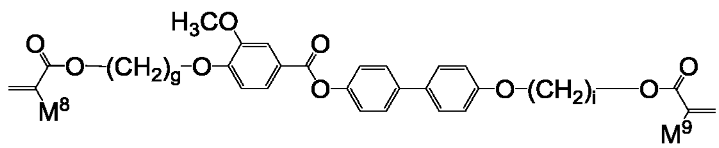 (8-13)

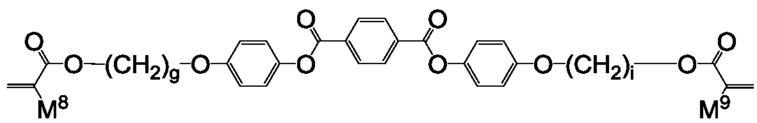 (8-14)

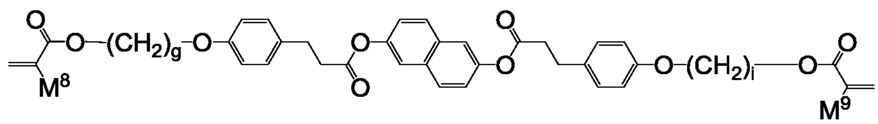 (8-15)

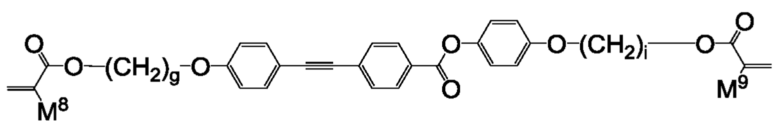 (8-16)

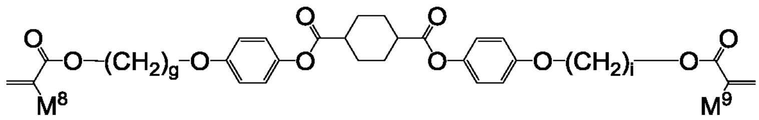

(8-17)

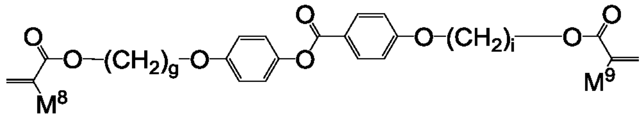

(8-18)

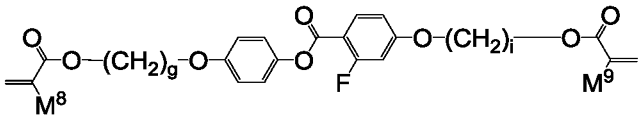

(8-19)

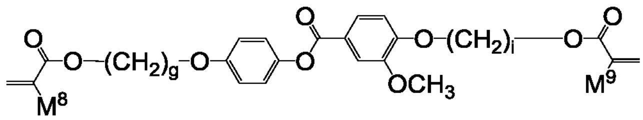

(8-20)

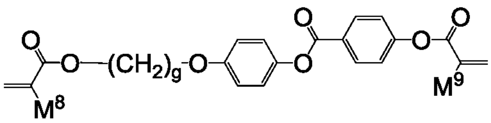

(8-21)

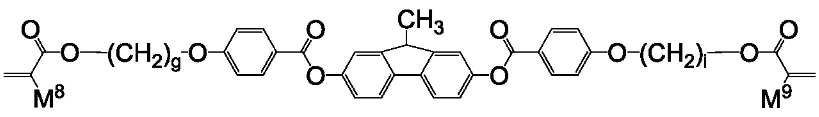

(8-22)

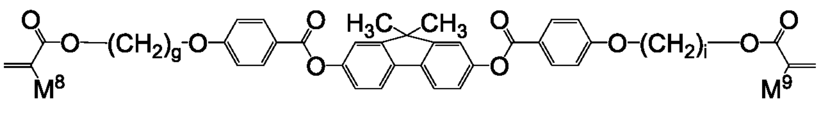

(8-23)

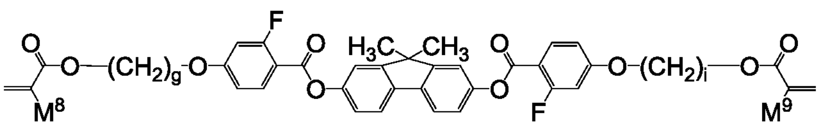

(8-24)

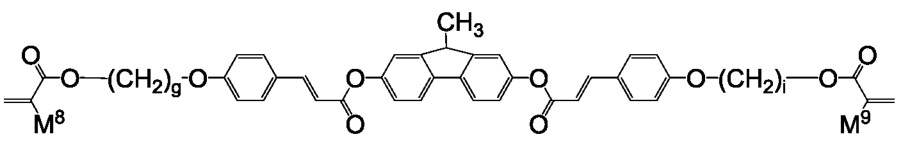

(8-25)

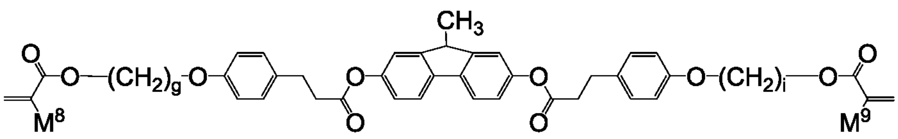

(8-26)

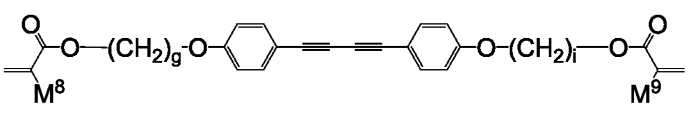

(8-27)

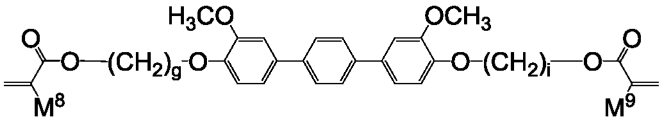

(8-28)

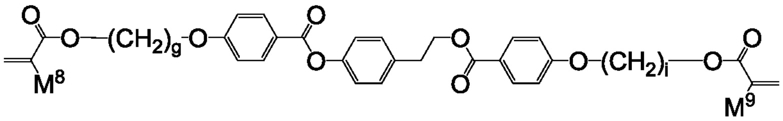

(8-29)

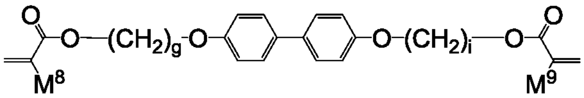

(8-30)

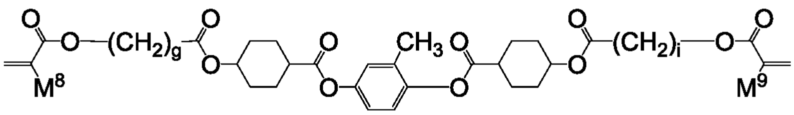

(8-31)

wherein, in formula (8-1) to formula (8-31), $M^8$ and $M^9$ are independently hydrogen or methyl, and g and i are independently an integer from 1 to 20.

One example of compound (9) includes compound (9-1) to compound (9-10) :

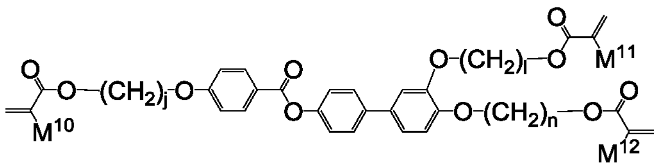

(9-1)

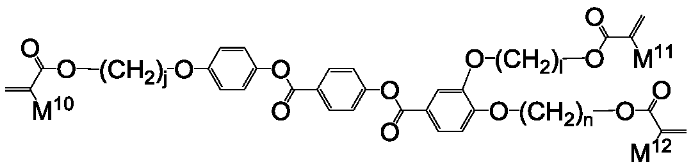

(9-2)

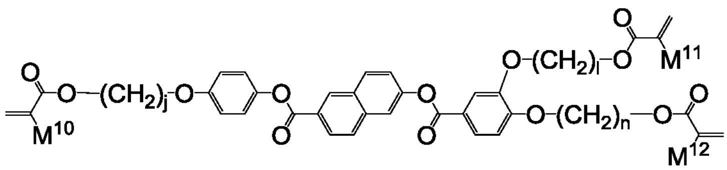

(9-3)

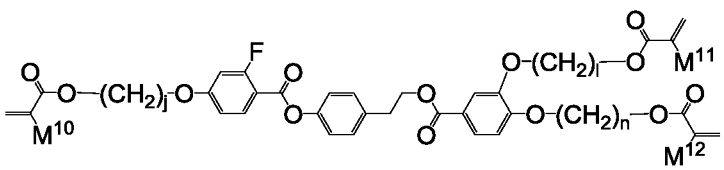

(9-4)

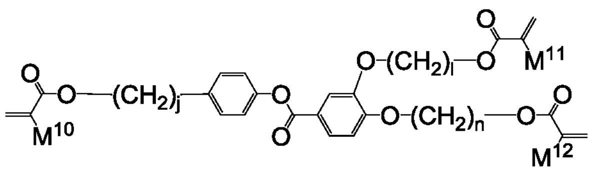

(9-5)

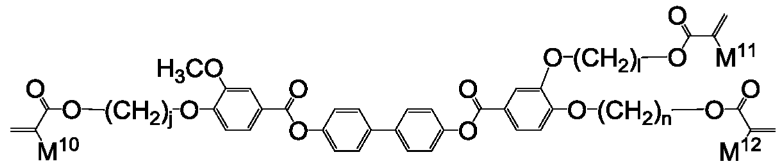

(9-6)

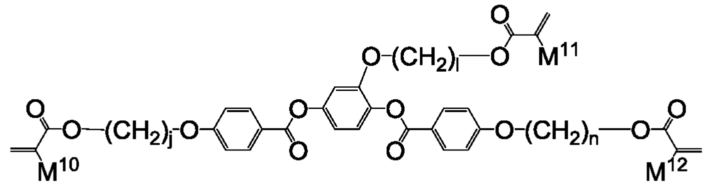

(9-7)

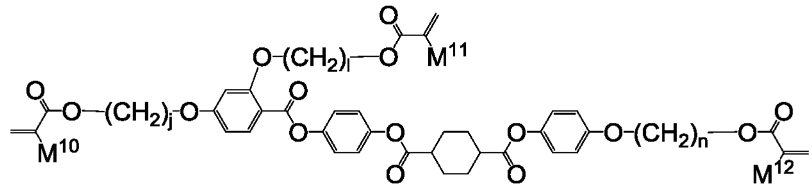

(9-8)

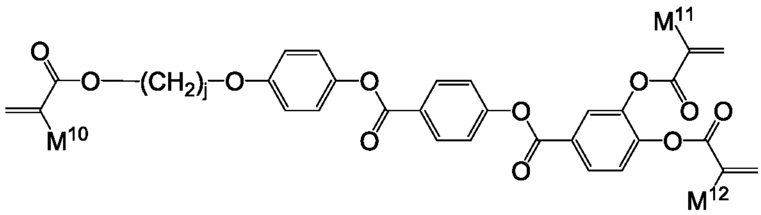

(9-9)

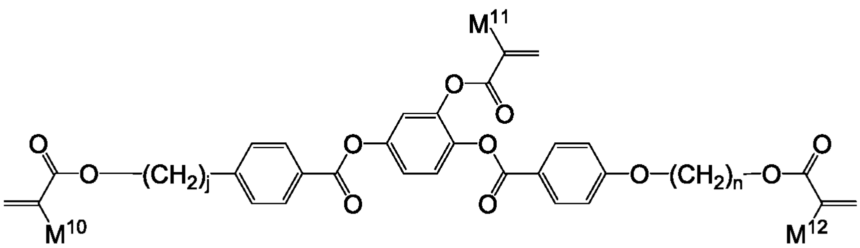

(9-10)

wherein, in formula (9-1) to formula (9-10), $M^{10}$, $M^{11}$ and $M^{12}$ are independently hydrogen or methyl, and j, l and n are independently an integer from 1 to 20.

Sixth, the preferred component compound will be described. Preferred compound (1) includes compound (1-1) to compound (1-47) according to item 2. In the compounds, at least one of the first components is preferably compound (1-1), compound (1-2), compound (1-3), compound (1-9), compound (1-13), compound (1-16), compound (1-21), compound (1-22), compound (1-23), compound (1-24), compound (1-27), compound (1-28), compound (1-33), compound (1-36), compound (1-41) or compound (1-42).

Preferred compound (2) includes compound (2-1) to compound (2-23) according to item 5. In the compounds, at least one of the second components is preferably compound (2-1), compound (2-2), compound (2-3), compound (2-4), compound (2-6), compound (2-9), compound (2-10), compound (2-12), compound (2-13), compound (2-14), compound (2-16), compound (2-17), compound (2-19) or compound (2-21).

Preferred compound (3) includes compound (3-1) to compound (3-22) according to item 8. In the compounds, at least one of the third components is preferably compound (3-1), compound (3-2), compound (3-3), compound (3-4), compound (3-6), compound (3-7), compound (3-8) or compound (3-10). At least two of the third components preferably include a combination of compound (3-1) and compound (3-6), a combination of compound (3-1) and compound (3-10), a combination of compound (3-3) and compound (3-6), a combination of compound (3-3) and compound (3-10), a combination of compound (3-4) and compound (3-6), or a combination of compound (3-4) and compound (3-10).

Seventh, the methods for synthesizing the component compounds will be described. The compounds can be prepared according to known methods . Examples of the synthetic methods are described. Compound (1-9) and compound (1-16) are prepared according to a method described in JP H02-233626 A (1990) . Compound (2-1) is prepared according to a method described in JP S59-176221 A (1984). Compound (3-1) is prepared according to a method described in JP H02-503441 A (1990). Antioxidants are commercially available. A compound of formula (11) in which s is 1, which is described below, is available from Sigma-Aldrich Corporation. Compound (11) in which s is 7 or the like is prepared according to a method described in US 3660505 B. Polymerizable compounds are commercially available or can be prepared according to known methods.

Any compounds whose synthetic methods are not described above can be prepared according to methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to known methods using the compounds thus obtained. For example, the component compounds are mixed and dissolved in each other by heating.

Eighth, the additive that may be added to the composition will be described. Such an additive includes the optically active compound, the antioxidant, the ultraviolet light absorber, the dye, the antifoaming agent, the polymerization initiator, the polymerization inhibitor and the polar compound. The optically active compound is added to the composition for the purpose of inducing a helical structure in liquid crystal molecules to give a twist angle. Examples of such a compound include compound (10-1) to compound (10-5). A preferred proportion of the optically active compound is about 5% by weight or less, and a further preferred proportion is in the range of about 0.01% by weight to about 2% by weight.

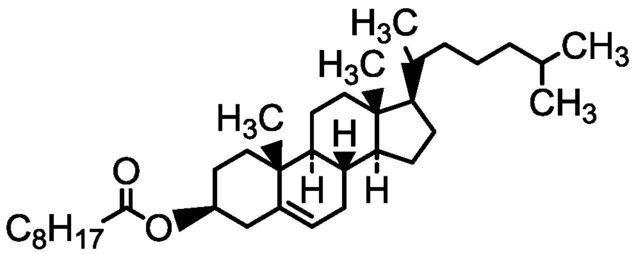

(10-1)

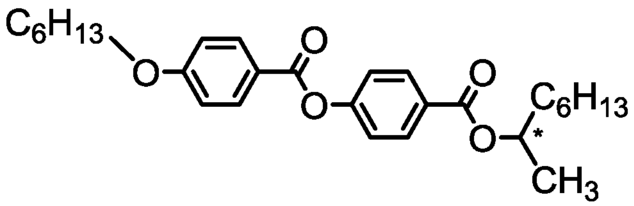

(10-2)

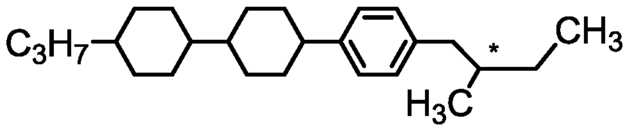

(10-3)

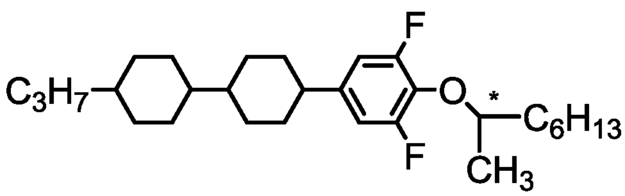

(10-4)

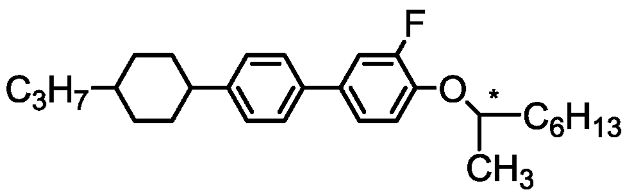

(10-5)

The antioxidant is added to the composition for preventing a decrease in the specific resistance caused by heating in air, or for maintaining a large voltage holding ratio at room temperature and also at a temperature close to the maximum temperature even after the device has been used for a long period of time. Preferred examples of the antioxidant include compound (11) in which s is an integer from 1 to 9.

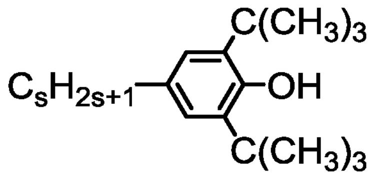

(11)

In compound (11), preferred s is 1, 3, 5, 7 or 9. Further preferred s is 7. Compound (11) in which s is 7 is effective in maintaining a large voltage holding ratio at room temperature and also at a temperature close to the maximum temperature even after the device has been used for a long period of time because such compound (11) has small volatility. A preferred proportion of the antioxidant is about 50 ppm or more for achieving its effect, and about 600 ppm or less for avoiding a decrease in the maximum temperature or an increase in the minimum temperature. A further preferred proportion is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred proportion of the absorber or the stabilizer is about 50 ppm or more for achieving its effect, and about 10,000 ppm or less for avoiding a decrease in the maximum temperature or an increase in the minimum temperature. A further preferred proportion is in the range of about 100 ppm to about 10,000 ppm.

A dichroic dye such as an azo dye or an anthraquinone dye is added to the composition to be adapted for a device having a guest host (GH) mode. A preferred proportion of the dye is in the range of about 0.01% by weight to about 10% by weight. The anti foaming agent such as dimethyl silicone oil or methylphenyl silicone oil is added to the composition for preventing foam formation. A preferred proportion of the antifoaming agent is about 1 ppm or more for achieving its effect, and about 1,000 ppm or less for preventing poor display. A further preferred proportion is in the range of about 1 ppm to about 500 ppm.

The polymerizable compound is polymerized by irradiation with ultraviolet light. The polymerizable compound may be polymerized in the presence of the polymerization initiator such as a photopolymerization initiator. Suitable conditions for polymerization, suitable types of the initiator and suitable amounts thereof are known to those skilled in the art and are described in literature. For example, Irgacure 651 (registered trademark; BASF), Irgacure 184 (registered trademark; BASF) or Darocur 1173 (registered trademark; BASF), each being the photopolymerization initiator, is suitable for radical polymerization.

Upon storing the polymerizable compound, the polymerization inhibitor may be added thereto for preventing polymerization. The polymerizable compound is ordinarily added to the composition without removing the polymerization inhibitor. Examples of the polymerization inhibitor include hydroquinone, a hydroquinone derivative such as methylhydroquinone, 4-t-butylcatechol, 4-methoxyphenol and phenothiazine.

The polar compound is an organic compound having polarity. Here, a compound having an ionic bond is not included. An atom such as oxygen, sulfur and nitrogen is electrically more negative, and tends to have a partial negative charge. Carbon and hydrogen are neutral or tend to have a partial positive charge. The polarity is formed when the partial electric charge is not uniformly distributed between different kinds of atoms in the compound. For example, the polar compound has at least one of partial structures such as -OH, -COOH, -SH, $-NH_2$, >NH and >N-.

Ninth, the polymerizable compound and the polymerizable composition will be described. When the number of polymerizable groups is large in compound (4), the polymer surrounding droplets becomes hard, or the networks become dense by cross-linking. A preferred polymerizable compound has at least one acryloyloxy ($-OCO-CH=CH_2$) or methacryloyloxy ($-OCO-(CH_3)C=CH_2$). Compound (4) gives the polymer corresponding thereto by polymerization. When compound (4) is volatile, an oligomer thereof may be used. A preferred polymer is colorless and transparent, and insoluble in the liquid crystal composition. A preferred polymer has excellent adhesion to the substrate of the device, and decreases the driving voltage. A polymerizable compound that is different from compound (4) may be used together to improve an effect thereof.

Compound (5) is diacrylate or dimethacrylate. $Z^6$ is alkylene or the like, and therefore the polymer easily forms the network structure. When a molecular chain of $Z^6$ is short, cross-linking sites of the polymer come close, and therefore the network becomes small. When the molecular chain of $Z^6$ is long, the cross-linking sites of the polymer are separated and a degree of freedom of molecular motion is improved, and therefore the driving voltage is decreased. When $Z^6$ is in a branched state, the degree of freedom of molecular motion is further improved, and therefore the driving voltage is further decreased. A polymerizable compound that is different from compound (5) may be used together in order to

improve an effect thereof.

Compound (6) is acrylate or methacrylate. When $R^7$ has a ring structure, affinity with the liquid crystal composition is improved. When $R^7$ is alkylene, the polymer easily forms the network structure. In the polymer, the degree of freedom of molecular motion is improved by alkylene, and therefore the driving voltage is decreased. A polymerizable compound that is different from compound (6) may be used together to further improve an effect thereof.

Compound (7), compound (8) and compound (9) have at least one acryloyloxy ($-OCO-CH=CH_2$) or methacryloyloxy ($-OCO-(CH_3)C=CH_2$). The liquid crystal compound has a mesogen (a rigid site so as to develop crystallinity), and the compounds also have the mesogen. Therefore, the compounds are aligned with the liquid crystal compound in the same direction by action of an alignment layer. The alignment is maintained even after polymerization. Such a liquid crystal composite has high transparency. A polymerizable compound that is different from compound (7), compound (8) and compound (9) may be used together for improving other characteristics.

The polymerizable composition is the mixture of the liquid crystal composition and the polymerizable compound. The polar compound may be added to the liquid crystal composition. A polar group of the compound has noncovalent interaction with a surface of a glass substrate, a metal oxide film or the like. The compound is adsorbed onto a substrate surface by action of the polar group to control alignment of liquid crystal molecules. The polar compound may occasionally control not only the liquid crystal molecules, but also the polymerizable compound. The polar compound is expected to have such an effect.

A method for preparing the liquid crystal composite from the polymerizable composition is described below. First, the polymerizable composition is interposed between a pair of substrates. Next, the polymerizable compound is polymerized by heat or light. Irradiation with ultraviolet light is preferred for the polymerization. The polymer causes phase separation from the polymerizable composition by the polymerization. Thus, a liquid crystal layer having a dimming function (namely, the dimming layer) is formed between the substrates. The dimming layer is classified into the polymer-dispersed type, the polymer-network type and a mixture type of both.

Last, the liquid crystal composites will be described. The liquid crystal composite is used in the liquid crystal dimming device or the like. The reason is that transparency and opacity of the device can be controlled by voltage to be applied to the device. The device can be obtained by the following method. First, the polymerizable composition is interposed between a pair of transparent substrates in which at least one of the transparent substrates has a transparent electrode, at a temperature higher than the maximum temperature, by a vacuum injection method or a liquid crystal drop fill method. Next, the polymerizable compound in the polymerizable composition is polymerized by irradiation with heat or ultraviolet light. On the occasion, the dimming layer having the liquid crystal composition and the polymer is formed, and therefore the liquid crystal dimming device can be obtained.

One example of the substrate includes a material that is hard to deform such as a glass plate, a quartz plate and an acrylic plate. Another example includes a flexible transparent plastic film such as an acrylic film and a polycarbonate film. One of the substrates may be an opaque material such as a silicone resin depending on an intended use. The substrate has a transparent electrode thereon. The substrate may have an alignment film or the like on the transparent electrode. Examples of the transparent electrode include tin-doped indium oxide (ITO) or a conductive polymer.

As the alignment layer on the substrate, a thin film of polyimide, polyvinyl alcohol or the like is suitable. For example, a polyimide alignment film can be obtained by applying a polyimide resin composition onto the transparent substrate and thermally curing the resulting material at a temperature of about 180°C or higher, and applying rubbing treatment thereto with a cotton cloth or a rayon cloth, when necessary.

The pair of substrates are faced each other with the transparent electrode layer inward. A spacer may be put therein in order to uniformize a thickness between the substrates. Examples of the spacer include glass particles, plastic particles, alumina particles and photo spacers. A preferred thickness of the dimming layer is about 2 to about 50 micrometers, and further preferably about 5 to about 20 micrometers. A general-purpose sealant can be used for laminating the pair of substrates. Examples of the sealant include an epoxy-based thermally curable composition.

Irradiation with ultraviolet light is preferred for polymerization of the polymerizable compound. Examples of an ultraviolet light irradiation lamp include a metal halide lamp, a high-pressure mercury lamp and an ultra high-pressure mercury lamp. A wavelength of ultraviolet light is preferably in an absorption wavelength region of a photopolymerization initiator when the photopolymerization initiator is used. An absorption wavelength region of the liquid crystal composition is avoided. A preferred wavelength is 330 nm or more. A further preferred wavelength is 350 nm or more. Reaction may be performed in the vicinity of room temperature or by heating.

In such a device, a light-absorbing layer, a diffuse reflection plate or the like can be arranged on a rear surface of the device, when necessary. A function such as specular reflection, diffuse reflection, retroreflection and hologram reflection can also be added thereto.

Such a device has a function as a dimming film or a dimming glass. When the device has a film shape, the device can be attached to an existing window, or interposed between a pair of glass plates into a laminated glass. Such a device is used in a window installed on an outer wall or a partition between a conference room and a hallway. More specifically, the device has an intended use for an electronic blind, a dimming window, a smart window and so forth.

Further, a function as an optical switch can be utilized for a liquid crystal shutter and so forth.

**Examples**

The invention will be described in more detail by way of Examples. The invention is not limited by the Examples. The invention includes a mixture of composition (M1) and composition (M2). The invention also includes a mixture prepared by mixing at least two compositions in Examples. Compounds prepared were identified by methods such as NMR analysis. Characteristics of the compounds, compositions and devices were measured by the methods described below.

NMR analysis: For measurement, DRX-500 made by Bruker BioSpin Corporation was used. In measurement of $^{1}$H-NMR, a sample was dissolved in a deuterated solvent such as $CDCl_3$, and measurement was carried out under conditions of room temperature, 500 MHz and 16 times of accumulation. Tetramethylsilane was used as an internal standard. In measurement of $^{19}$F-NMR, $CFCl_3$ was used as the internal standard, and measurement was carried out under conditions of 24 times of accumulation. In explaining nuclear magnetic resonance spectra obtained, s, d, t, q, quin, sex and m stand for a singlet, a doublet, a triplet, a quartet, a quintet, a sextet and a multiplet, and br being broad, respectively.

Gas chromatographic analysis: For measurement, GC-14B gas chromatograph made by Shimadzu Corporation was used. A carrier gas was helium (2 mL per minute) . A sample vaporizing chamber and a detector (FID) were set to 280 °C and 300 °C, respectively. A capillary column DB-1 (length: 30 m, bore: 0.32 mm, film thickness: 0.25 μm; dimethylpolysiloxane as a stationary phase; non-polar) made by Agilent Technologies, Inc. was used for separation of component compounds. After the column was kept at 200°C for 2 minutes, the column was heated to 280°C at a rate of 5°C per minute. A sample was dissolved in an acetone solution (0.1% by weight), and then 1 microliter of the solution was injected into the sample vaporizing chamber. A recorder used was C-R5A Chromatopac Integrator made by Shimadzu Corporation or an equivalent thereof. The resulting gas chromatogram showed a retention time of a peak and a peak area corresponding to each of the component compounds.

As a solvent for diluting the sample, chloroform, hexane or the like may also be used. The following capillary columns may also be used for separating component compounds: HP-1 (length: 30 m, bore: 0.32 mm, film thickness: 0.25 μm) made by Agilent Technologies, Inc., Rtx-1 (length: 30 m, bore: 0.32 mm, film thickness: 0.25 μm) made by Restek Corporation and BP-1 (length: 30 m, bore: 0.32 mm, film thickness: 0.25 μm) made by SGE International Pty. Ltd. A capillary column CBP1-M50-025 (length: 50 m, bore: 0.25 mm, film thickness: 0.25 μm) made by Shimadzu Corporation may also be used for the purpose of preventing an overlap of peaks of the compounds.

A proportion of liquid crystal compounds contained in the composition may be calculated by a method as described below. A mixture of liquid crystal compounds is analyzed by gas chromatograph (FID). An area ratio of each peak in the gas chromatogram corresponds to the ratio of the liquid crystal compounds. When the capillary columns described above were used, a correction coefficient of each of the liquid crystal compounds may be taken as 1 (one). Accordingly, the proportion (% by weight) of the liquid crystal compounds can be calculated from the area ratio of each peak.

Samples for measurement: A composition itself was used as a sample when the characteristics of the composition or the device were measured. When the characteristics of a compound were measured, a sample for measurement was prepared by mixing this compound (15% by weight) with mother liquid crystals (85% by weight). The characteristic values of the compound were calculated from the values obtained from measurements by an extrapolation method: (Extrapolated value) = [(Measured value of sample) - 0.85 × (Measured value of mother liquid crystals)] / 0.15. When a smectic phase (or crystals) deposited at 25 °C at this ratio, the ratio of the compound to the mother liquid crystals was changed in the order of (10% by weight: 90% by weight), (5% by weight: 95% by weight) and (1% by weight: 99% by weight) . The values of the maximum temperature, the optical anisotropy, the viscosity and the dielectric anisotropy regarding the compound were obtained by means of this extrapolation method.

A base liquid crystal described below was used. A proportion of the component compound was expressed in terms of weight percent (% by weight).

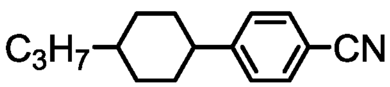

24%

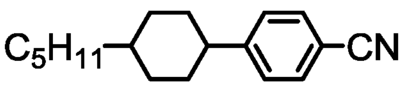

36%

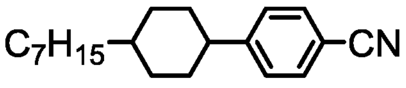

25%

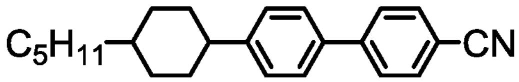

15%

Measuring method: Characteristics were measured according to methods described below. Most of the measuring methods are applied as described in the Standard of Japan Electronics and Information Technology Industries Association (hereinafter abbreviated as JEITA) (JEITA ED-2521B) discussed and established by JEITA, or modified thereon. No thin film transistor (TFT) was attached to a twisted nematic (TN) device used for measurement.

(1) Maximum temperature of nematic phase (NI; °C): A sample was placed on a hot plate in a melting point apparatus equipped with a polarizing microscope, and heated at a rate of 1°C per minute. Temperature when part of the sample began to change from a nematic phase to an isotropic liquid was measured. A maximum temperature of the nematic phase may be occasionally abbreviated as "maximum temperature."

(2) Minimum temperature of nematic phase (Tc; °C): Samples each having a nematic phase were put in glass vials and kept in freezers at temperatures of 0°C, -10°C, -20°C, -30°C and -40°C for 10 days, and then liquid crystal phases were observed. For example, when the sample was maintained in the nematic phase at -20°C and changed to crystals or a smectic phase at -30°C, $T_c$ was described as $T_c$ < -20°C. A minimum temperature of the nematic phase may be occasionally abbreviated as "minimum temperature."

(3) Viscosity (bulk viscosity; η; measured at 20°C; mPa·s): For measurement, a cone-plate (E type) rotational viscometer made by Tokyo Keiki Inc. was used.

(4) Viscosity (rotational viscosity; γ1; measured at 25°C; mPa·s): Measurement was carried out according to a method described in M. Imai et al., Molecular Crystals and Liquid Crystals, Vol. 259, p. 37 (1995) . A sample was poured into a TN device in which a twist angle was 0 degrees, and a distance (cell gap) between two glass substrates was 5 micrometers. Voltage was applied stepwise to the device in the range of 16 V to 19.5 V at an increment of 0.5 V. After a period of 0.2 second with no voltage application, voltage was repeatedly applied under conditions of only one rectangular wave (rectangular pulse; 0.2 second) and no voltage application (2 seconds) . A peak current and a peak time of transient current generated by the applied voltage were measured. A value of rotational viscosity was obtained from the measured values and calculation equation (8) described on page 40 of the paper presented by M. Imai et al. A value of dielectric anisotropy required for the calculation was determined using the device by which the rotational viscosity was measured and by a method described below.

(5) Optical anisotropy (refractive index anisotropy; Δn; measured at 25°C): Measurement was carried out by an Abbe refractometer with a polarizing plate mounted on an ocular, using light at a wavelength of 589 nanometers . A surface of a main prism was rubbed in one direction, and then a sample was added dropwise onto the main prism. A refractive index (n∥) was measured when a direction of polarized light was parallel to a direction of rubbing. A refractive index (n⊥) was measured when the direction of polarized light was perpendicular to the direction of rubbing. A value of optical anisotropy was calculated from an equation: Δn = n∥ - n⊥.

(6) Dielectric anisotropy (Δε; measured at 25°C) : A sample was put in a TN device in which a distance (cell gap) between two glass substrates was 9 micrometers and a twist angle was 80 degrees. Sine waves (10 V, 1 kHz) were applied to the device, and a dielectric constant (ε∥) of liquid crystal molecules in a major axis direction was measured after 2 seconds. Sine waves (0.5 V, 1 kHz) were applied to the device, and a dielectric constant (ε⊥) of liquid crystal molecules in a minor axis direction was measured after 2 seconds. A value of dielectric anisotropy was calculated from an equation: Δε= ε∥ - ε⊥.

(7) Threshold voltage (Vth; measured at 25°C; V) : For measurement, an LCD-5100 luminance meter made by Otsuka Electronics Co., Ltd. was used. A light source was a halogen lamp. A sample was put in a normally white mode TN device in which a distance (cell gap) between two glass substrates was 0.45/Δn (μm) and a twist angle was 80 degrees. Voltage (32 Hz, rectangular waves) to be applied to the device was stepwise increased from 0 V to 10 V at an increment of 0.02 V. On the occasion, the device was vertically irradiated with light, and an amount of light transmitted through the device was measured. A voltage-transmittance curve was prepared, in which the maximum amount of light corresponded to 100% transmittance and the minimum amount of light corresponded to 0% transmittance. Threshold voltage was expressed in terms of voltage at 90% transmittance.

(8) Voltage holding ratio (VHR; measured at 60°C; %) : A TN device used for measurement had a polyimide-alignment film, and a distance (cell gap) between two glass substrates was 5 micrometers. A sample was injected into the TN device, and then the device was sealed with an ultraviolet-curable adhesive. The TN device was put in a constant-temperature bath at 60°C, and charged by applying pulse voltage (1V, 60 microseconds, 3 Hz). A decaying voltage

was measured for 166.6 milliseconds with a high-speed voltmeter, and area A between a voltage curve and a horizontal axis in a unit cycle was obtained. Area B is an area without decay. The voltage holding ratio was expressed in terms of a percentage of area A to area B.

(9) Voltage holding ratio (UV-VHR; measured at 60°C; %) : A TN device into which a sample was injected was irradiated with ultraviolet light at 5 mW for 166.6 minutes using black light as a light source. Stability to ultraviolet light was evaluated by measuring a voltage holding ratio . A constitution of the TN device and a method for measuring the voltage holding ratio were described in section (8). A composition having large UV-VHR has large stability to ultraviolet light. A value of UV-VHR is preferably 90% or more, and further preferably 95% or more.

(10) Voltage holding ratio (heating VHR; measured at 60°C; %): Stability to heat was evaluated by measuring a voltage holding ratio after a TN device into which a sample was injected was heated in a constant-temperature bath at 120°C for 20 hours. A constitution of the TN device and a method for measuring the voltage holding ratio were described in section (8). A composition having a large heating VHR has large stability to heat. A value of the heating VHR is preferably 90% or more, and further preferably 95% or more.

(11) Response time (τ; measured at 25°C; ms) : For measurement, an LCD-5100 luminance meter made by Otsuka Electronics Co., Ltd. was used. A light source was a halogen lamp. A low-pass filter was set to 5 kHz. A sample was put in a normally white mode TN device in which a distance (cell gap) between two glass substrates was 5.0 micrometers and a twist angle was 80 degrees. Rectangular waves (60 Hz, 5 V, 0.5 second) were applied to the device. On the occasion, the device was vertically irradiated with light, and an amount of light transmitted through the device was measured. A transmittance was deemed as 100% when an amount of light reached a maximum. The transmittance was deemed as 0% when an amount of light reached a minimum. A rise time (τr; millisecond) was expressed in terms of time required for a change from 90% transmittance to 10% transmittance. A fall time (τf; millisecond) was expressed in terms of time required for a change from 10% transmittance to 90% transmittance. A response time was expressed in terms of a sum of the rise time and the fall time thus obtained.

(12) Elastic constant (K; measured at 25°C; pN) : For measurement, HP4284A LCR Meter made by Yokogawa-Hewlett-Packard Co. was used. A sample was put in a horizontal alignment device in which a distance (cell gap) between two glass substrates was 20 micrometers. An electric charge of 0 V to 20 V was applied to the device, and electrostatic capacity and applied voltage were measured. Measured values of the electrostatic capacity (C) and the applied voltage (V) were fitted to equation (2.98) and equation (2.101) on page 75 of "Liquid Crystal Device Handbook" (Ekisho Debaisu Handobukku in Japanese; Nikkan Kogyo Shimbun, Ltd.), and values of K11 and K33 were obtained from equation (2.99) . Next, K22 was calculated using the previously determined values of K11 and K33 in equation (3.18) on page 171. An elastic constant was expressed in terms of a mean value of the thus determined K11, K22 and K33.

(13) Specific resistance (ρ; measured at 25°C; Ω cm): Then, 1.0 mL of a sample was put in a vessel equipped with electrodes. DC voltage (10 V) was applied to the vessel, and DC current after 10 seconds was measured. Specific resistance was calculated from the following equation:

(Specific resistance) = {(voltage) × (electric capacity of vessel)} / {(DC current) × (dielectric constant in vacuum)} (equation 1)

(14) Helical pitch (P; measured at room temperature; μm) : A helical pitch was measured by a wedge method. Refer to page 196 in "Handbook of Liquid Crystals (Ekisho Binran in Japanese)" (issued in 2000, Maruzen Co., Ltd.) . A sample was injected into a wedge cell and left to stand at room temperature for 2 hours, and then a gap (d2 - d1) between disclination lines was observed with a polarizing microscope (trade name: MM40/60 Series, Nikon Corporation). A helical pitch (P) was calculated according to the following equation in which an angle of the wedge cell was expressed as θ: $P = 2 \times (d2 - d1) \times \tan\theta$.

(15) Dielectric constant in a minor axis direction (ε⊥; measured at 25°C): A sample was put in a TN device in which a distance (cell gap) between two glass substrates was 9 micrometers and a twist angle was 80 degrees. Sine waves (0.5 V, 1 kHz) were applied to the device, and after 2 seconds, a dielectric constant (ε⊥) of liquid crystal molecules in a minor axis direction was measured.

(16) Alignment stability (stability of a liquid crystal alignment axis) : A change of a liquid crystal alignment axis of a fringe field switching (FFS) device on an electrode side was evaluated. A liquid crystal alignment angle φ(before) before stress application on the electrode side was measured, and then rectangular waves (4.5 V, 60 Hz) were applied to the device for 20 minutes, and then the device was short-circuited for 1 second, and after 1 second and 5 minutes, a liquid crystal alignment angle φ(after) on the electrode side was measured again. A change Δφ (deg.)

of the liquid crystal alignment angle after 1 second and 5 minutes was calculated from values thereof by using the following equation:

$$\Delta\varphi \text{ (deg.)} = \varphi\text{(after)} - \varphi\text{(before)} \quad \text{(equation 2).}$$

Measurements thereof were carried out with reference to J. Hilfiker, B. Johs, C. Herzinger, J. F. Elman, E. Montbach, D. Bryant, and P. J. Bos, Thin Solid Films, 455-456, (2004) 596-600. A smaller value of $\Delta\varphi$ indicates a smaller rate of change of the liquid crystal alignment axis, which reasonably indicates that the stability of the liquid crystal alignment axis is better.

(17) Flicker rate (measured at 25°C; %): For measurement, 3298F Multimedia Display Tester made by Yokogawa Electric Corporation was used. A light source was LED. A sample was put in a normally black mode device in which a distance (cell gap) between two glass substrates was 3.5 micrometers and a rubbing direction was antiparallel. The device was sealed with an ultraviolet-curable adhesive. Voltage was applied to the device and the voltage was measured when an amount of light transmitted through the device reached a maximum. A sensor portion was brought close to the device while the voltage was applied to the device, and a flicker rate indicated was recorded.

(18) Haze rate (%) : For measurement of a haze rate, Haze Meter NDH 5000 (made by Nippon Denshoku Industries Co., Ltd) was used.

Examples of compositions will be described below. The component compounds were represented using symbols according to definitions in Table 3 described below. In Table 3, the configuration of 1,4-cyclohexylene is trans. A parenthesized number next to a symbolized compound represents a chemical formula to which the compound belongs. A symbol (-) means any other liquid crystal compound. A proportion (percentage) of the liquid crystal compound is expressed in terms of weight percent (% by weight) based on the weight of the liquid crystal composition containing no additive. Values of the characteristics of the composition are summarized in a last part.

Table 3. Method of description of compounds using symbols R-($A_1$)-$Z_1$-·····-$Z_n$-($A_n$)-R'

| 1) Left-terminal group R- | Symbol | 4) Ring structure -$A_n$- | Symbol |
|---|---|---|---|
| $C_nH_{2n+1}$-<br>$C_nH_{2n+1}O$- | n-<br>nO- | 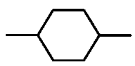 | H |
| $C_mH_{2m+1}OC_nH_{2n}$-<br>$CH_2$=CH- | mOn-<br>V- | 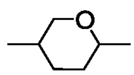 | dh |
| $C_nH_{2n+1}$-CH=CH-<br>$CH_2$=CH-$C_nH_{2n}$- | nV-<br>Vn- | 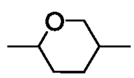 | Dh |
| $C_mH_{2m+1}$-CH=CH-$C_nH_{2n}$-<br>$CF_2$=CH- | mVn-<br>VFF- | 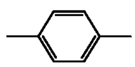 | B |
| $CF_2$=CH-$C_nH_{2n}$-<br>F-$C_nH_{2n}$- | VFFn-<br>Fn- | 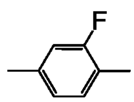 | B(F) |
| 2) Right-terminal group -R' | Symbol | | |
| -$C_nH_{2n+1}$<br>-$OC_nH_{2n+1}$<br>-CH=$CH_2$ | -n<br>-On<br>-V | 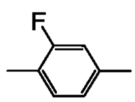 | B(2F) |
| -CH=CH-$C_nH_{2n+1}$<br>-$C_nH_{2n}$-CH=$CH_2$<br>-$C_mH_{2m}$-CH=CH-$C_nH_{2n+1}$ | -Vn<br>-nV<br>-mVn | 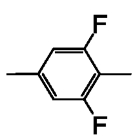 | B(F,F) |
| -CH=$CF_2$<br>-$COOCH_3$<br>-F<br>-Cl | -VFF<br>-EMe<br>-F<br>-CL | 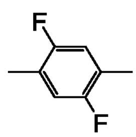 | B(2F,5F) |

(continued)

| 1) Left-terminal group R- | Symbol | 4) Ring structure $-A_n-$ | Symbol |
|---|---|---|---|
| $-OCF_3$ | -OCF3 | 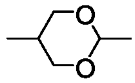 | G |
| $-CF_3$ | -CF3 | | |
| -CN | -C | 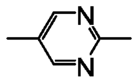 | Py |
| 3) Bonding group $-Z_n-$ | Symbol | | |
| $-C_nH_{2n}-$ | n | | |
| -COO- | E | 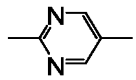 | PY |
| -CH=CH- | V | | |
| -C≡C- | T | 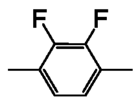 | B(2F) |
| $-CF_2O-$ | X | | |
| $-CH_2O-$ | 1O | | |
| 5) Examples of description | | | |
| Example 1. 3-HH-V | | Example 2. 3-HHB(2F,3F)-O2 | |
| 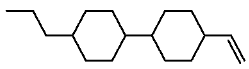 | | 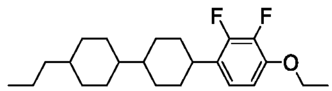 | |
| Example 3. 4-GB(F)B(F,F)XB(F,F)-F | | Example 4. 2-BB(F)B(F,F)-F | |
| 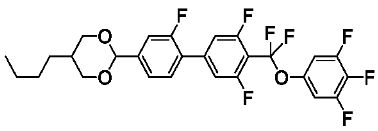 | | 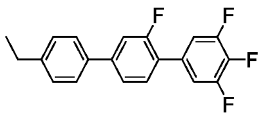 | |

Composition M1

| | | |
|---|---|---|
| 5-BB-C | (1-2) | 34% |
| 2-HHB-C | (1-9) | 5% |
| 3-HHB-C | (1-9) | 5% |
| 3-HHB(F)-C | (1-9) | 14% |
| 3-HHXB(F,F)-F | (1-13) | 1% |
| 2-HBB-F | (1-16) | 5% |
| 3-HBB-F | (1-16) | 5% |
| 5-HBB-F | (1-16) | 5% |
| 3-HBB(F)-F | (1-16) | 4% |
| 3-HB-O2 | (2-2) | 15% |
| 3-BB(2F,5F)B-3 | (2-13) | 7% |

NI = 89.3°C; Tc < -30°C; $\Delta n$ = 0.171; $\Delta\varepsilon$ = 9.5; Vth = 1.87 V.

Composition M2

| | | |
|---|---|---|
| 3-BB(F,F)XB(F,F)-F | (1-28) | 13% |
| 3-BB(F,F)XB(F)B(F,F)-F | (1-42) | 13% |
| 3-HB-O2 | (2-2) | 10% |
| 7-HB-1 | (2-2) | 4% |
| 1-BB-3 | (2-3) | 10% |
| 2-BB(F)B-3 | (2-12) | 5% |
| 2-BB(F)B-5 | (2-12) | 7% |
| 3-BB(F)B-5 | (2-12) | 7% |
| 3-BB(2F,5F)B-3 | (2-13) | 8% |
| 5-HBB(F)B-2 | (2-21) | 12% |
| 5-HBB(F)B-3 | (2-21) | 11% |

NI = 103.4°C; Tc < -20°C; Δn = 0.202; Δε = 6.0; Vth = 2.46 V.

Composition M3

| | | |
|---|---|---|
| 3-HHB(F,F)-F | (1-9) | 8% |
| 2-HHB(F)-F | (1-9) | 15% |
| 3-HHB(F)-F | (1-9) | 15% |
| 5-HHB(F)-F | (1-9) | 15% |
| 3-HHB-F | (1-9) | 5% |
| 3-HH-4 | (2-1) | 12% |
| 3-HB-O2 | (2-2) | 10% |
| 3-HHEBH-3 | (2-19) | 7% |
| 3-HHEBH-4 | (2-19) | 7% |
| 3-HHEBH-5 | (2-19) | 6% |

NI = 139.7°C; Tc < -10°C; Δn = 0.081; Δε = 2.9; Vth = 2.55 V.

Composition M4

| | | |
|---|---|---|
| 2-HBB-F | (1-16) | 4% |
| 3-HBB-F | (1-16) | 4% |
| 5-HBB-F | (1-16) | 3% |
| 3-BB(F)B(F,F)XB(F,F)-F | (1-41) | 3% |
| 3-BB(F,F)XB(F)B(F,F)-F | (1-42) | 9% |
| 3-HH-V | (2-1) | 12% |
| 3-HB-O2 | (2-2) | 13% |
| 3-HHB-1 | (2-9) | 4% |

(continued)

| | | |
|---|---|---|
| 3-HHB-O1 | (2-9) | 3% |
| V-HHB-1 | (2-9) | 8% |
| 2-BB(F)B-5 | (2-12) | 5% |
| 3-BB(F)B-5 | (2-12) | 10% |
| 5-HBB(F)B-2 | (2-21) | 11% |
| 5-HBB(F)B-3 | (2-21) | 11% |

NI = 139.6°C; Tc < -20°C; Δn = 0.167; Δε = 2.9; Vth = 3.37 V.

Composition M5

| | | |
|---|---|---|
| 3-BB(F,F)XB(F,F)-F | (1-28) | 12% |
| 3-BB(F)B(F,F)XB(F,F)-F | (1-41) | 3% |
| 4-BB(F)B(F,F)XB(F,F)-F | (1-41) | 6% |
| 3-BB(F,F)XB(F)B(F,F)-F | (1-42) | 13% |
| 2-HH-3 | (2-1) | 12% |
| 3-HB-O2 | (2-2) | 7% |
| 3-HHB-1 | (2-9) | 7% |
| 3-HHB-O1 | (2-9) | 4% |
| 3-HBB-2 | (2-10) | 5% |
| 2-BB(F)B-3 | (2-12) | 8% |
| 2-BB(F)B-5 | (2-12) | 8% |
| 3-BB(F)B-5 | (2-12) | 8% |
| 3-BB(2F,5F)B-3 | (2-13) | 7% |

NI = 90.7°C; Tc < -20°C; Δn = 0.170; Δε = 8.6; Vth = 1.88 V.

Composition M6

| | | |
|---|---|---|
| 2-BB-C | (1-2) | 15% |
| 5-BB-C | (1-2) | 15% |
| 2-BEB-C | (1-8) | 10% |
| 2-BEB(F)-C | (1-8) | 5% |
| 2-HHB(F)-C | (1-9) | 10% |
| 3-HHB(F)-C | (1-9) | 15% |
| 3-HHXB(F,F)-F | (1-13) | 1% |
| 3-HBB-2 | (2-10) | 9% |
| 3-BB(2F,5F)B-3 | (2-13) | 7% |
| 5-HBB(F)B-2 | (2-21) | 13% |

NI = 114.2°C; Tc < -20°C; Δn = 0.202; Δε = 16.1; Vth = 1.52 V.

Composition M7

| | | |
|---|---|---|
| 2-HB(F)-C | (1-1) | 10% |
| 3-HB(F)-C | (1-1) | 9% |
| 2-HHB(F)-F | (1-9) | 6% |
| 3-HHB(F)-F | (1-9) | 6% |
| 5-HHB(F)-F | (1-9) | 6% |
| 2-HHB(F)-C | (1-9) | 6% |
| 3-HHB(F)-C | (1-9) | 6% |
| 3-HHB-F | (1-9) | 4% |
| 3-HEB-O4 | (2-4) | 6% |
| 4-HEB-O2 | (2-4) | 4% |
| 5-HEB-O1 | (2-4) | 4% |
| 3-HEB-O2 | (2-4) | 3% |
| 5-HEB-O2 | (2-4) | 3% |
| 3-HHB-3 | (2-9) | 10% |
| 2-HHB-1 | (2-9) | 5% |
| 3-HHB-1 | (2-9) | 8% |
| 3-HHB-O1 | (2-9) | 4% |

NI = 102.0°C; Tc < -40°C; Δn = 0.096; Δε = 6.7; Vth = 1.92 V.

**Composition M8**

| | | |
|---|---|---|
| 3-PyB (F) -F | (1-3) | 5% |
| 2-HHB(F)-C | (1-9) | 8% |
| 3-HHB(F)-C | (1-9) | 8% |
| 3-BB(F)B(F,F)-F | (1-24) | 6% |
| 4-BB(F)B(F,F)XB(F,F)-F | (1-41) | 7% |
| 2-BTB-O1 | (2-6) | 6% |
| 3-BTB-O1 | (2-6) | 6% |
| 4-BTB-O1 | (2-6) | 6% |
| 4-BTB-O2 | (2-6) | 6% |
| 5-BTB-O1 | (2-6) | 5% |
| 2-BTB-1 | (2-6) | 7% |
| 2-BTB-3 | (2-6) | 6% |
| 3-HB(F)TB-2 | (2-16) | 10% |
| 3-HB(F)TB-3 | (2-16) | 11% |

(continued)

| | | |
|---|---|---|
| 3-HBPY-2 | (2-17) | 3% |

NI = 92.1°C; Tc < -20°C; Δn = 0.228; Δε = 7.4; Vth = 1.90 V.

**Composition M9**

| | | |
|---|---|---|
| 7-HB(F)-F | (1-1) | 3% |
| 3-HB-Cl | (1-1) | 3% |
| 5-pyB-F | (1-3) | 3% |
| 2-HHB(F)-C | (1-9) | 3% |
| 3-HHB(F)-C | (1-9) | 4% |
| 3-HB(F)B(F,F)-F | (1-17) | 4% |
| 3-H2BB(F)-F | (1-18) | 3% |
| 4-BB(F)B(F,F)XB(F,F)-F | (1-41) | 3% |
| 3-BB(2F,3F)BXB(F,F)-F | (1-47) | 3% |
| 5-HB-O2 | (2-2) | 5% |
| 3-BTB-O1 | (2-6) | 6% |
| 4-BTB-O1 | (2-6) | 6% |
| 4-BTB-O2 | (2-6) | 6% |
| 2-BTB-3 | (2-6) | 3% |
| 2-BPY-2 | (2-7) | 3% |
| 2-BPY-3 | (2-7) | 3% |
| 2-BPY-4 | (2-7) | 3% |
| 4-HHEH-5 | (2-8) | 3% |
| 2-B2BB-3 | (2-14) | 5% |
| 3-HB(F)TB-2 | (2-16) | 10% |
| 3-HB(F)TB-3 | (2-16) | 8% |
| 3-HBPY-2 | (2-17) | 3% |
| 2-HBPY-3 | (2-17) | 3% |
| 5-HB(F)BH-3 | (2-20) | 4% |

NI = 90.3°C; Δn = 0.192; Δε = 5.0; Vth = 2.29 V.

**Composition M10**

| | | |
|---|---|---|
| 7-HB(F,F)-F | (1-1) | 3% |
| 3-HB-C | (1-1) | 3% |
| 5-HB-C | (1-1) | 3% |
| 2-BB-C | (1-2) | 10% |

(continued)

| | | |
|---|---|---|
| 5-BB-C | (1-2) | 10% |
| 5-HEB-F | (1-6) | 3% |
| 5-HXB(F,F)-F | (1-7) | 5% |
| 2-BEB-C | (1-8) | 3% |
| 2-BEB(F)-C | (1-8) | 5% |
| 3-HHB(F)-F | (1-9) | 6% |
| 3-HHB-Cl | (1-9) | 3% |
| 3-HHXB(F,F)-F | (1-13) | 3% |
| 4-HH2BB(F,F)-F | (1-39) | 3% |
| 1-BB-5 | (2-3) | 2% |
| 4-BTB-O2 | (2-6) | 3% |
| 3-HBB-2 | (2-10) | 6% |
| V-HBB-2 | (2-10) | 3% |
| 5-B(F)BB-2 | (2-11) | 3% |
| 3-BB(2F,5F)B-3 | (2-13) | 7% |
| 5-HBB(F)B-2 | (2-21) | 13% |
| 3-HBBH-5 | (2-22) | 3% |

NI = 114.2°C; Δn = 0.194; Δε = 13.9; Vth = 1.65 V.

**Composition M11**

| | | |
|---|---|---|
| 7-HBB(F)-F | (1-16) | 3% |
| 3-HBB(F,F)-F | (1-16) | 3% |
| 5-HBB(F,F)-F | (1-16) | 3% |
| 3-BB(F,F)B-F | (1-25) | 4% |
| 3-BB(F,F)XB(F,F)-F | (1-28) | 12% |
| 3-BB(F,F)XB(F)-OCF3 | (1-28) | 6% |
| 2-HHBB(F,F)-F | (1-29) | 3% |
| 3-HHBB(F,F)-F | (1-29) | 3% |
| 3-BB(F)B(F,F)XB(F)-F | (1-41) | 3% |
| 3-BB(F)B(F,F)XB(F)B(F,F)-F | (1-43) | 4% |
| 3-BB(2F,3F)XB(F,F)-F | (1-44) | 3% |
| 3-HB-O2 | (2-2) | 5% |
| 1O-BEB-5 | (2-5) | 3% |
| 3-HHEH-3 | (2-8) | 3% |
| 2-BB(F)B-3 | (2-12) | 3% |
| 2-BB(F)B-5 | (2-12) | 6% |
| 3-BB(F)B-2V | (2-12) | 6% |

(continued)

| | | |
|---|---|---|
| 3-BB(2F,5F)B-3 | (2-13) | 5% |
| 3-HBPY-3 | (2-17) | 5% |
| 4-HBPY-3 | (2-17) | 4% |
| 5-HBB(F)B-2 | (2-21) | 3% |
| 5-HBB(F)B-3 | (2-21) | 10% |

NI = 115.6°C; Δn = 0.198; Δε = 7.8; Vth = 2.31 V.

**Composition M12**

| | | |
|---|---|---|
| 5-HB-Cl | (1-1) | 3% |
| 5-H2B(F)-F | (1-5) | 3% |
| 5-HHB(F,F)-F | (1-9) | 3% |
| 3-HHB-OCF3 | (1-9) | 3% |
| 3-BB(F,F)XB(F,F)-F | (1-28) | 6% |
| 3-GB(F)B(F,F)XB(F,F)-F | (1-36) | 3% |
| 5-GB(F)B(F,F)XB(F,F)-F | (1-36) | 3% |
| 4-GBB(F,F)XB(F,F)-F | (1-37) | 3% |
| 3-BB(F)B(F,F)XB(F,F)-F | (1-41) | 3% |
| 4-BB(F)B(F,F)XB(F,F)-F | (1-41) | 6% |
| 3-BB(F,F)XB(F)B(F,F)-F | (1-42) | 3% |
| 2-HH-5 | (2-1) | 3% |
| 3-HH-5 | (2-1) | 3% |
| 1V2-HH-3 | (2-1) | 4% |
| 2O-BPY-2 | (2-7) | 3% |
| 3-HHB-O1 | (2-9) | 4% |
| 1-BB(F)B-2V | (2-12) | 8% |
| 2-BB(F)B-2V | (2-12) | 7% |
| 3-BB(F)B-2V | (2-12) | 7% |
| 2-BB(2F,5F)B-2 | (2-13) | 3% |
| 3-BB(2F,5F)B-3 | (2-13) | 3% |
| 2-B2BB-3 | (2-14) | 3% |
| 3-B2BTB-2 | (2-15) | 3% |
| 3-HB(F)HH-5 | (2-18) | 3% |
| 5-HBB(F)B-2 | (2-21) | 3% |
| 5-BB(2F)BBm-2 | (2-23) | 4% |

NI = 108.9°C; Δn = 0.190; Δε = 8.5; Vth = 1.90 V.

**Composition M13**

| | | |
|---|---|---|
| 7-HB-C | (1-1) | 3% |
| 5-HB(F)-C | (1-1) | 3% |
| 5-pyB (F) -F | (1-3) | 3% |
| 3-GB-C | (1-4) | 3% |
| 4-GB-C | (1-4) | 3% |
| 4-HHB-C | (1-9) | 3% |
| 5-HHB-C | (1-9) | 3% |
| 3-BB(F)B(F,F)-CF3 | (1-24) | 3% |
| 5-GBB(F,F)XB(F,F)-F | (1-37) | 3% |
| 3-HHEBB-F | (1-40) | 4% |
| 3-B(2F,3F)BXB(F,F)-F | (1-45) | 3% |
| 3-HH-V1 | (2-1) | 3% |
| 3-HH-VFF | (2-1) | 3% |
| 1-BTB-3 | (2-6) | 5% |
| 2-BTB-1 | (2-6) | 6% |
| 2-BPY-2 | (2-7) | 3% |
| 2-BPY-3 | (2-7) | 3% |
| 2-BPY-4 | (2-7) | 3% |
| V2-HHB-1 | (2-9) | 3% |
| VFF-HHB-1 | (2-9) | 3% |
| VFF2-HHB-1 | (2-9) | 3% |
| 3-HB(F)TB-2 | (2-16) | 9% |
| 3-HB(F)TB-3 | (2-16) | 8% |
| 3-HB(F)TB-4 | (2-16) | 6% |
| 4-HBPY-2 | (2-17) | 3% |
| 3-HBB(2F,3F)-O2 | (3-10) | 5% |

NI = 98.6°C; $\Delta n$ = 0.181; $\Delta\varepsilon$ = 5.5; Vth = 2.02 V.

**Composition M14**

| | | |
|---|---|---|
| 4-BB-C | (1-2) | 10% |
| 5-HEB(F,F)-F | (1-6) | 3% |
| 2-BEB-C | (1-8) | 10% |
| 5-BEB(F)-C | (1-8) | 5% |
| 3-HHB(F)-F | (1-9) | 9% |
| 5-HBB-C | (1-16) | 10% |

(continued)

| | | |
|---|---|---|
| 5-HBEB(F,F)-F | (1-20) | 3% |
| 3-GB(F)B(F)-F | (1-21) | 3% |
| 3-pyBB-F | (1-26) | 3% |
| 5-HHBB(F,F)-F | (1-29) | 3% |
| 3-GBB(F)B(F,F)-F | (1-32) | 3% |
| 3-HBBXB(F,F)-F | (1-33) | 3% |
| 3-HBB (F,F)XB (F,F) -F | (1-34) | 3% |
| 3-dhBB(F,F)XB(F,F)-F | (1-35) | 3% |
| 1V2-HH-1 | (2-1) | 3% |
| V-HH-V1 | (2-1) | 4% |
| V2-HHB-1 | (2-9) | 3% |
| V-HBB-2 | (2-10) | 4% |
| 2-BB(2F,5F)B-2 | (2-13) | 4% |
| 5-HBB(F)B-3 | (2-21) | 5% |
| 3-HBBH-5 | (2-22) | 3% |
| 1O1-HBBH-5 | (-) | 3% |

NI = 136.8°C; Δn = 0.191; Δε = 17.0; Vth = 1.34 V.

**Composition M15**

| | | |
|---|---|---|
| 2-HHB(F,F)-F | (1-9) | 3% |
| 3-HHEB-F | (1-10) | 3% |
| 5-pyBB-F | (1-26) | 3% |
| 3-BBXB(F,F)-F | (1-27) | 4% |
| 3-BB(F,F)XB(F,F)-F | (1-28) | 6% |
| 3-GB(F)B(F)B(F)-F | (1-31) | 3% |
| 5-HBBXB(F,F)-F | (1-33) | 4% |
| 3-BB(F)B(F,F)XB(F)-F | (1-41) | 7% |
| 3-BB(F,F)XB(F)B(F,F)-F | (1-42) | 5% |
| 3-BB(F)B(F,F)XB(F)B(F,F)-F | (1-43) | 4% |
| 3-BB(2F,3F)BXB(F,F)-F | (1-47) | 4% |
| 2-HH-3 | (2-1) | 5% |
| 3-HB-O2 | (2-2) | 5% |
| 3-HHB-1 | (2-9) | 4% |
| 3-HHB-O1 | (2-9) | 4% |
| 3-HBB-2 | (2-10) | 5% |
| 2-BB(F)B-3 | (2-12) | 8% |
| 2-BB(F)B-5 | (2-12) | 8% |

(continued)

| | | |
|---|---|---|
| 3-BB(F)B-5 | (2-12) | 8% |
| 3-BB(2F,5F)B-3 | (2-13) | 7% |

NI = 110.5°C; Δn = 0.189; Δε = 8.8; Vth = 1.80 V.

**Composition M16**

| | | |
|---|---|---|
| 3-HHEB(F,F)-F | (1-10) | 3% |
| 2-HBB-F | (1-16) | 3% |
| 3-HBB-F | (1-16) | 3% |
| 5-HBB-F | (1-16) | 3% |
| 3-H2BB(F,F)-F | (1-18) | 3% |
| 3-GB(F)B(F,F)-F | (1-21) | 3% |
| 3-GB(F,F)XB(F)-F | (1-22) | 3% |
| 3-GB(F,F)XB(F,F)-F | (1-22) | 3% |
| 3-BB(F)B(F,F)XB(F,F)-F | (1-41) | 3% |
| 3-HH-V | (2-1) | 10% |
| 1-BB-3 | (2-3) | 5% |
| 3-BTB-O1 | (2-6) | 5% |
| 4-BTB-O1 | (2-6) | 3% |
| 4-BTB-O2 | (2-6) | 4% |
| 5-BTB-O1 | (2-6) | 4% |
| 3-HHB-1 | (2-9) | 4% |
| V-HBB-2 | (2-10) | 3% |
| 2-BB(F)B-5 | (2-12) | 4% |
| 3-BB(F)B-5 | (2-12) | 5% |
| 3-BB(F)B-2V | (2-12) | 6% |
| 5-HBB(F)B-2 | (2-21) | 10% |
| 5-HBB(F)B-3 | (2-21) | 10% |

NI = 122.9°C; Δn = 0.187; Δε = 3.5; Vth = 3.09 V.

**Composition M17**

| | | |
|---|---|---|
| 5-H2HB(F,F)-F | (1-11) | 3% |
| 3-HH2B(F,F)-F | (1-12) | 3% |
| 5-HH2B(F,F)-F | (1-12) | 3% |
| 3-HHXB(F)-F | (1-13) | 3% |
| 1-HHXB(F,F)-F | (1-13) | 3% |

(continued)

| | | |
|---|---|---|
| 3-BB(F,F)XB(F)B(F,F)-F | (1-42) | 13% |
| 7-HB-1 | (2-2) | 4% |
| 5-HB-O2 | (2-2) | 8% |
| 1-BB-3 | (2-3) | 10% |
| 2-BB(F)B-3 | (2-12) | 5% |
| 2-BB(F)B-5 | (2-12) | 7% |
| 3-BB(F)B-5 | (2-12) | 7% |
| 3-BB(2F,5F)B-3 | (2-13) | 8% |
| 5-HBB(F)B-2 | (2-21) | 12% |
| 5-HBB(F)B-3 | (2-21) | 11% |

NI = 116.3°C; $\Delta n$ = 0.197; $\Delta\varepsilon$ = 4.2; Vth = 2.67 V.

**Composition M18**

| | | |
|---|---|---|
| 3-BB(F,F)XB(F,F)-F | (1-28) | 18% |
| 3-BB(F,F)XB(F)B(F,F)-F | (1-42) | 13% |
| 3-HB-O2 | (2-2) | 10% |
| 1-BB-3 | (2-3) | 9.5% |
| 2-BB(F)B-3 | (2-12) | 5% |
| 2-BB(F)B-5 | (2-12) | 7% |
| 3-BB(F)B-5 | (2-12) | 7% |
| 3-BB(2F,5F)B-3 | (2-13) | 7.5% |
| 5-HBB(F)B-2 | (2-21) | 12% |
| 5-HBB(F)B-3 | (2-21) | 11% |

NI = 104.4°C; Tc < -20°C; $\Delta n$ = 0.206; $\Delta\varepsilon$ = 7.6; Vth = 2.27 V; $\eta$ = 53.2 mPa·s.

Polymerizable compounds (RM-1) to (RM-14) to be used in Examples will be described below.

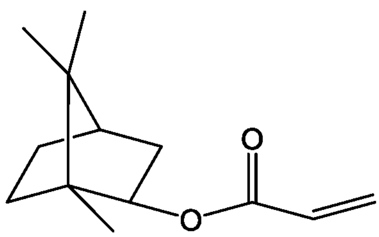

(RM-1)

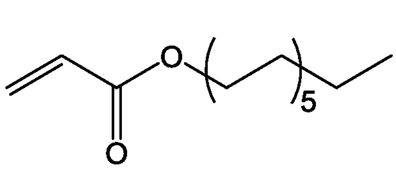

(RM-2)

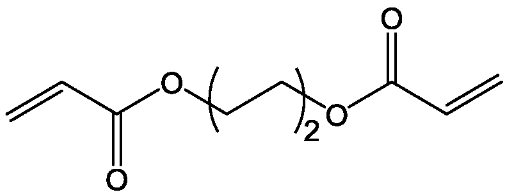
(RM-3)

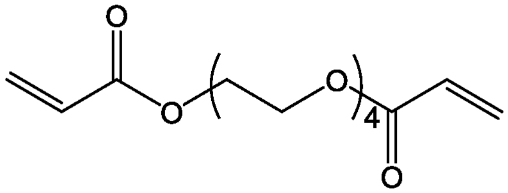
(RM-4)

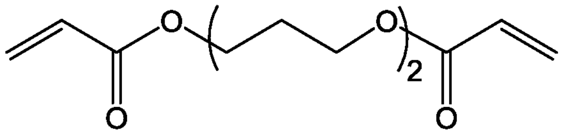
(RM-5)

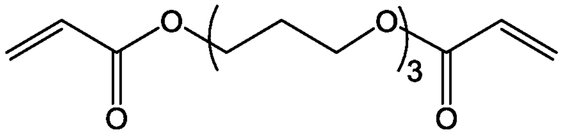
(RM-6)

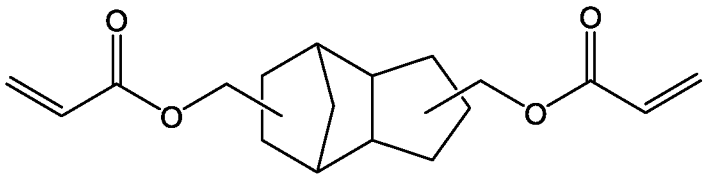
(RM-7)

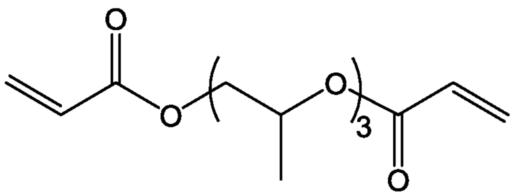
(RM-8)

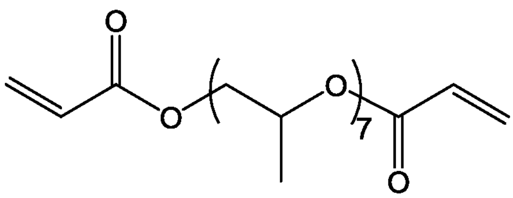
(RM-9)

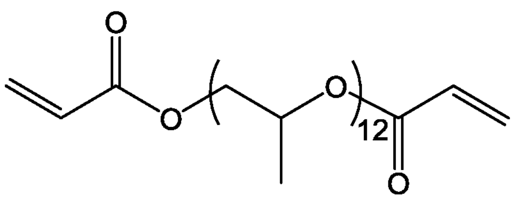
(RM-10)

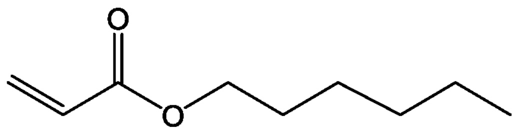

(RM-11)

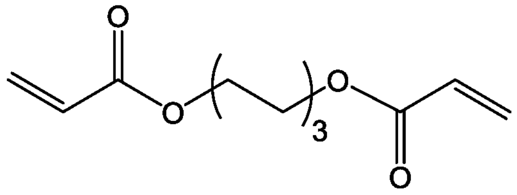

(RM-12)

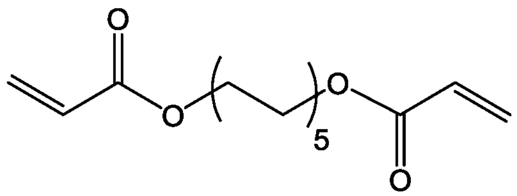

(RM-13)

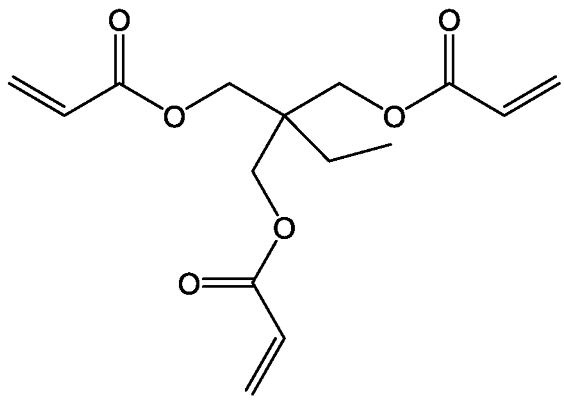

(RM-14)

**Example 1**

Preparation of liquid crystal dimming device

Irgacure 651 (registered trademark; BASF) being a photopolymerization initiator was added to composition (M1) having positive dielectric anisotropy in a proportion of 0.3% by weight based on composition (M1) to prepare mixture (M1). Then, 60% by weight of mixture (M1), 32% by weight of polymerizable compound (RM-1) and 8% by weight of polymerizable compound (RM-5) were mixed to prepare a polymerizable composition. The polymerizable composition was injected into a device in which a distance (cell gap) between two glass substrates was 5 micrometers. The device was irradiated with ultraviolet light of 1 J at 365 nm to prepare a device having a liquid crystal composite. The device was opaque. When a voltage of 30 V was applied to the device, and the device was irradiated with light, the device became transparent. As a result, the device was found to be in a normal mode.

**Examples 2 to 14**

In Examples 2 to 7, composition (M1), Irgacure 651, polymerizable compound (RM-1) and so forth were used to prepare a device in the same procedure as in Example 1. In the Examples, Irgacure 651 was added in a proportion of 0.3% by weight based on composition (M1). On the other hand, in Examples 8 to 14, Irgacure 651 was added in a proportion of 1.2% by weight based on composition (M1). The results are summarized in Table 4. The devices were opaque when no voltage was applied, and were transparent when voltage was applied. As a result, all the devices were found to be in a normal mode.

Table 4. Preparation of liquid crystal dimming devices

| Example | Mixture (60% by weight) | | Polymerizable compound (40% by weight) | | Dimming device | |
|---|---|---|---|---|---|---|
| | Composition | Irgacure 651 (amount of addition) | 32% by weight | 8% by weight | No voltage application | Voltage application |
| 1 | Composition (M1) | 0.3% by weight | RM-1 | RM-5 | Opaque | Transparent |
| 2 | Composition (M1) | 0.3% by weight | RM-1 | RM-6 | Opaque | Transparent |
| 3 | Composition (M1) | 0.3% by weight | RM-1 | RM-7 | Opaque | Transparent |
| 4 | Composition (M1) | 0.3% by weight | RM-1 | RM-8 | Opaque | Transparent |
| 5 | Composition (M1) | 0.3% by weight | RM-1 | RM-9 | Opaque | Transparent |
| 6 | Composition (M1) | 0.3% by weight | RM-1 | RM-10 | Opaque | Transparent |
| 7 | Composition (M1) | 0.3% by weight | RM-2 | RM-10 | Opaque | Transparent |
| 8 | Composition (M1) | 1.2% by weight | RM-1 | RM-4 | Opaque | Transparent |
| 9 | Composition (M1) | 1.2% by weight | RM-1 | RM-5 | Opaque | Transparent |
| 10 | Composition (M1) | 1.2% by weight | RM-1 | RM-6 | Opaque | Transparent |
| 11 | Composition (M1) | 1.2% by weight | RM-1 | RM-7 | Opaque | Transparent |
| 12 | Composition (M1) | 1.2% by weight | RM-1 | RM-8 | Opaque | Transparent |
| 13 | Composition (M1) | 1.2% by weight | RM-1 | RM-9 | Opaque | Transparent |
| 14 | Composition (M1) | 1.2% by weight | RM-1 | RM-10 | Opaque | Transparent |
| Note) An amount of addition of Irgacure 651 is expressed in terms of % by weight based on the composition. | | | | | | |

A polymerizable composition can be prepared by using composition (M2) to composition (M17) in place of composition (M1) to further prepare a device having a liquid crystal composite in the same manner as in Example 1. The devices are expected to be in a normal mode.

**Example 15**

Measurement of haze rate

Irgacure 651 being a photopolymerization initiator was added to composition (M1) having positive dielectric anisotropy in a proportion of 0.3% by weight based on composition (M1) to prepare mixture (M1). Then, 60% by weight of mixture (M1), 36% by weight of polymerizable compound (RM-1) and 4% by weight of polymerizable compound (RM-4) were mixed to prepare a polymerizable composition. The polymerizable composition was injected into a device in which a distance (cell gap) between two glass substrates was 15 micrometers. The device was irradiated with ultraviolet light of 1 J at 365 nm to prepare a device having a liquid crystal composite. The device was installed in a haze meter in

such a manner that the device was perpendicular to incident light. Voltage in the range of 0 to 70 V was applied to the device, and a haze rate was measured. The haze rate was 70% (opaque) when no voltage was applied. The haze rate was 10% (transparent) when a voltage of 70 V was applied.

**Examples 16 to 24**

In Examples 16 to 24, composition (M1) or composition (M18), Irgacure 651 and two kinds of polymerizable compounds were used to prepare a device in the same procedure as in Example 15. In the compositions, a device in which a cell gap was 7 to 15 micrometers was used. A device having a suitable cell gap was selected according to a polymerizable composition to be used. A haze rate was measured also in the devices in the same procedure as in Example 15. The results are summarized in Table 5. The haze rate had voltage dependence. Then, a value of the smallest haze rate was described together with a value of voltage.

**Table 5. Haze rate of liquid crystal dimming devices (mixture : polymerizable compound = 60 : 40)**

| Example | Mixture (60% by weight) | | Polymerizable compound (40% by weight) | | Dimming device | | |
|---|---|---|---|---|---|---|---|
| | Composition | Irgacure 651 (amount of addition) | Polymerizable compound 1 (% by weight) | Polymerizable compound 2 (% by weight) | Haze rate (%) No voltage application | Haze rate (%) Voltage application | Cell gap (μm) |
| 15 | Composition (M1) | 0.3% by weight | RM-1 (36) | RM-4 (4) | 70 | 10 (70 V) | 15 |
| 16 | Composition (M1) | 0.3% by weight | RM-2 (34) | RM-13 (6) | 60 | 15 (80 V) | 15 |
| 17 | Composition (M1) | 1.2% by weight | RM-1 (35) | RM-10 (5) | 75 | 9 (65 V) | 15 |
| 18 | Composition (M1) | 1.2% by weight | RM-11 (30) | RM-7 (10) | 81 | 8 (70 V) | 10 |
| 19 | Composition (M1) | 1.2% by weight | RM-2 (33) | RM-14 (7) | 70 | 7 (50 V) | 15 |
| 20 | Composition (M18) | 0.3% by weight | RM-2 (30) | RM-12 (10) | 96 | 8 (60 V) | 10 |
| 21 | Composition (M18) | 0.3% by weight | RM-2 (30) | RM-6 (10) | 87 | 11 (45 V) | 7 |
| 22 | Composition (M18) | 1.2% by weight | RM-1 (36) | RM-6 (4) | 80 | 9 (50 V) | 15 |
| 23 | Composition (M18) | 1.2% by weight | RM-2 (25) | RM-13 (15) | 85 | 10 (35 V) | 7 |
| 24 | Composition (M18) | 1.2% by weight | RM-11 (30) | RM-12 (10) | 76 | 12 (45 V) | 7 |

**Examples 25 and 26**

In the Examples, a proportion of (a mixture / a polymerizable compound) was changed from (60% by weight / 40% by weight) to (70% by weight / 30% by weight). The results are summarized in Table 6.

**Table 6. Haze rate of liquid crystal dimming devices (mixture : polymerizable compound = 70 : 30)**

| Example | Mixture (70% by weight) | | Polymerizable compound (30% by weight) | | Dimming device | | |
|---|---|---|---|---|---|---|---|
| | Composition | Irgacure 651 (amount of addition) | Polymerizable compound 1 (% by weight) | Polymerizable compound 2 (% by weight) | Haze rate (%) No voltage application | Haze rate (%) Voltage application | Cell gap (μm) |
| 25 | Composition (M1) | 0.7% by weight | RM-2 (20) | RM-10 (20) | 95 | 12 (35 V) | 7 |
| 26 | Composition (M18) | 0.7% by weight | RM-2 (20) | RM-6 (20) | 82 | 9 (45 V) | 7 |

As shown in Tables 4 to 6, the liquid crystal composites in Examples 1 to 26 were found to have characteristics suitable for a normal mode liquid crystal dimming device. A high haze rate in no voltage application and a low haze rate in voltage application are generally preferable, which reasonably indicates that Example 20 or 25 was particularly preferable.

When characteristics of the liquid crystal composition or the liquid crystal display device are measured, a device in which a substrate is a glass substrate is ordinarily used. In the liquid crystal dimming device, a plastic film may also be occasionally used as a substrate. Then, the device in which the substrate is polycarbonate was prepared, and characteristics such as threshold voltage and a response time were measured. A measured value thereof was compared with a measured value in the case of the device in which the substrate is the glass substrate. As a result, two kinds of the measured values were almost identical. Thus, a value measured using the device in which the substrate is the glass substrate was described with regard to the characteristics such as the threshold voltage and the response time.

## Industrial Applicability

A liquid crystal dimming device including a liquid crystal composite of the invention has characteristics such as a short response time, a large voltage holding ratio, low threshold voltage, a large haze rate and a long service life, and therefore can be used in a dimming window, a smart window and so forth.

## Claims

1. A liquid crystal composite, containing, as a first component, a polymer and a liquid crystal composition containing at least one compound selected from compounds represented by formula (1):

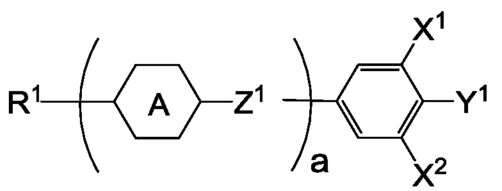

(1)

wherein, in formula (1), $R^1$ is alkyl having 1 to 12 carbons, alkoxy having 1 to 12 carbons or alkenyl having 2 to 12 carbons; ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ is a single bond, ethylene, carbonyloxy or difluoromethyleneoxy; $X^1$ and $X^2$ are independently hydrogen or fluorine; $Y^1$ is fluorine, chlorine, cyano, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; and a is 1, 2, 3 or 4.

2. The liquid crystal composite according to claim 1, wherein the liquid crystal composition contains, as the first component, at least one compound selected from the group of compounds represented by formula (1-1) to formula (1-47):

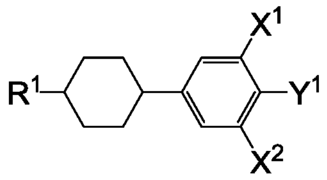

(1-1)

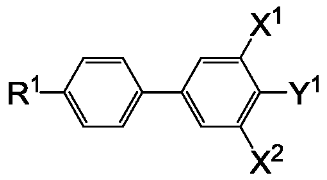

(1-2)

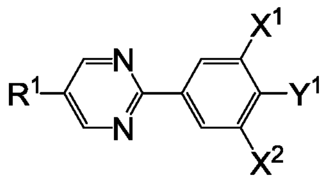

(1-3)

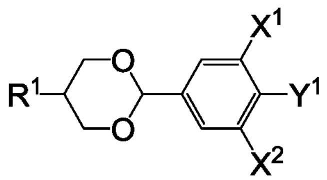

(1-4)

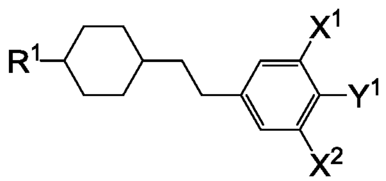

(1-5)

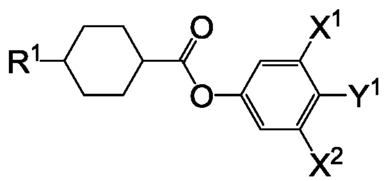

(1-6)

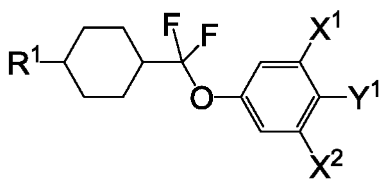

(1-7)

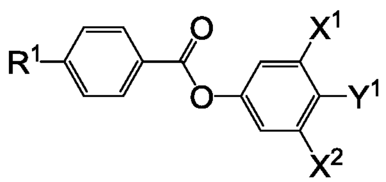

(1-8)

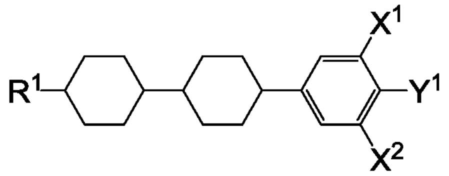

(1-9)

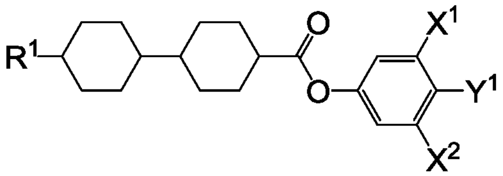

(1-10)

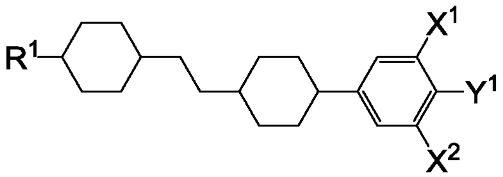

(1-11)

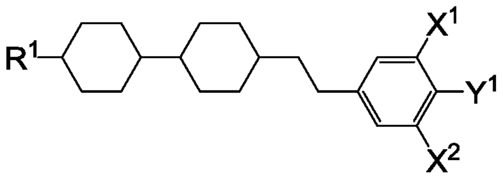

(1-12)

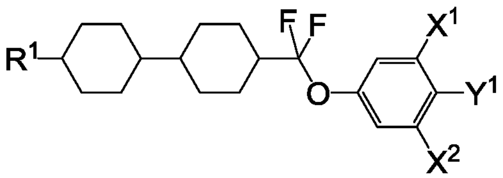

(1-13)

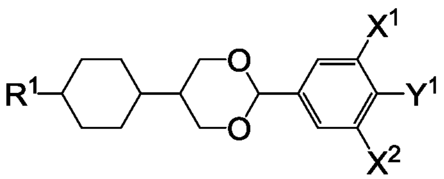

(1-14)

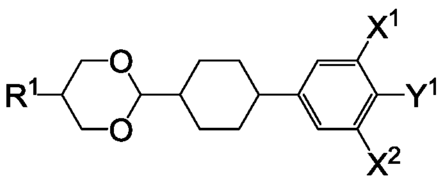

(1-15)

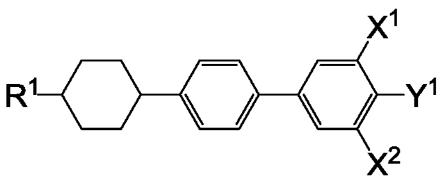

(1-16)

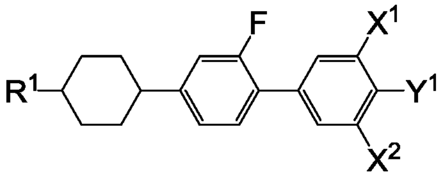
(1-17)

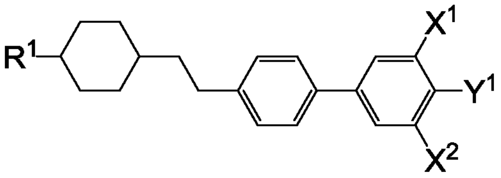
(1-18)

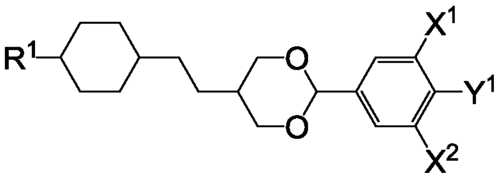
(1-19)

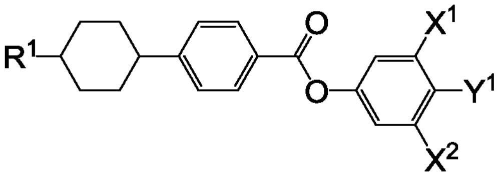
(1-20)

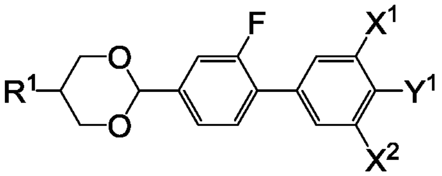
(1-21)

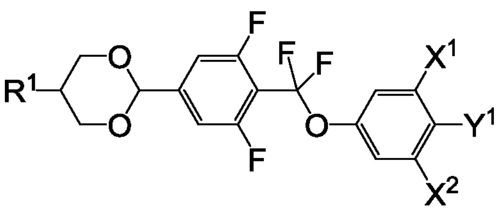
(1-22)

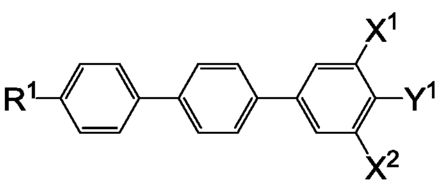
(1-23)

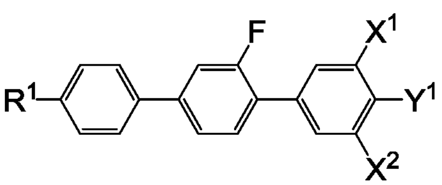
(1-24)

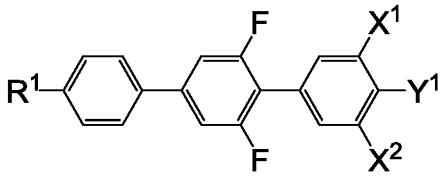

(1-25)

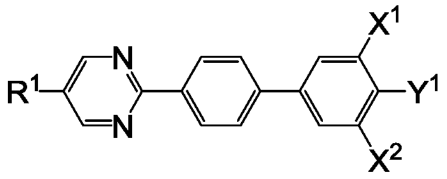

(1-26)

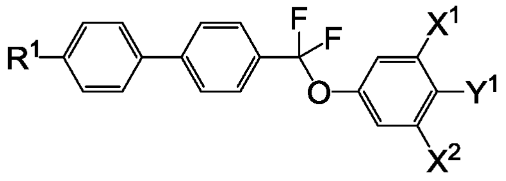

(1-27)

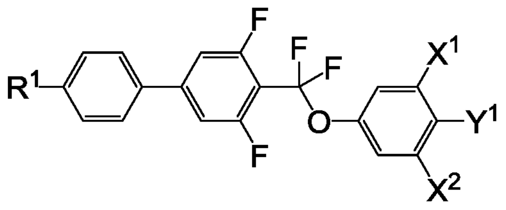

(1-28)

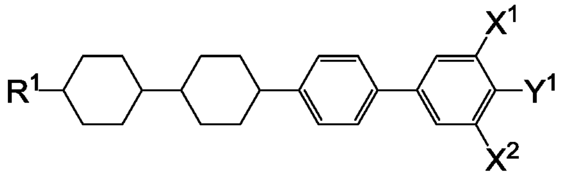

(1-29)

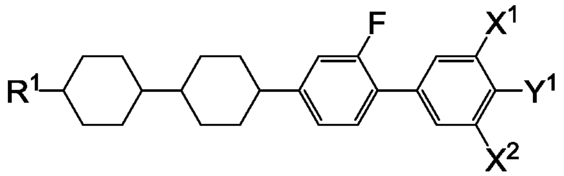

(1-30)

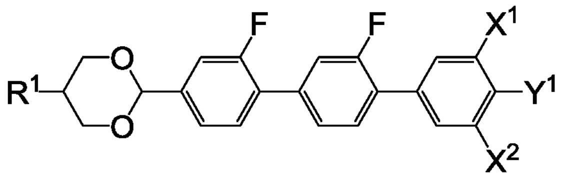

(1-31)

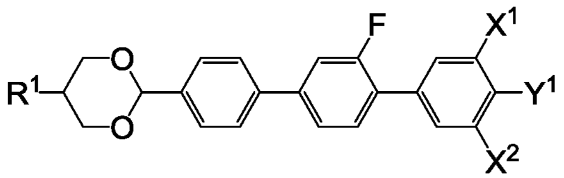

(1-32)

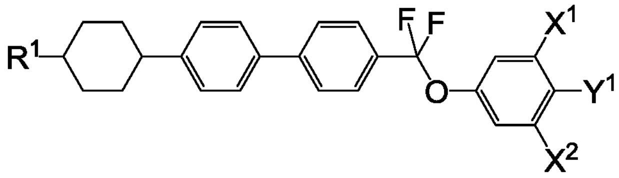

(1-33)

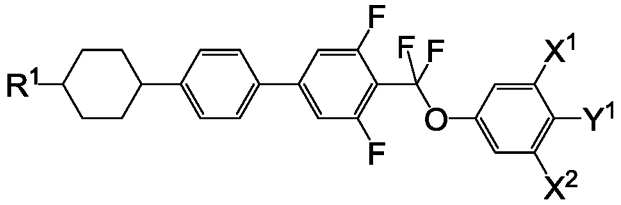

(1-34)

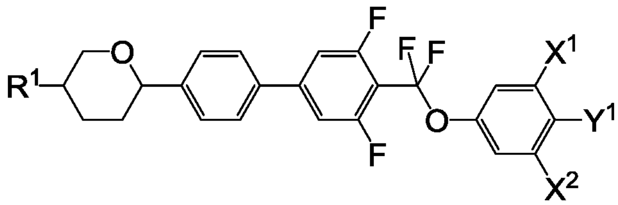

(1-35)

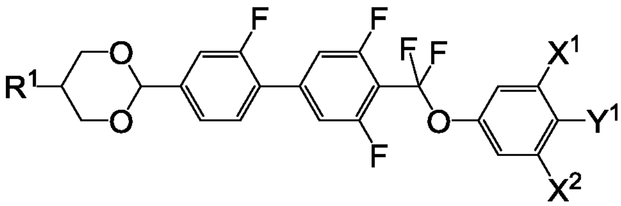

(1-36)

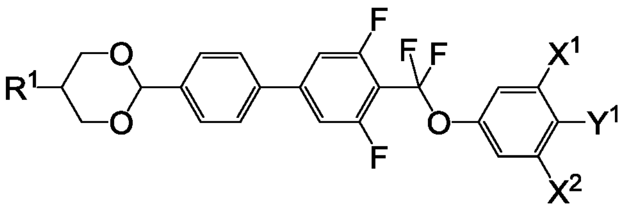

(1-37)

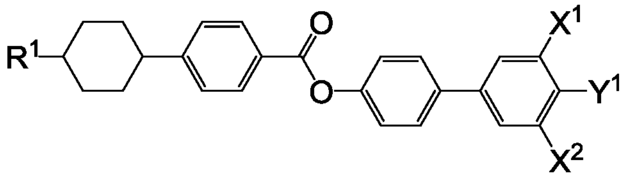

(1-38)

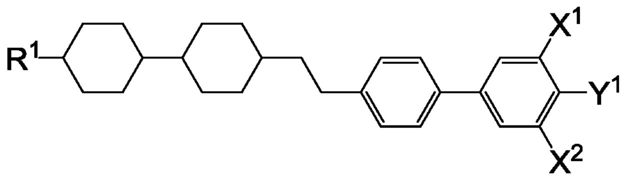

(1-39)

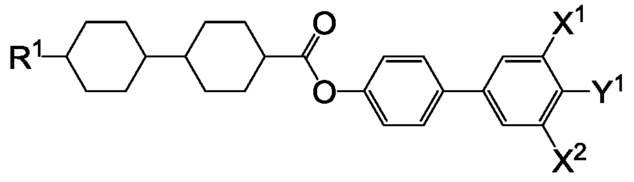

(1-40)

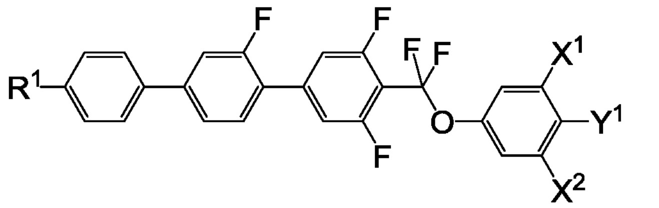

(1-41)

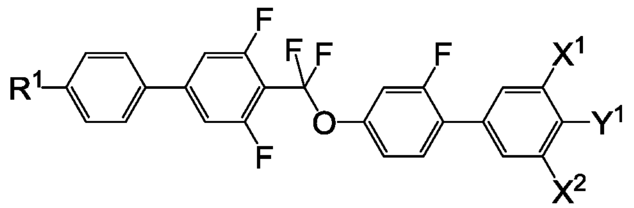

(1-42)

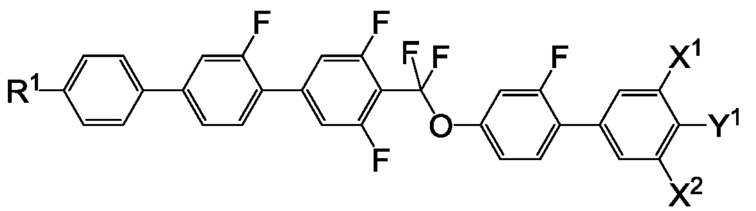

(1-43)

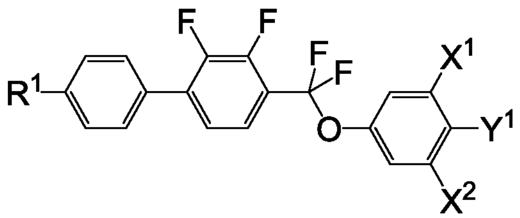

(1-44)

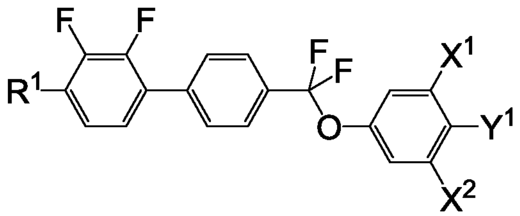

(1-45)

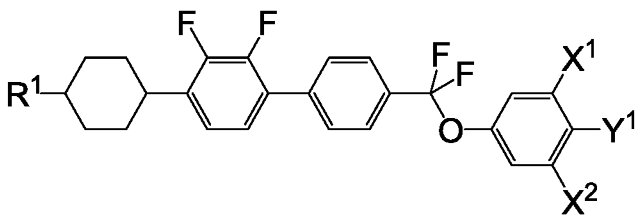

(1-46)

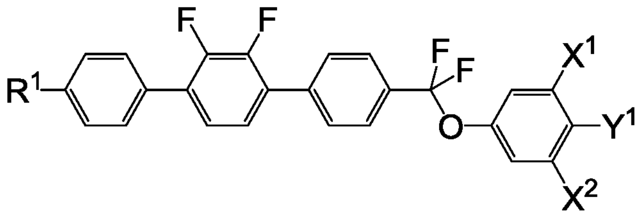

(1-47)

wherein, in formula (1-1) to formula (1-47), $R^1$ is alkyl having 1 to 12 carbons, alkoxy having 1 to 12 carbons or alkenyl having 2 to 12 carbons, and $X^1$ and $X^2$ are independently hydrogen or fluorine; and $Y^1$ is fluorine, chlorine, cyano, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine.

**3.** The liquid crystal composite according to claim 1 or 2, wherein a proportion of the first component is in the range of 5% by weight to 90% by weight based on the weight of the liquid crystal composition.

**4.** The liquid crystal composite according to any one of claims 1 to 3, wherein the liquid crystal composition contains, as a second component, at least one compound selected from compounds represented by formula (2):

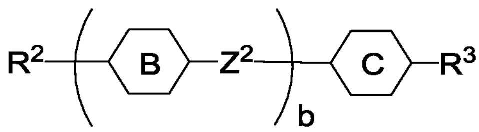

(2)

wherein, in formula (2), $R^2$ and $R^3$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; ring B and ring C are independently 1,4-cyclohexylene, 1,4-phenylene, 2-fluoro-1,4-phenylene, 2,5-difluoro-1,4-phenylene or pyrimidine-2, 5-diyl; $Z^2$ is a single bond, ethylene, ethynylene or carbonyloxy; and b is 1, 2 or 3.

**5.** The liquid crystal composite according to any one of claims 1 to 4, wherein the liquid crystal composition contains, as the second component, at least one compound selected from the group of compounds represented by formula (2-1) to formula (2-23):

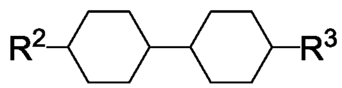

(2-1)

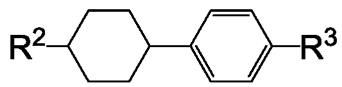

(2-2)

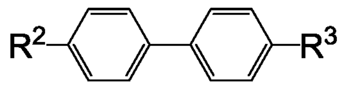

(2-3)

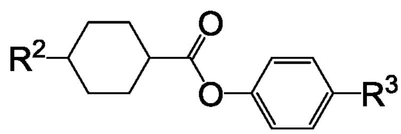

(2-4)

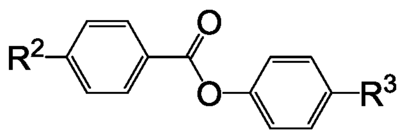

(2-5)

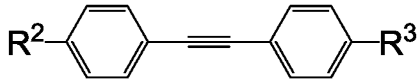

(2-6)

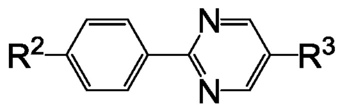

(2-7)

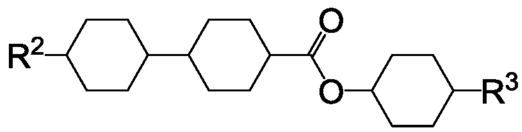

(2-8)

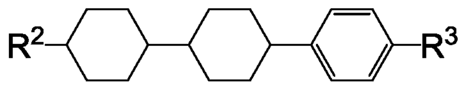

(2-9)

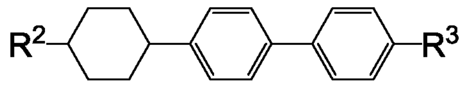

(2-10)

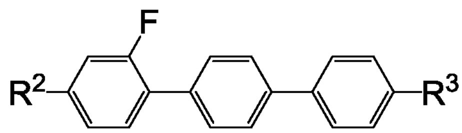

(2-11)

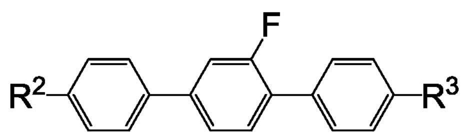

(2-12)

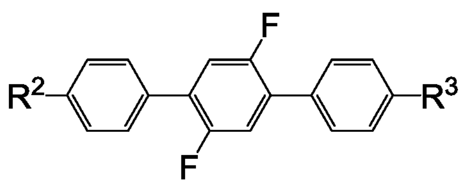

(2-13)

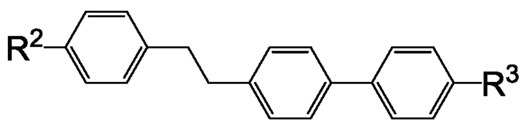

(2-14)

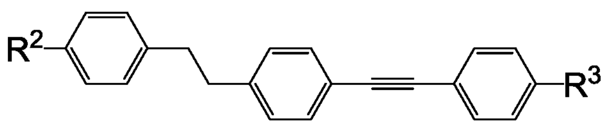

(2-15)

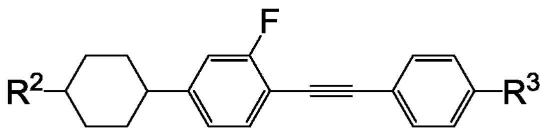

(2-16)

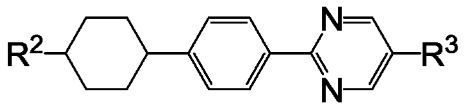

(2-17)

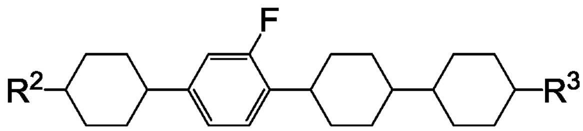

(2-18)

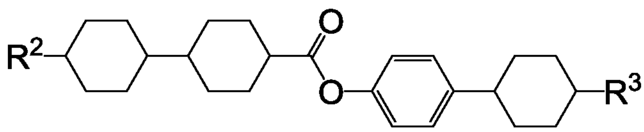

(2-19)

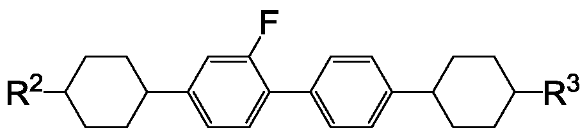

(2-20)

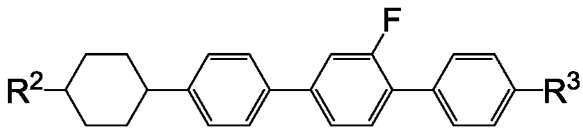

(2-21)

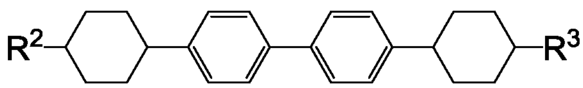

(2-22)

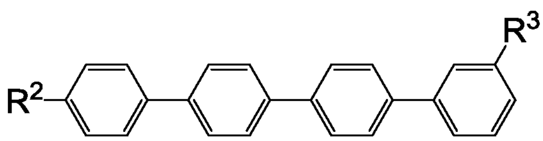

(2-23)

wherein, in formula (2-1) to formula (2-23), $R^2$ and $R^3$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine.

**6.** The liquid crystal composite according to claim 4 or 5, wherein a proportion of the second component is in the range of 5% by weight to 90% by weight based on the weight of the liquid crystal composition.

**7.** The liquid crystal composite according to any one of claims 1 to 6, wherein the liquid crystal composition contains, as a third component, at least one compound selected from compounds represented by formula (3):

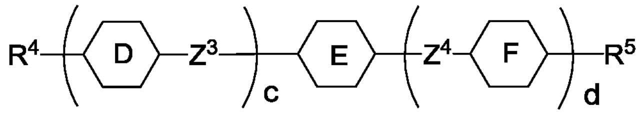

(3)

wherein, in formula (3), $R^4$ and $R^5$ are independently alkyl having 1 to 12 carbons, alkoxy having 1 to 12 carbons, alkenyl having 2 to 12 carbons or alkenyloxy having 2 to 12 carbons; ring D and ring F are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chromane-2,6-diyl or chromane-2, 6-diyl in which at least one hydrogen is replaced by fluorine or chlorine; ring E is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl; $Z^3$ and $Z^4$ are independently a single bond, ethylene, carbonyloxy or methyleneoxy; c is 1, 2 or 3, and d is 0 or 1; and a sum of c and d is 3 or less.

**8.** The liquid crystal composite according to any one of claims 1 to 7, wherein the liquid crystal composition contains, as the third component, at least one compound selected from the group of compounds represented by formula (3-1) to formula (3-22):

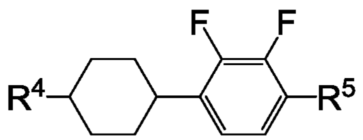

(3-1)

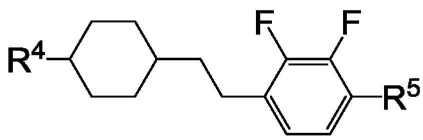

(3-2)

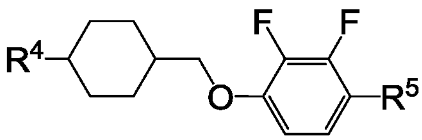

(3-3)

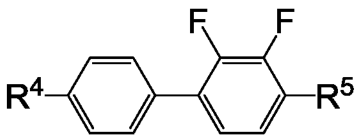

(3-4)

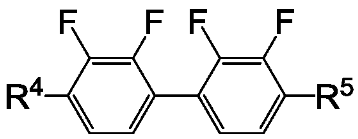

(3-5)

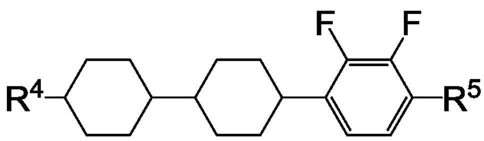

(3-6)

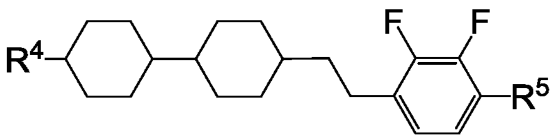
(3-7)

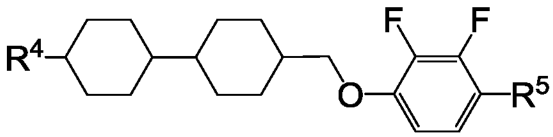
(3-8)

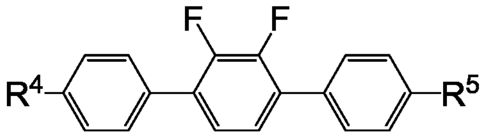
(3-9)

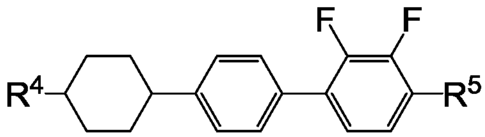
(3-10)

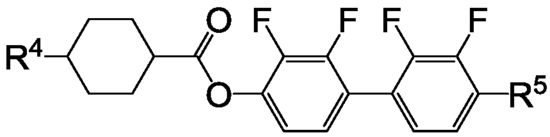
(3-11)

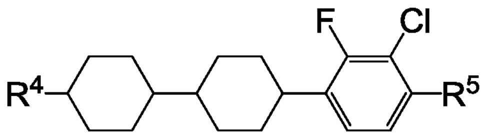
(3-12)

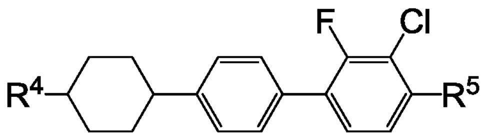
(3-13)

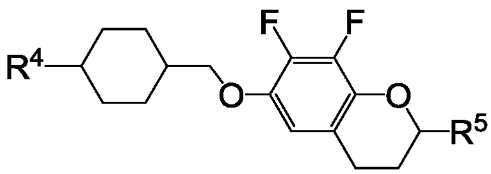
(3-14)

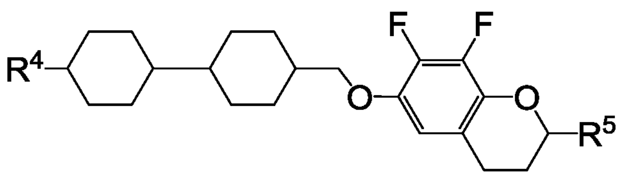
(3-15)

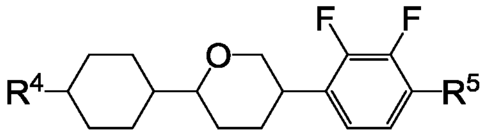

(3-16)

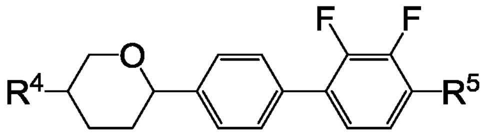

(3-17)

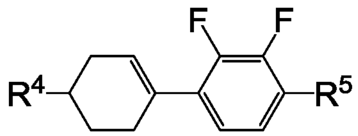

(3-18)

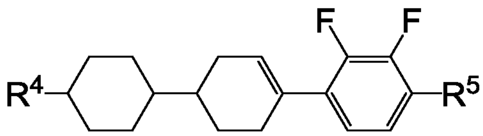

(3-19)

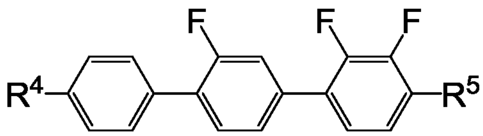

(3-20)

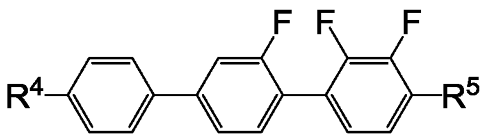

(3-21)

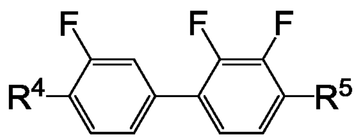

(3-22)

wherein, in formula (3-1) to formula (3-22), $R^4$ and $R^5$ are independently alkyl having 1 to 12 carbons, alkoxy having 1 to 12 carbons, alkenyl having 2 to 12 carbons or alkenyloxy having 2 to 12 carbons.

**9.** The liquid crystal composite according to claim 7 or 8, wherein a proportion of the third component is in the range of 3% by weight to 25% by weight based on the weight of the liquid crystal composition.

**10.** The liquid crystal composite according to any one of claims 1 to 9, wherein the polymer is a polymer derived from a polymerizable compound containing at least one compound selected from compounds represented by formula (4):

$$P^1\text{-}Z^5\text{-}P^2 \qquad (4)$$

wherein, in formula (4), $Z^5$ is alkylene having 1 to 20 carbons, and in the alkylene, at least one hydrogen may be replaced by alkyl having 1 to 5 carbons, fluorine, chlorine or $P^3$, at least one $-CH_2-$ may be replaced by -O-, -CO-, -COO-, -OCO-, -NH-, $-N(R^6)-$, -CH=CH- or -C≡C-, and at least one $-CH_2-$ may be replaced by a divalent group formed by eliminating two hydrogens from a carbocyclic or heterocyclic saturated aliphatic compound, a carbocyclic or heterocyclic unsaturated aliphatic compound or a carbocyclic or heterocyclic aromatic compound, and in the

divalent groups, the number of carbons is 5 to 35, and at least one hydrogen may be replaced by $R^6$ or $P^3$, in which $R^6$ is alkyl having 1 to 12 carbons, and in the alkyl, at least one $-CH_2-$ may be replaced by -O-, -CO-, -COO- or -OCO-; and $P^1$, $P^2$ and $P^3$ are independently a polymerizable group.

**11.** The liquid crystal composite according to claim 10, wherein, in formula (4), $Z^5$ is alkylene having 1 to 20 carbons, and in the alkylene, at least one hydrogen may be replaced by alkyl having 1 to 5 carbons, fluorine, chlorine or $P^3$, and at least one $-CH_2-$ may be replaced by -O-, -CO-, -COO-, -OCO-, -NH-, $-N(R^6)-$, -CH=CH- or -C≡C-, and at least one hydrogen may be replaced by $R^6$ or $P^3$, in which $R^6$ is alkyl having 1 to 12 carbons, and in the alkyl, at least one $-CH_2-$ may be replaced by -O-, -CO-, -COO- or -OCO-; and $P^1$, $P^2$ and $P^3$ are independently a polymerizable group.

**12.** The liquid crystal composite according to claim 10 or 11, wherein, in formula (4), $P^1$, $P^2$ and $P^3$ are independently a group selected from the group of polymerizable groups represented by formula (P-1) to formula (P-6):

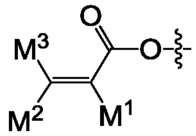
(P-1)

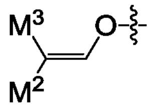
(P-2)

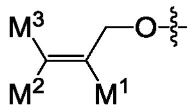
(P-3)

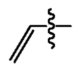
(P-4)

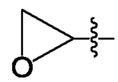
(P-5)

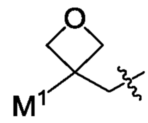
(P-6)

wherein, in formula (P-1) to formula (P-6), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine.

**13.** The liquid crystal composite according to any one of claims 10 to 12, wherein, in formula (4), at least one of $P^1$, $P^2$ and $P^3$ is acryloyloxy or methacryloyloxy.

**14.** The liquid crystal composite according to any one of claims 1 to 9, wherein the polymer is a polymer derived from a polymerizable compound containing at least one compound selected from compounds represented by formula (5):

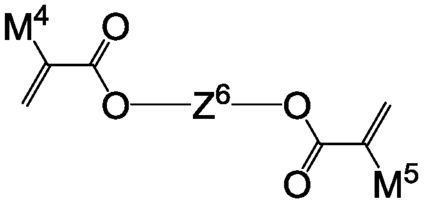
(5)

wherein, in formula (5), $M^4$ and $M^5$ are independently hydrogen or methyl; and $Z^6$ is alkylene having 21 to 80 carbons, and in the alkylene, at least one hydrogen may be replaced by alkyl having 1 to 20 carbons, fluorine or chlorine, and at least one $-CH_2-$ may be replaced by -O-, -CO-, -COO-, -OCO-, -NH-, $-N(R^6)-$, -CH=CH- or -C≡C-, in which $R^6$ is alkyl having 1 to 12 carbons, and in the alkyl, at least one $-CH_2-$ may be replaced by -O-, -CO-, -COO- or -OCO-.

**15.** The liquid crystal composite according to any one of claims 1 to 9, wherein the polymer is a polymer derived from a polymerizable compound containing at least one compound selected from compounds represented by formula (6):

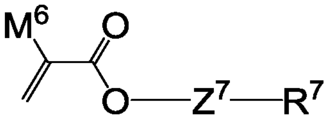
(6)

wherein, in formula (6), $M^6$ is hydrogen or methyl; $Z^7$ is a single bond or alkylene having 1 to 5 carbons, and in the alkylene, at least one hydrogen may be replaced by fluorine or chlorine, and at least one $-CH_2-$may be replaced by -O-, -CO-, -COO- or -OCO-; and $R^7$ is alkyl having 1 to 40 carbons, and in the alkyl, at least one hydrogen may be replaced by fluorine or chlorine, at least one $-CH_2-$ may be replaced by -O-, -CO-, -COO- or -OCO-, and at least one $-CH_2-$ may be replaced by a divalent group formed by eliminating two hydrogens from a carbocyclic or heterocyclic saturated aliphatic compound, a carbocyclic or heterocyclic unsaturated aliphatic compound or a carbocyclic or

heterocyclic aromatic compound, and in the divalent groups, the number of carbons is 5 to 35, and at least one hydrogen may be replaced by alkyl having 1 to 12 carbons, and in the alkyl, at least one $-CH_2-$ may be replaced by -O-, -CO-, -COO- or -OCO-.

**16.** The liquid crystal composite according to claim 15, wherein, in formula (6), $M^6$ is hydrogen or methyl; $Z^7$ is a single bond or alkylene having 1 to 5 carbons, and in the alkylene, at least one hydrogen may be replaced by fluorine or chlorine, and at least one $-CH_2-$ may be replaced by -O-, -CO-, -COO- or -OCO-; and $R^7$ is alkyl having 1 to 40 carbons, and in the alkyl, at least one hydrogen may be replaced by fluorine or chlorine, and at least one $-CH_2-$ may be replaced by -O-, -CO-, -COO- or -OCO-.

**17.** The liquid crystal composite according to any one of claims 1 to 9, wherein the polymer is a polymer derived from a polymerizable compound containing at least one compound selected from the group of compounds represented by formula (7), formula (8) and formula (9):

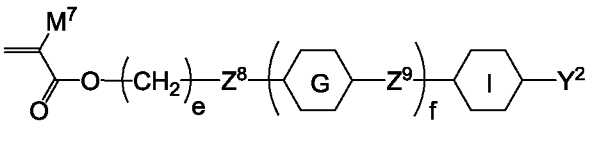

(7)

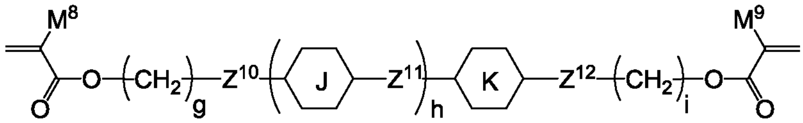

(8)

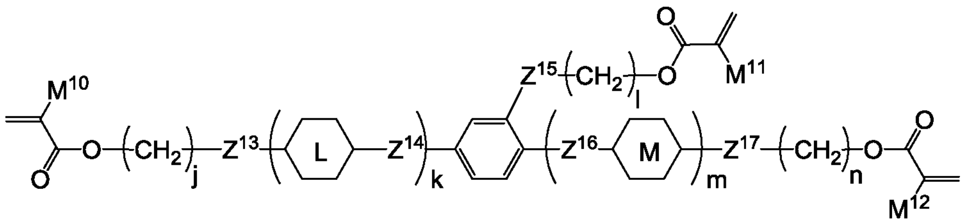

(9)

wherein, in formula (7), formula (8) and formula (9), ring G, ring I, ring J, ring K, ring L and ring M are independently 1,4-cyclohexylene, 1,4-phenylene, 1,4-cyclohexenylene, pyridine-2,5-diyl, 1,3-dioxane-2,5-diyl, naphthalene-2,6-diyl or fluorene-2,7-diyl, and in the divalent groups, at least one hydrogen may be replaced by fluorine, chlorine, cyano, hydroxy, formyl, trifluoroacetyl, difluoromethyl, trifluoromethyl, alkyl having 1 to 5 carbons, alkoxyl having 1 to 5 carbons, alkoxycarbonyl having 2 to 5 carbons or alkanoyl having 1 to 5 carbons; $Z^8$, $Z^{10}$, $Z^{12}$, $Z^{13}$ and $Z^{17}$ are independently a single bond, -O-, -COO-, -OCO- or -OCOO-; $Z^9$, $Z^{11}$, $Z^{14}$ and $Z^{16}$ are independently a single bond, $-OCH_2-$, $-CH_2O-$, -COO-, -OCO-, -COS-, -SCO-, -OCOO-, -CONH-, -NHCO-, $-CF_2O-$, $-OCF_2-$, $-CH_2CH_2-$, $-CF_2CF_2-$, -CH=CHCOO-, -OCOCH=CH-, $-CH_2CH_2COO-$, $-OCOCH_2CH_2-$, -CH=CH-, -N=CH-, -CH=N-, $-N=C(CH_3)-$, $-C(CH_3)=N-$, -N=N- or -C≡C-; $Z^{15}$ is a single bond, -O- or -COO-; $Y^2$ is hydrogen, fluorine, chlorine, trifluoromethyl, trifluoromethoxy, cyano, alkyl having 1 to 20 carbons, alkenyl having 2 to 20 carbons, alkoxy having 1 to 20 carbons or alkoxycarbonyl having 2 to 20 carbons; f and h are an integer from 1 to 4; k and m are independently an integer from 0 to 3; a sum of k and m is 1 to 4; e, g, i, j, 1 and n are independently an integer from 0 to 20; and $M^7$ to $M^{12}$ are independently hydrogen or methyl.

**18.** The liquid crystal composite according to any one of claims 1 to 17, wherein a proportion of the liquid crystal composition is in the range of 50% by weight to 95% by weight, and a proportion of the polymer is in the range of 5% by weight to 50% by weight, based on the weight of the liquid crystal composite.

**19.** The liquid crystal composite according to any one of claims 1 to 18, wherein a precursor of the liquid crystal composite is a polymerizable composition containing a liquid crystal composition and a polymerizable compound, and the polymerizable composition contains a photopolymerization initiator as an additive.

**20.** A liquid crystal dimming device, wherein a dimming layer includes the liquid crystal composite according to any one of claims 1 to 19, the dimming layer is interposed between a pair of transparent substrates, and the transparent substrate has transparent electrodes.

**21.** The liquid crystal dimming device according to claim 20, wherein the transparent substrate is a glass plate or an acrylic plate.

**22.** The liquid crystal dimming device according to claim 20, wherein the transparent substrate is a plastic film.

**23.** A dimming window, using the liquid crystal dimming device according to any one of claims 20 to 22.

**24.** A smart window, using the liquid crystal dimming device according to any one of claims 20 to 22.

**25.** Use of the liquid crystal composite according to any one of claims 1 to 19 for a liquid crystal dimming device.

**26.** Use of the liquid crystal composite according to any one of claims 1 to 19 for a liquid crystal dimming device in which a transparent substrate is a plastic film.

**27.** Use of the liquid crystal composite according to any one of claims 1 to 19 for a dimming window.

**28.** Use of the liquid crystal composite according to any one of claims 1 to 19 for a smart window.

# INTERNATIONAL SEARCH REPORT

International application No. PCT/JP2018/026864

A. CLASSIFICATION OF SUBJECT MATTER
Int.Cl. C09K19/54(2006.01)i, C09K19/12(2006.01)i, C09K19/14(2006.01)i, C09K19/18(2006.01)i, C09K19/20(2006.01)i, C09K19/30(2006.01)i, C09K19/34(2006.01)i, C09K19/38(2006.01)i, G02F1/13(2006.01)i

According to International Patent Classification (IPC) or to both national classification and IPC

B. FIELDS SEARCHED

Minimum documentation searched (classification system followed by classification symbols)
Int.Cl. C09K19/54, C09K19/12, C09K19/14, C09K19/18, C09K19/20, C09K19/30, C09K19/34, C09K19/38, G02F1/13

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-074304 A (DIC CORPORATION) 14 April 2011, claims, paragraph [0067], examples, etc. (Family: none) | 1-6,10-16,18-28<br>7-9,17 |
| X<br>Y | JP 2006-257274 A (DAINIPPON INK AND CHEMICALS, INCORPORATED) 28 September 2006, claims, paragraphs [0001]-[0008], examples, etc. (Family: none) | 1-6,10-16,18-28<br>7-9,17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 August 2018 (27.08.2018) | 11 September 2018 (11.09.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2018/026864

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2007-051185 A (DAINIPPON INK AND CHEMICALS, INCORPORATED) 01 March 2007, claims, paragraph [0002], examples, etc. (Family: none) | 1-6,10-16,18-28<br>7-9,17 |
| X<br>Y | JP 2011-105908 A (DIC CORPORATION) 02 June 2011, claims, examples, etc. & CN 101987960 A | 1-6,10-16,18-28<br>7-9,17 |
| Y | JP 2015-131956 A (MERCK PATENT GMBH) 23 July 2015, claims, paragraphs [0294]-[0307], examples, etc. & US 2015/0175884 A1, claims, table E, examples & EP 2886627 A1 & KR 10-2015-0072368 A & CN 104818029 A | 7-9,17 |
| Y | WO 2017/026478 A1 (DIC CORPORATION) 16 February 2017, claims, paragraphs [0273]-[0285], examples, etc. (Family: none) | 7-9,17 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06273725 A
- WO 201196386 A
- JP S63278035 A
- JP H01198725 A
- JP H07104262 A
- JP H07175045 A
- WO 2012050178 A
- JP H02233626 A
- JP S59176221 A
- JP H02503441 A
- US 3660505 B


### Non-patent literature cited in the description


- Organic Syntheses. John Wiley & Sons, Inc,
- Organic Reactions. John Wiley & Sons, Inc,
- Comprehensive Organic Synthesis. Pergamon Press
- New Experimental Chemistry Course. Shin Jikken Kagaku Koza
- **M. IMAI et al.** *Molecular Crystals and Liquid Crystals,* 1995, vol. 259, 37
- Handbook of Liquid Crystals (Ekisho Binran in Japanese). Maruzen Co., Ltd, 2000, 196
- **J. HILFIKER ; B. JOHS ; C. HERZINGER ; J. F. ELMAN ; E. MONTBACH ; D. BRYANT ; P. J. BOS.** *Thin Solid Films,* 2004, vol. 455-456, 596-600